# EUROPEAN PATENT APPLICATION

(11) **EP 4 527 541 A1**
(43) Date of publication of application: **26.03.2025**
(21) Application number: 22942692.9
(22) Date of filing: 19.05.2022
(51) Int. Cl.: B23K 26/38

(54) **PROCESSING METHOD AND PROCESSING DEVICE**

(71) Applicant: NIKON CORPORATION, Tokyo 140-8601 (JP)
(72) Inventor: SATO, Shinji, Tokyo 140-8601 (JP)
(74) Representative: Hoffmann Eitle
(86) International application number: PCT/JP2022/020787
(87) International publication number: WO 2023/223487

(57) **Abstract**

A processing method includes: forming a first boundary part of a plurality of boundary parts, which are for separating a first part of an object and a second part of the object, by irradiating the object with a processing beam from a first direction relative to the object; and forming a second boundary part of the plurality of boundary parts by irradiating the object with the processing beam from a second direction different from the first direction relative to the object.

## Description

### Technical Field

The present invention relates to a technical field of a processing method and a processing apparatus that is configured to process an object, for example.

### Background Art

A Patent literature 1 discloses a processing apparatus that processes an object by irradiating the object with light. This type of processing apparatus is to properly process the object.

### Citation List

### Patent Literature

Patent Literature 1: US2002/0017509A1

### Summary of Invention

A first aspect provides a processing method of separating an object into a first part and a second part by irradiating the object with a processing beam, wherein the processing method includes: forming a first boundary part of a plurality of boundary parts, which are for separating the first part and the second part, by irradiating the object with the processing beam from a first direction relative to the object; and forming a second boundary part of the plurality of boundary parts by irradiating the object with the processing beam from a second direction, which is different from the first direction, relative to the object.

A second aspect provides a processing apparatus that is provided by the first aspect, wherein a processing for forming the plurality of boundary parts is a first processing, the processing method further includes performing a second processing for processing the second part by irradiating at least a part of the second part with the processing beam after the first processing, the processing apparatus is configured to perform a switching between a first processing mode that is used for the first processing and a second processing mode that is used for the second processing.

A third aspect provides a processing method of separating an object into a first part and a second part by irradiating the object with a processing beam, wherein the processing method includes: forming a first groove of a plurality of grooves, which are for separating the first part and the second part, by irradiating the object with the processing beam from a first direction relative to the object; and forming a second groove of the plurality of grooves by irradiating the object with the processing beam from a second direction, which is different from the first direction, relative to the object.

A fourth aspect provides a processing method of separating an object into a first part and a second part by irradiating the object with a processing beam, wherein the processing method includes: forming a groove, which is for separating the first part and the second part, by irradiating the object with the processing beam from a first direction relative to the object; measuring a depth of the groove by irradiating the groove with a measurement beam from the first direction; and forming a groove having a target depth by using a measured result of the depth of the groove and the processing beam, wherein forming the groove having the target depth includes processing the object by emitting the processing beam so that the depth of the groove is closer to the target depth in a case where the depth of the groove measured by using the measurement beam does not reach the target depth.

A fifth aspect provides a processing method of removing a first part from an object by irradiating the object with a processing beam, wherein a removal of the first part using the processing beam is performed by using at least one of a first subtractive manufacturing mode and a second subtractive manufacturing mode, the removing the first part in the first subtractive manufacturing mode includes removing and processing the first part by irradiating the first part with the processing beam, the removing the first part in the second subtractive manufacturing mode includes: forming a first boundary part of a plurality of boundary parts, which are for separating at least a part of the first part from the object, by irradiating the object with the processing beam from a first direction relative to the object; and forming a second boundary part of the plurality of boundary parts by irradiating the object with the processing beam from a second direction, which is different from the first direction, relative to the object.

### Brief Description of Drawings

[FIG. 1] FIG. 1 is a cross-sectional view that schematically illustrates a configuration of a processing system in a present example embodiment.
[FIG. 2] FIG. 2 is a block diagram that illustrates a configuration of the processing system in the present example embodiment.
[FIG. 3] FIG. 3 is a perspective view that illustrates an exterior appearance of a turbine.
[FIG. 4] FIG. 4 is a perspective view that illustrates an exterior appearance of a turbine blade.
[FIG. 5] FIG. 5 is a cross-sectional view that illustrates a configuration of the turbine blade.
[FIG. 6] FIG. 6 is a cross-sectional view that illustrates a configuration of a processing head in the present example embodiment.
[FIG. 7] Each of FIG. 7A to FIG. 7D is a cross-sectional view that illustrates a workpiece on which a first subtractive manufacturing is performed.
[FIG. 8] FIG. 8A includes a cross-sectional view and a perspective view that illustrates the workpiece before a second subtractive manufacturing is performed, and FIG. 8B includes a cross-sectional view and a perspective view that illustrates the workpiece after the second subtractive manufacturing is performed.
[FIG. 9] FIG. 9 includes a cross-sectional view and a perspective view that illustrates the workpiece after a first specific example of the second subtractive manufacturing is performed.
[FIG. 10] FIG. 10 includes a cross-sectional view and a perspective view that illustrates the workpiece on which one step of the first specific example of the second subtractive manufacturing is performed.
[FIG. 11] FIG. 11 includes a cross-sectional view and a perspective view that illustrates the workpiece on which one step of the first specific example of the second subtractive manufacturing is performed.
[FIG. 12] FIG. 12 includes a cross-sectional view and a perspective view that illustrates the workpiece on which one step of the first specific example of the second subtractive manufacturing is performed.
[FIG. 13] FIG. 13 includes a cross-sectional view and a perspective view that illustrates the workpiece on which one step of the first specific example of the second subtractive manufacturing is performed.
[FIG. 14] FIG. 14 includes a cross-sectional view and a perspective view that illustrates the workpiece after a second specific example of the second subtractive manufacturing is performed.
[FIG. 15] FIG. 15 includes a cross-sectional view and a perspective view that illustrates the workpiece on which one step of the second specific example of the second subtractive manufacturing is performed.
[FIG. 16] FIG. 16 includes a cross-sectional view and a perspective view that illustrates the workpiece on which one step of the second specific example of the second subtractive manufacturing is performed.
[FIG. 17] FIG. 17 includes a cross-sectional view and a perspective view that illustrates the workpiece on which one step of the second specific example of the second subtractive manufacturing is performed.
[FIG. 18] FIG. 18 includes a cross-sectional view and a perspective view that illustrates the workpiece on which one step of the second specific example of the second subtractive manufacturing is performed.
[FIG. 19] FIG. 19 includes a cross-sectional view and a perspective view that illustrates the workpiece after a third specific example of the second subtractive manufacturing is performed.
[FIG. 20] FIG. 20 includes a cross-sectional view and a perspective view that illustrates the workpiece on which one step of the third specific example of the second subtractive manufacturing is performed.
[FIG. 21] FIG. 21 includes a cross-sectional view and a perspective view that illustrates the workpiece on which one step of the third specific example of the second subtractive manufacturing is performed.
[FIG. 22] FIG. 22 includes a cross-sectional view and a perspective view that illustrates the workpiece on which one step of the third specific example of the second subtractive manufacturing is performed.
[FIG. 23] FIG. 23 includes a cross-sectional view and a perspective view that illustrates the workpiece on which one step of the third specific example of the second subtractive manufacturing is performed.
[FIG. 24] FIG. 24 includes a cross-sectional view and a perspective view that illustrates the workpiece on which one step of the third specific example of the second subtractive manufacturing is performed.
[FIG. 25] FIG. 25 includes a cross-sectional view and a perspective view that illustrates the workpiece on which one step of the third specific example of the second subtractive manufacturing is performed.
[FIG. 26] FIG. 26 is a flowchart that illustrates a flow of the second subtractive manufacturing.
[FIG. 27] FIG. 27A is a cross-sectional view that illustrates the workpiece in the process of performing the second specific example of the second subtractive manufacturing illustrated in FIG. 14 being performed, and FIG. 27B is a cross-sectional view that illustrates the workpiece after the second specific example of the second subtractive manufacturing illustrated in FIG. 14 is completed
[FIG. 28] FIG. 28 is a cross-sectional view that illustrates a removal target part and a remaining part that are coupled with each other through a connection part.
[FIG. 29] Each of FIG. 29A to FIG. 29D is a cross-sectional view that illustrates the workpiece on which a first application example of the second subtractive manufacturing is performed.
[FIG. 30] Each of FIG. 30A to FIG. 30B is a cross-sectional view that illustrates the workpiece on which a second application example of the second subtractive manufacturing is performed.
[FIG. 31] Each of FIG. 31A to FIG. 31B is a cross-sectional view that illustrates the workpiece on which the second application example of the second subtractive manufacturing is performed.
[FIG. 32] Each of FIG. 32A to FIG. 32B is a cross-sectional view that illustrates the workpiece on which the second application example of the second subtractive manufacturing is performed.
[FIG. 33] Each of FIG. 33A to FIG. 33B is a cross-sectional view that illustrates the workpiece on which the second application example of the second subtractive manufacturing is performed.
[FIG. 34] Each of FIG. 34A to FIG. 34C is a cross-sectional view that illustrates the workpiece on which the second application example of the second subtractive manufacturing is performed.
[FIG. 35] FIG. 35 is a block diagram that illustrates a configuration of a processing system in a first modified example.
[FIG. 36] FIG. 36 is a block diagram that illustrates a configuration of a processing system in a second modified example.

### Description of Example embodiments

Next, with reference to drawings, an example embodiment of a blade, a processing method and a processing apparatus will be described. In the below described description, the example embodiment of the processing method and the processing apparatus will be described by using a processing system SYS. However, the present invention is not limited to the below described example embodiment.

Moreover, in the below-described description, a positional relationship of various components included in the processing system SYS will be described by using an XYZ rectangular coordinate system that is defined by an X-axis, a Y-axis and a Z-axis that are orthogonal to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Configuration of Processing System SYS

Firstly, a configuration of the processing system SYS in a present example embodiment will be described.

### (1-1) Entire Configuration of Processing System SYS

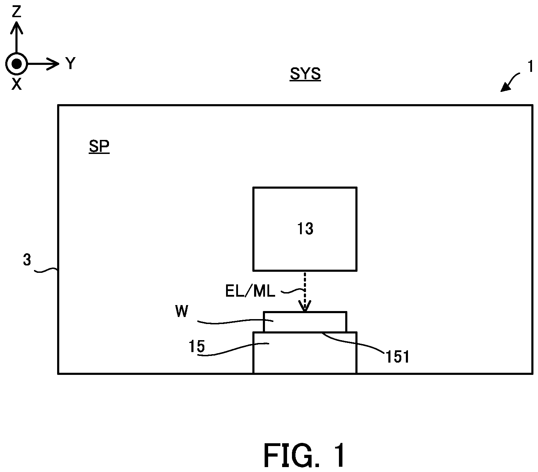

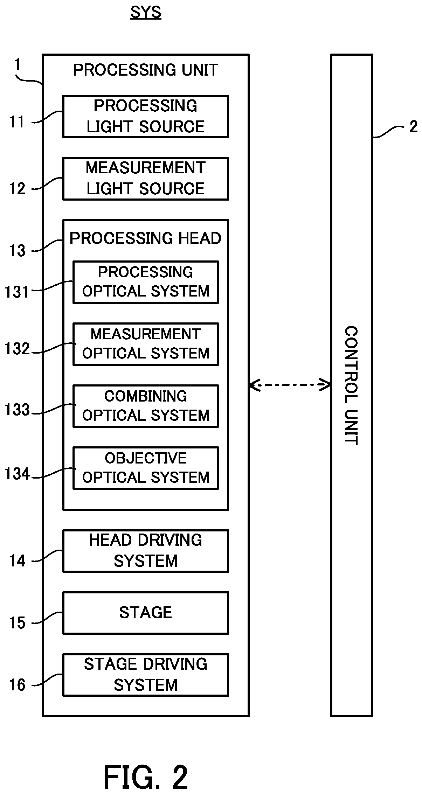

Firstly, with reference to FIG. 1 and FIG. 2, an entire configuration of the processing system SYS in the present example embodiment will be described. FIG. 1 is a cross-sectional view that schematically illustrates the configuration of the processing system SYS in the present example embodiment. FIG. 2 is a block diagram that illustrates one example of a system configuration of the processing system SYS in the present example embodiment.

As illustrated in FIG. 1 and FIG. 2, the processing system SYS includes a processing unit 1, and a control unit 2. The processing unit 1 may be referred to as a processing apparatus, and the control unit 2 may be referred to as a control apparatus. At least a part of the processing unit 1 is contained in an inner space SP in a housing 3. The inner space SP in the housing 3 may be purged with purge gas such as Nitrogen gas and so on, or may not be purged with the purge gas. The inner space SP in the housing 3 may be vacuumed or may not be vacuumed. However, the processing unit 1 may not be contained in the inner space SP in the housing 3. A local space surrounding only a part of the processing unit 1 may be purged with the purge gas or may be vacuumed.

The processing unit 1 is configured to process a workpiece W that is a processing target object (it may be referred to as a base member) under the control of the control unit 2. The workpiece W may be a metal, may be an alloy (for example, duralumin and the like), may be a semiconductor (for example, silicon), may be a resin, may be a composited material such as a CFRP (Carbon Fiber Reinforced Plastic), may be a painting material (as one example a film of painting material that is coated on a base member), may be a glass, or may be an object that is made from any other material, for example.

The processing unit 1 irradiates the workpiece W with processing light EL in order to process the workpiece W. The processing light EL may be any light as long as the workpiece W is processed by irradiating the workpiece W with it. In the present example embodiment, an example in which the processing light EL is laser light will be described, however, the processing light EL may be light that is different from the laser light. Furthermore, a wavelength of the processing light EL may be any wavelength as long as the workpiece W is processed by irradiating the workpiece W with it. For example, the processing light EL may be visible light, or may be invisible light (for example, at least one of infrared light, ultraviolet light, extreme ultraviolet light, and the like). The processing light EL may include a pulsed light. Alternatively, the processing light EL may not include the pulsed light. In other words, the processing light EL may be continuous light.

The processing unit 1 may perform a subtractive manufacturing for removing a part of the workpiece W by irradiating the workpiece W with the processing light EL. For example, the processing unit 1 may perform the subtractive manufacturing so that a shape of the workpiece W is a target shape. Alternatively, the processing unit 1 may perform an additive manufacturing for building a build object on the workpiece W by irradiating the workpiece W with the processing light EL, in addition to or instead of the subtractive manufacturing. Alternatively, the processing unit 1 may perform a machining-processing for processing the workpiece W by bringing a tool into contact with the workpiece W, in addition to or instead of at least one of the subtractive manufacturing and the additive manufacturing. In this case, the processing unit 1 may not irradiate the workpiece W with the processing light EL.

The processing unit 1 may perform the subtractive manufacturing so that a riblet structure is formed on a surface of the workpiece W. The riblet structure may include a structure by which a resistance (especially at least one of frictional resistance and a turbulent frictional resistance) of the surface of the workpiece W to a fluid is reducible. The riblet structure may include a structure by which noise generated when the fluid and the surface of the workpiece W relatively move is reducible. Therefore, the riblet structure may be formed on the workpiece W including a member that is positioned (in other words, disposed) in the fluid.

In a case where the riblet structure RB, which includes the structure by which the resistance (especially, at least one of the frictional resistance and the turbulent frictional resistance) of the surface of the workpiece W to the fluid is reducible, is formed on the workpiece W, the workpiece W is movable relative to the fluid more easily. Therefore, the resistance that prevents the workpiece W from moving relative to the fluid is reduced, and thereby an energy saving is achievable. Namely, it is possible to manufacture the environmentally preferable workpiece W.

A turbine blade BL is one example of the workpiece W on which the riblet structure RB is formed. In this case, the processing unit 1 may form the riblet structure RB on a surface of the turbine blade BL by processing the turbine blade BL. The turbine blade BL is a member that is used in a turbine T. incidentally, the member may be referred to as a component. The turbine blade BL is at least a part of the turbine T. In other words, the turbine blade BL is a blade-shaped member that serves as a blade of the turbine T positioned in the fluid. Therefore, the turbine blade BL may be referred to as a blade member.

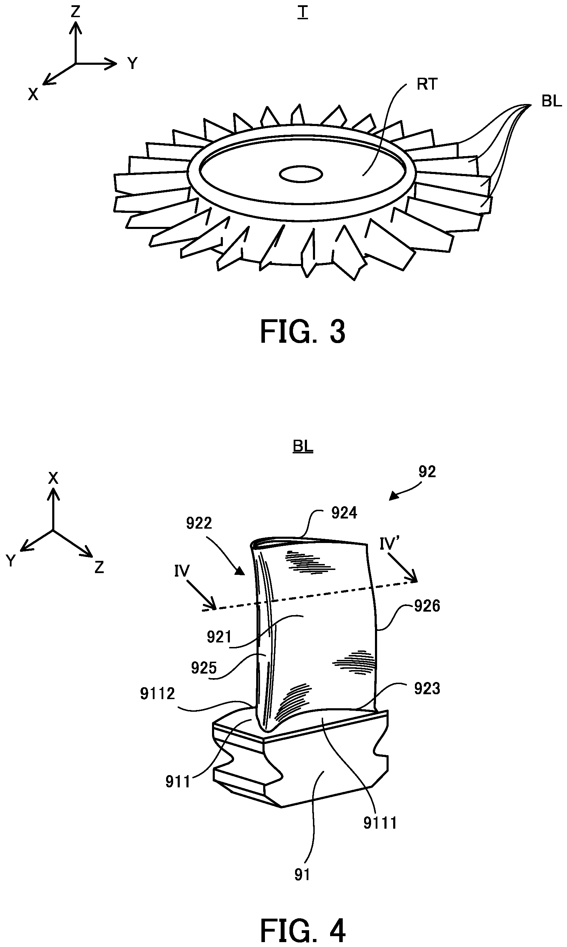

FIG. 3 and FIG. 4 illustrate one example of the turbine T. FIG. 3 is a perspective view that illustrates an exterior appearance of the turbine T. FIG. 4 is a perspective view that illustrates an exterior appearance of the turbine blade BL. As illustrated in FIG. 3 and FIG. 4, the turbine T includes a plurality of turbine blades BL. The turbine blade BL includes: a shank 91; and a blade body 92 that is connected to the shank 91 and that extends from the shank 91 outwardly along a radial direction of the turbine T. At least one of the shank 91 and the blade body 92 may be formed by a single metal. At least one of the shank 91 and the blade body 92 may be formed by a plurality of metals. At least one of the shank 91 and the blade body 92 may be manufactured by an existing manufacturing method (for example, a manufacturing using at least one of a molding, a forging, the additive manufacturing, the subtractive manufacturing, and the machining-processing). The shank 91 and the blade body 92 may be manufactured integrally. Alternatively, the shank 91 and the blade body 92, which are manufactured separately, may be jointed with each other by an existing coupling method (for example, a jointing method using at least one of a welding, a brazing, an adhesive bonding and so on). The plurality of shanks 91 which the plurality of turbine blades BL include, respectively, may be jointed with each other. The plurality of shanks 91 jointed with each other may constitute at least a part of a rotatable rotor RT. The rotor RT and the turbine blade BL may be formed integrally.

The blade body 92 extends outwardly from a platform 911 of the shank 91 along the radial direction of the turbine T. The platform 911 includes a positive pressure side platform 9111 and a negative pressure side platform 9112. The blade body 92 includes: a positive pressure surface 921; a negative pressure surface 922 that faces toward a side opposite to a side toward which the positive pressure surface 921 faces, a root part 923 that is jointed with the shank 91; and a tip part 924 that constitutes an end part positioned at a side opposite to the root part 923. The blade body 92 further includes: a leading edge surface 925 that is positioned between the positive pressure surface 921 and the negative pressure surface 922; and a trailing edge surface 926 that is positioned between the positive pressure surface 921 and the negative pressure surface 922 at a side opposite to the leading edge surface 925. At least one surface of the positive pressure surface 921, the negative pressure surface 922, the leading edge surface 925, and the trailing edge surface 926 may include a curved surface. For example, in an example illustrated in FIG. 4, a surface of each of the positive pressure surface 921 and the negative pressure surface 922 includes the curved surface.

The turbine T is rotatable by using a flow of fluid that is supplied to the turbine T. Specifically, the fluid (for example, at least one of water, steam, air, and gas) is supplied to the turbine T. The fluid that has been supplied to the turbine T flows along the surface of each of the plurality of turbine blades BL. Thus, the turbine blade BL is used in the fluid. As a result, a kinetic energy of the fluid is converted into a rotational energy of the turbine T by the plurality of turbine blades BL. At least one of a steam turbine using the steam as the fluid and a gas turbine using the gas as the fluid is one example of the turbine T. At least one of a hydraulic turbine using the water as the fluid and a wind turbine using the air as the fluid is another example of the turbine T. Moreover, the turbine T may generate the flow of the fluid by the rotation thereof.

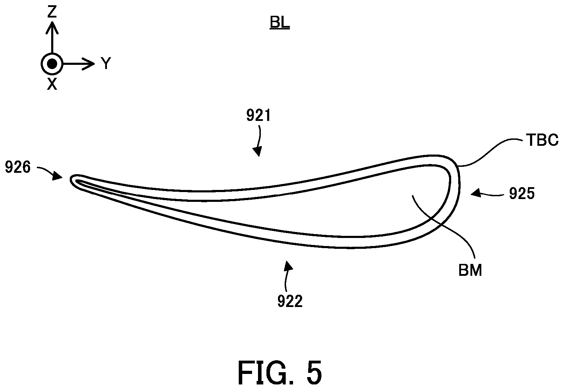

The turbine T illustrated in FIG. 3 and FIG. 4 includes an axial flow type turbine blade BL. Namely, the turbine T illustrated in FIG. 3 and FIG. 4 is an axial flow turbine. However, the turbine T may be a radial flow turbine (namely, a radial turbine), as illustrated in FIG. 5. In the radial flow turbine, the fluid enters the turbine blade BL parallel to a rotational axis 120 of the turbine blade BL, and flows out from an outlet portion 160 in a direction intersecting the rotational axis 120, as illustrated by arrows F1 and F2 in FIG. 5.

The riblet structure RB may be formed on the workpiece W that is different from the turbine blade BL. Any member that relatively moves relative to the medium (for example, the fluid) is another example of the workpiece W on which the riblet structure RB is formed. For example, the workpiece W may be at least a part of a turbine vane. Namely, in addition to or instead of the turbine blade BL that constitutes the blade member that may be referred to as a rotor blade, the turbine vane that constitutes the blade member that may be referred to as a stator vane may be used as the workpiece W. For example, the workpiece W may be a member of the turbine T (for example, a member placed in the fluid) that is different from the blade member. Namely, the workpiece W may be any member (for example, the member placed in the fluid) used in the turbine T. For example, the workpiece W may be the turbine T itself (for example, the turbine T illustrated in FIG. 3 to FIG. 5) or at least a part of the turbine T. For example, the workpiece W may be a fan, an impeller, a propeller, or a pump itself. For example, the workpiece W may be at least a part of the fan, the impeller, the propeller, or the pump. For example, the workpiece W may be a member (for example, the member placed in the fluid) used in the fan, the impeller, the propeller, or the pump. For example, the workpiece W may be at least a blade member of the fan, the impeller, the propeller, or the pump propeller. The fan is a member (typically, a rotatable body) that is used in a blower or the like and that forms a flow of gas. The propeller is a member (typically a rotatable body) that converts rotational force output from a prime mover, which includes at least one of an engine and a motor, into driving force for a movable object including at least one of an airplane, a ship and the like, for example. The impeller is a member that is used in a pump and that is a rotational blade rotatable so as to generate force to pump (alternatively, suction) the fluid by the pump, for example. For example, the workpiece W may be at least a part of a stationary separator plate that is positioned around the impeller. For example, the workpiece W may be at least part of a body (for example, an airframe or a hull) of the movable object including at least one of the airplane, the ship and so on. For example, the workpiece W may be at least a part of a wing part (so-called wing) of a flying object such as the airplane.

The workpiece W may include a casing. Namely, the riblet structure RB may be formed on at least a part of the casing. For example, in a case where the casing is used in the turbine T, the riblet structure RB may be formed on at least a part of an inner wall surface of the casing that serves as a wall member facing at least one of a containing space for containing the turbine blade BL (namely, the rotor blade) and a passageway through which the fluid flows. For example, in a case where the casing is used in the pump, the riblet structure RB may be formed on at least a part of an inner wall surface of the casing that serves as a wall member facing at least one of a containing space for containing the impeller and a passageway through which the fluid flows. For example, in a case where the casing is used to contain the fan, the propeller, or the pump, the riblet structure RB may be formed on at least a part of an inner wall of the casing that serves as a wall member facing at least one of a containing space for containing the fan, the propeller, or the pump and a passageway through which the fluid (for example, refrigerant) flows.

The workpiece W may be a blade (namely, a blade) of a windmill used for wind power generation. Namely, the riblet structure RB may be formed on the blade of the windmill. Especially, the riblet structure RB may be formed on the blade of the windmill to generate clean energy (alternatively, natural energy or renewable energy) with low environmental impact. In this case, energy efficiency can be improved.

Again in FIG. 1 and FIG. 2, the processing unit 1 is configured to measure the workpiece W under the control of the control unit 2. The processing unit 1 irradiates the workpiece W with measurement light ML for measuring the workpiece W in order to measure the workpiece W. Specifically, the processing unit 1 measures the workpiece W by irradiating the workpiece W with the measurement light ML and detecting (namely, optically receiving) at least a part of returned light RL that returns from the workpiece W irradiated with the measurement light ML. The light returning from the workpiece W irradiated with the measurement light ML is light from the workpiece W that is generated by the irradiation with the measurement light ML.

The measurement light ML may be any type of light, as long as the workpiece W is measurable by irradiating the workpiece W with it. In the present example embodiment, an example in which the measurement light ML is a laser light will be described. However, the measurement light ML may be a light that is different from the laser light. Furthermore, a wavelength of the measurement light ML may be any wavelength, as long as the workpiece W is measurable by irradiating the workpiece W with it. For example, the measurement light ML may be visible light, or may be invisible light (for example, at least one of infrared light, ultraviolet light, extreme ultraviolet light and the like). The measurement light ML may include pulsed light (for example, pulsed light an ON time of which is equal to or shorter than an pico-order second). Alternatively, the measurement light ML may not include the pulsed light. In other words, the measurement light ML may be continuous light.

The processing unit 1 may be able to measure the characteristics of the workpiece W using the measurement light ML. The characteristics of the workpiece W may include at least one of a position of the workpiece W, a shape of the workpiece W, a reflectance of the workpiece W, a transmittance of the workpiece W, a temperature of the workpiece W, and a surface roughness of the workpiece W, for example.

In the below-described description, an example in which the processing unit 1 measures at least the position of the workpiece W will be described. The position of the workpiece W may include a position of the surface of the workpiece W. The position of the surface of the workpiece W may include a position of at least a part of the surface of the workpiece W. Moreover, the position of the workpiece W may mean the position of the workpiece W relative to a below-described processing head 13 (namely, a relative position). Namely, the position of the workpiece W may mean the position of the workpiece W in a measurement coordinate system that is based on the processing head 13. Moreover, as described below, an operation for measuring the position of the workpiece W may include an operation for measuring the shape (especially, a three-dimensional shape) of the workpiece W. This is because the shape (especially, the three-dimensional shape) of the workpiece W is calculatable from the position of the workpiece W.

In order to process and measure the workpiece W, the processing unit 1 includes a processing light source 11, a measurement light source 12, a processing head 13, a head driving system 14, a stage 15, and a stage driving system 16.

The processing light source 11 generates the processing light EL. In a case where the processing light EL is the laser light, the processing light source 11 may include a laser diode, for example. Furthermore, the processing light source 11 may be a light source that is configured to perform a pulsed oscillation. In this case, the processing light source 11 is configured to generate the pulsed light as the processing light EL. Incidentally, the processing light source 11 may be a CW light source that generates the CW (continuous wave).

The measurement light source 12 generates the measurement light ML. In a case where the measurement light ML is the laser light, the measurement light source 12 may include a laser diode, for example. Furthermore, the measurement light source 12 may be a light source that is configured to perform a pulsed oscillation. In this case, the measurement light source 12 is configured to generate the pulsed light as the processing light EL. Incidentally, the measurement light source 12 may be a CW light source that generates the CW (continuous wave).

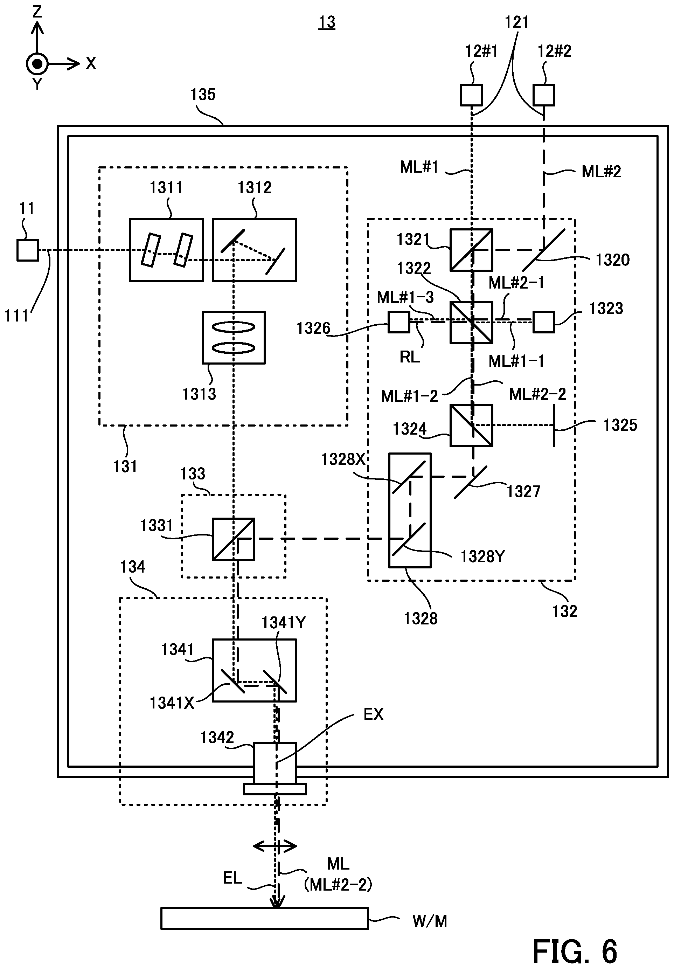

The processing head 13 irradiates the workpiece W with the processing light EL generated by the processing light source 11 and irradiates the workpiece W with the measurement light ML generated by the measurement light source 12. In order to irradiate the workpiece W with the processing light EL and the measurement light ML, the processing head 13 includes a processing optical system 131, a measurement optical system 132, a combining optical system 133, and an objective optical system 134. The processing head 13 irradiates the workpiece W with the processing light EL through the processing optical system 131, the combining optical system 133, and the objective optical system 134. Moreover, the processing head 13 irradiates the workpiece W with the measurement light ML through the measurement optical system 132, the combining optical system 133, and the objective optical system 134. Note that a detailed description of a configuration of the processing head 13 will be described later in detail with reference to FIG. 6.

The head driving system 14 moves the processing head 13. The head driving system 14 may move (namely, linearly move) the processing head 13 along a movement axis along at least one of the X-axis direction, the Y-axis direction, and the Z-axis direction, for example. The head driving system 14 may move the processing head 13 along at least one of the θX direction, the θY direction, and the θZ direction, in addition to or instead of at least one of the X-axis direction, the Y-axis direction, and the Z-axis direction, for example. Namely, the head driving system 14 may rotate (namely, rotationally move) the processing head 13 around at least one axis of a rotational axis along the X-axis direction (namely, an A-axis), a rotational axis along the Y-axis direction (namely, a B-axis), and a rotational axis along the Z-axis direction (namely, a C-axis).

When the processing head 13 moves, a positional relationship between the stage 15 (furthermore, the workpiece W placed on the stage 15) and the processing head 13 changes. When the positional relationship between the processing head 13 and each of the stage 15 and the workpiece W changes, an irradiation position of the processing light EL on the workpiece W changes. Furthermore, when the positional relationship between the processing head 13 and each of the stage 15 and the workpiece W changes, an irradiation position of the measurement light ML on the workpiece W changes.

The workpiece W is placed on the stage 15. Therefore, the stage 15 may be referred to as a placing apparatus. Specifically, the workpiece W is placed on a placement surface 151 that is at least a part of a top surface of the stage 15. The stage 15 is configured to support the workpiece W placed on the stage 15. The stage 15 may be configured to hold the workpiece W placed on the stage 15. In this case, the stage 15 may include at least one of a mechanical chuck, an electrostatic chuck, and a vacuum suction chuck to hold the workpiece W. Alternatively, a jig for holding the workpiece W may hold the workpiece W, and the stage 15 may hold the jig holding the workpiece W. Alternatively, the stage 15 may not hold the workpiece W placed on the stage 15. In this case, the workpiece W may be placed on the stage 15 without clamp.

The workpiece W may be placed on the stage 15 through a support member that supports the workpiece W. For example, the workpiece W may be held by a jig and the jig holding the workpiece W may be placed on the stage 15. In this case, the workpiece W may not be in contact with the stage 15. Alternatively, the stage 15 may support the workpiece W by using a robotic arm configured to hold the workpiece W. In this case, the workpiece W held by the robotic arm may be in contact with or may not be in contact with the stage 15.

The stage driving system 16 moves the stage 15. The stage driving system 16 may move the stage 15 along a movement axis along at least one of the X-axis direction, the Y-axis direction, and the Z-axis direction, for example. The stage driving system 16 may move the stage 15 along at least one of the θX direction, the θY direction, and the θZ direction in addition to or instead of at least one of the X-axis direction, the Y-axis direction, and the Z-axis direction, for example. Namely, the stage driving system 16 may rotate (namely, rotationally move) the stage 15 around at least one axis of the rotational axis along the X-axis direction (namely, the A-axis), the rotational axis along the Y-axis direction (namely, the B-axis), and the rotational axis along the Z-axis direction (namely, the C-axis).

When the stage 15 moves, the positional relationship between the stage 15 (furthermore, the workpiece W placed on the stage 15) and the processing head 13 changes. When the positional relationship between the processing head 13 and each of the stage 15 and the workpiece W changes, the irradiation position of the processing light EL on the workpiece W changes. Furthermore, when the positional relationship between the processing head 13 and each of the stage 15 and the workpiece W changes, the irradiation position of the measurement light ML on the workpiece W changes.

The control unit 2 controls an operation of the processing unit 1. For example, the control unit 2 may control an operation of the processing head 13 of the processing unit 1. For example, the control unit 2 may control an operation of at least one of the processing optical system 131, the measurement optical system 132, the combining optical system 133, and the objective optical system 134 of the processing head 13. For example, the control unit 2 may control an operation of the head driving system 14 of the processing unit 1 (for example, the movement of the processing head 13). For example, the control unit 2 may control an operation of the stage driving system 16 of the processing unit 1 (for example, the movement of the stage 15).

The control unit 2 may control the operation of the processing unit 1 based on a measured result of the workpiece W by the processing unit 1. Specifically, the control unit 2 may generate measurement data of the workpiece W (for example, data related to at least one of the position and the shape of the workpiece W) based on the measured results of the workpiece W, and may control the operation of the processing unit 1 based on the generated measurement data.

The control unit 2 may include a calculation apparatus and a storage apparatus, for example. The calculation apparatus may include at least one of a CPU (Central Processing Unit) and a GPU (Graphical Processing Unit), for example. The storage apparatus may include a memory, for example. The control unit 2 serves as an apparatus for controlling the operation of the processing system SYS by means of the calculation apparatus executing a computer program. The computer program is a computer program that allows the calculation apparatus to execute (namely, to perform) a below-described operation that should be executed by the control unit 2. Namely, the computer program is a computer program that allows the control unit 2 to function so as to make the processing unit 1 perform the below-described operation. The computer program executed by the calculation apparatus may be recorded in the storage apparatus (namely, a recording medium) of the control unit 2, or may be recorded in any recording medium (for example, a hard disk or a semiconductor memory) that is built in the control unit 2 or that is attachable to the control unit 2. Alternatively, the calculation apparatus may download the computer program that should be executed from an apparatus positioned at the outside of the control unit 2 through a network interface.

The control unit 2 may not be positioned in the processing unit 1. For example, the control unit 2 may be positioned at the outside of the processing unit 1 as a server or the like. In this case, the control unit 2 may be connected to the processing unit 1 through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control unit 2 and the processing unit 1 may be configured to transmit and receive various information through the network. Moreover, the control unit 2 may be configured to transmit information such as a command and a control parameter to the processing unit 1 through the network. The processing unit 1 may include a receiving apparatus that receives the information such as the command and the control parameter from the control unit 2 through the network. The processing unit 1 may include a transmitting apparatus that transmits the information such as a command and a control parameter to the control unit 2 (namely, an output apparatus that outputs the information to the control unit 2) through the network. Alternatively, a first control apparatus that performs a part of the processing performed by the control unit 2 may be positioned in the processing unit 1 and a second control apparatus that performs another part of the processing performed by the control unit 2 may be positioned at the outside of the processing unit 1.

An arithmetic model that is buildable by machine learning may be implemented in the control unit 2 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control unit 2 may control the operation of the processing unit 1 by using the arithmetic model. Namely, the operation for controlling the operation of the processing unit 1 may include an operation for controlling the operation of the processing unit 1 by using the arithmetic model. Note that the arithmetic model that has been built by off-line machine learning using training data may be implemented in the control unit 2. Moreover, the arithmetic model implemented in the control unit 2 may be updated by online machine learning on the control unit 2. Alternatively, the control unit 2 may control the operation of the processing unit 1 by using the arithmetic model implemented in an apparatus external to the control unit 2 (namely, an apparatus external to the processing unit 1), in addition to or instead of the arithmetic model implemented on the control unit 2.

Note that the recording medium recording therein the computer program that should be executed by the control unit 2 may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, each process or function included in the computer program may be realized by a logical process block that is realized in the control unit 2 by means of the control unit 2 (namely, a computer) executing the computer program, may be realized by a hardware such as a predetermined gate array (a FPGA, an ASIC) of the control unit 2, or may be realized in a form in which the logical process block and a partial hardware module that realizes an partial element of the hardware are combined.

### (1-2) Configuration of Processing Head 13

Next, with reference to FIG. 6, one example of the configuration of the processing head 13 will be described. FIG. 6 is a cross-sectional view that illustrates one example of the configuration of the processing head 13.

As illustrated in FIG. 6, the processing light EL generated by processing light source 11 enters the processing head 13 through a light transmitting member 111 such as an optical fiber and the like. The processing light source 11 may be positioned outside the processing head 13. The processing light source 11 may be positioned in the processing head 13.

The processing head 13 includes the processing optical system 131, the measurement optical system 132, the combining optical system 133, and the objective optical system 134, as described above. The processing optical system 131, the measurement optical system 132, the combining optical system 133, and the objective optical system 134 may be contained in a head housing 135 of the processing head 13. However, at least one of the processing optical system 131, the measurement optical system 132, the combining optical system 133, and the objective optical system 134 may not be contained in the head housing 135.

The processing optical system 131 is an optical system to which the processing light EL from the processing light source 11 enters. The processing optical system 131 is an optical system that emits, toward the combining optical system 133, the processing light EL that has entered the processing optical system 131. The workpiece W is irradiated with the processing light EL emitted from the processing optical system 131 through the combining optical system 133 and the objective optical system 134.

The processing optical system 131 may include a position adjustment optical system 1311, an angle adjustment optical system 1312, and a condensed position adjustment optical system 1313, for example. The position adjustment optical system 1311 is configured to adjust an emitting position of the processing light EL from the processing optical system 131. The position adjustment optical system 1311 may include a parallel plate that is configured to incline with respect to a propagating direction of the processing light EL, for example, and change the emitting position of the processing light EL by changing an inclined angle of the parallel plate. The angle adjustment optical system 1312 is configured to adjust an emitting angle (namely, an emitting direction) of the processing light EL from the processing optical system 131. The angle adjustment optical system 1312 may include a mirror that is configured to incline with respect to the propagating direction of the processing light EL, for example, and change the emitting angle of the processing light by changing an inclined angle of the mirror. The condensed position adjustment optical system 1313 is an optical member that is configured to adjust a condensed position of the processing light EL along the propagating direction of the processing light EL. The condensed position adjustment optical system 1313 may include a plurality of lenses that are arranged along the propagating direction of the processing light EL, for example. In this case, the condensed position of the processing light EL is adjusted by moving at least one of the plurality of lenses along its optical axis direction. Alternatively, the condensed position adjustment optical system 1313 may include an optical member (typically, a Galvano mirror) that is configured to move the condensed position of the processing light EL along a desired direction by deflecting the processing light EL, for example. However, the processing optical system 131 may not include at least one of the position adjustment optical system 1311, the angle adjustment optical system 1312, and the condensed position adjustment optical system 1313.

The processing light EL that has been emitted from the processing optical system 131 enters the combining optical system 133. The combining optical system 133 includes a beam splitter (for example, a polarization beam splitter) 1331. The beam splitter 1331 emits, toward the objective optical system 134, the processing light EL that has entered the beam splitter 1331. In an example illustrated in FIG. 6, the processing light EL that has entered the beam splitter 1331 passes through a polarization split surface to be emitted toward the objective optical system 134. Therefore, in the example illustrated in FIG. 6, the processing light EL enters the polarization split surface of the beam splitter 1331 in a state where the processing light EL has a polarized direction that allows the processing light EL to pass through the polarization split surface (a polarized direction that allows the processing light EL to be a p-polarized light with respect to the polarization split surface).

The processing light EL that has been emitted from the combining optical system 133 enters the objective optical system 134. The objective optical system 134 emits, toward the workpiece W, the processing light EL that has entered the objective optical system 134. The objective optical system 134 includes a Galvano mirror 1341 and a fθ lens 1342.

The processing light EL that has entered the objective optical system 134 enters the Galvano mirror 1341. The Galvano mirror 1341 deflects the processing light EL (namely, changing the emitting angle of the processing light EL). The Galvano mirror 1341 changes the condensed position of the processing light EL in a plane intersecting an optical axis EX of the fθ lens 1342 (namely, a plane along the XY plane) by deflecting the processing light EL. The processing head 13 usually irradiates the workpiece W with the processing light EL in a state where the optical axis EX of the fθ lens 1342 intersects the surface of the workpiece W, as illustrated in FIG. 6. Therefore, when the condensed position of the processing light EL in the plane intersecting the optical axis EX of the fθ lens 1342 is changed, the irradiation position of the processing light EL on the surface of the workpiece W is changed in a direction along the surface of the workpiece W. Namely, the irradiation position of the processing light EL is changed along at least one of the X-axis direction and the Y-axis direction.

The Galvano mirror 1341 includes a X scanning mirror 1341X and a Y scanning mirror 1341Y. Each of the X scanning mirror 1341X and the Y scanning mirror 1341Y is an inclined angle variable mirror whose angle relative to an optical path of the processing light EL entering the Galvano mirror 1341 is changeable. The X scanning mirror 1341X deflects the processing light EL so as to change the irradiation position of the processing light EL on the surface of the workpiece W along the X-axis direction. In this case, the X scanning mirror 1341X may rotate or swing around the Y-axis. The Y scanning mirror 1341Y deflects the processing light EL so as to change the irradiation position of the processing light EL on the surface of the workpiece W along the Y-axis direction. In this case, the Y scanning mirror 1341Y may rotate or swing around the X-axis.

The processing light EL emitted from the Galvano mirror 1341 enters the fθ lens 1342. The fθ lens 1342 irradiates the workpiece W with the processing light EL emitted from the Galvano mirror 1341. Specifically, the fθ lens 1342 emits the processing light EL along the optical axis EX of the fθ lens 1342. As a result, the processing light EL emitted from the fθ lens 1342 propagates along the direction that is along the optical axis EX to enter the workpiece W.

The fθ lens 1342 condenses the processing light EL emitted from the Galvano mirror 1341 on the workpiece W. In this case, the processing light EL that has been emitted from the fθ lens 1342 may enter the workpiece W without passing through another optical element (in other words, an optical member, and a lens for example) having a power. In this case, the fθ lens 1342 may be referred to as a terminal optical element, because it is a last optical element (namely, an optical element that is closest to the workpiece W) having a power of a plurality of optical elements positioned on an optical path of the processing light EL.

The measurement light ML generated by measurement light source 12 further enters the processing head 13 through a light transmitting member 121 such as an optical fiber and the like. The measurement light source 12 may be positioned outside the processing head 13. The measurement light source 12 may be positioned in the processing head 13.

The measurement light source 12 includes a light comb light source. The light comb light source is a light source that is configured to generate, as the pulsed light, light including frequency components that are arranged with equal interval on a frequency axis (hereinafter, it is referred to as a "light frequency comb"). In this case, the measurement light source 12 emits, as the measurement light ML, the pulsed light including the frequency components that are arranged with equal interval on the frequency axis. However, the measurement light source 12 may include a light source that is different from the light comb light source.

In the example illustrated in FIG. 6, the processing head 13 includes a plurality of measurement light sources 12. For example, the processing head 13 may include the measurement light source 12#1 and the measurement light source 12#2. The plurality of measurement light sources 12 may emit a plurality of measurement lights ML whose phases are synchronized with each other and that are coherent, respectively. For example, oscillation frequencies of the plurality of measurement light sources 12 may be different from each other. Therefore, the plurality of measurement lights ML respectively emitted from the plurality of measurement light sources 12 are the plurality of measurement lights ML having different pulse frequencies (for example, the number of the pulsed light per unit time, and an inverse number of the ON time of the pulsed light). However, the processing head 13 may include a single measurement light source 12.

The measurement light ML that has been emitted from the measurement light source 12 enters the measurement optical system 132. The measurement optical system 132 is an optical system that emits, toward the combining optical system 133, the measurement light ML that has entered the measurement optical system 132. The workpiece W is irradiated with the measurement light ML emitted from the measurement optical system 132 through the combining optical system 133 and the objective optical system 134. Therefore, the measurement optical system 132 irradiates the workpiece W with the measurement light ML through the combining optical system 133 and the objective optical system 134 in order to measure the workpiece W.

The measurement optical system 132 includes a mirror 1320, a beam splitter 1321, a beam splitter 1322, a detector 1323, a beam splitter 1324, a mirror 1325, a detector 1326, a mirror 1327, and a Galvano mirror 1328, for example. However, the measurement optical system 132 may not include the Galvano mirror 1328.

The measurement light ML that has been emitted from the measurement light source 12 enters the beam splitter 1321. Specifically, the measurement light ML that has been emitted from the measurement light source 12#1 (hereinafter, it is referred to as the "measurement light ML#1") enters the beam splitter 1321. The measurement light ML that has been emitted from the measurement light source 12#2 (hereinafter, it is referred to as the "measurement light ML#2") enters the beam splitter 1321 through the mirror 1320. The beam splitter 1321 emits, toward the beam splitter 1322, the measurement lights ML#1 and ML#2 that has entered the beam splitter 1321. Namely, the beam splitter 1321 emits, toward the same direction (namely, toward a direction along which the beam splitter 1322 is positioned), the measurement lights ML#1 and ML#2 that has entered the beam splitter 1321 from different directions, respectively.

The beam splitter 1322 reflects, toward the detector 1323, measurement light ML#1-1 that is a part of the measurement light ML#1 that has entered the beam splitter 1322. The beam splitter 1322 emits, toward the beam splitter 1324, measurement light ML#1-2 that is another part of the measurement light ML#1 that has entered the beam splitter 1322. The beam splitter 1322 reflects, toward the detector 1323, measurement light ML#2-1 that is a part of the measurement light ML#2 that has entered the beam splitter 1322. The beam splitter 1322 emits, toward the beam splitter 1324, measurement light ML#2-2 that is another part of the measurement light ML#2 that has entered the beam splitter 1322.

The measurement lights ML#1-1 and ML#2-1 that have been emitted from the beam splitter 1322 enter the detector 1323. The detector 1323 optically receives (namely, detects) the measurement light ML#1-1 and the measurement light ML#2-1. Especially, the detector 1323 optically receives interference light generated by an interference between the measurement light ML#1-1 and the measurement light ML#2-1. Incidentally, an operation for optically receiving the interference light generated by the interference between the measurement light ML#1-1 and the measurement light ML#2-1 may be considered to be equivalent to an operation for optically receiving the measurement light ML#1-1 and the measurement light ML#2-1. A detected result by detector 1323 is output to the control unit 2.

The measurement lights ML#1-2 and ML#2-2 that have been emitted from the beam splitter 1322 enter the beam splitter 1324. The beam splitter 1324 reflects, toward the mirror 1325, at least a part of the measurement light ML#1-2 that has entered the beam splitter 1324. The beam splitter 1324 reflects, toward the mirror 1327, at least a part of the measurement light ML#2-2 that has entered the beam splitter 1324.

The measurement light ML#1-2 that has been emitted from the beam splitter 1324 enters the mirror 1325. The measurement light ML#1-2 that has entered the mirror 1325 is reflected by a reflection surface (the reflection surface may be referred to as a reference surface) of the mirror 1325. Specifically, the mirror 1325 reflects, toward the beam splitter 1324, the measurement light ML#1-2 that has entered the mirror 1325. Namely, the mirror 1325 emits the measurement light ML#1-2, which has entered the mirror 1325, toward the beam splitter 1324 as measurement light ML#1-3 that is a reflection light thereof. In this case, the measurement light ML#1-3 may be referred to as a reference light. The measurement light ML#1-3 that has been emitted from the mirror 1325 enters the beam splitter 1324. The beam splitter 1324 emits, toward the beam splitter 1322, the measurement light ML#1-3 that has entered the beam splitter 1324. The measurement light ML#1-3 that has been emitted from the beam splitter 1324 enters the beam splitter 1322. The beam splitter 1322 emits, toward the detector 1326, the measurement light ML#1-3 that has entered the beam splitter 1322.

On the other hand, the measurement light ML#2-2 that has been emitted from the beam splitter 1324 enters the mirror 1327. The mirror 1327 reflects, toward the Galvano mirror 1328, the measurement light ML#2-2 that has entered the mirror 1327. Namely, the mirror 1327 emits, toward the Galvano mirror 1328, the measurement light ML#2-2 that has entered the mirror 1327.

The Galvano mirror 1328 deflect the measurement light ML#2-2 (namely, change an emitting angle of the measurement light ML#2-2). The Galvano mirror 1328 changes a condensed position of the measurement light ML#2-2 in a plane intersecting the optical axis EX of the fθ lens 1342 (namely, a plane along the XY plane) by deflecting the measurement light ML#2-2. The processing head 13 usually irradiates the workpiece W with the measurement light ML#2-2 in a state where the optical axis EX of the fθ lens 1342 intersects the surface of the workpiece W, as illustrated in FIG. 6. Therefore, when the condensed position of the measurement light ML#2-2 in the plane intersecting the optical axis EX of the fθ lens 1342 is changed, the irradiation position of the measurement light ML#2-2 on the surface of the workpiece W is changed in a direction along the surface of the workpiece W. Namely, the irradiation position of the measurement light ML#2-2 is changed along at least one of the X-axis direction and the Y-axis direction.

The Galvano mirror 1328 includes a X scanning mirror 1328X and a Y scanning mirror 1328Y. Each of the X scanning mirror 1328X and the Y scanning mirror 1328Y is an inclined angle variable mirror whose angle relative to an optical path of the measurement light ML#2-2 entering the Galvano mirror 1328 is changeable. The X scanning mirror 1328X deflects the measurement light ML#2-2 so as to change the irradiation position of the measurement light ML#2-2 on the surface of the workpiece W along the X-axis direction. In this case, the X scanning mirror 1328X may rotate or swing around the Y-axis. The Y scanning mirror 1328Y deflects the measurement light ML#2-2 so as to change the irradiation position of the measurement light ML#2-2 on the surface of the workpiece W along the Y-axis direction. In this case, the Y scanning mirror 1328Y may rotate or swing around the X-axis.

The measurement light ML#2-2 emitted from the Galvano mirror 1328 enters the combining optical system 133. The beam splitter 1331 of the combining optical system 133 emits, toward the objective optical system 134, the measurement light ML#2-2 that has entered the beam splitter 1331. In the example illustrated in FIG. 6, the measurement light ML#2-2 that has entered the beam splitter 1331 is reflected by the polarization split surface to be emitted toward the objective optical system 134. Therefore, in the example illustrated in FIG. 6, the measurement light ML#2-2 enters the polarization split surface of the beam splitter 1331 in a state where the measurement light ML#2-2 has a polarized direction that allows the measurement light ML#2-2 to be reflected by the polarization split surface (a polarized direction that allows the measurement light ML#2-2 to be a s-polarized light with respect to the polarization split surface).

Here, not only the measurement light ML#2-2 but also the processing light EL enter the beam splitter 1331 as described above. Namely, both of the measurement light ML#2-2 and the processing light EL pass through the beam splitter 1331. The beam splitter 1331 emits, toward same direction (namely, toward the same objective optical system 134), the processing light EL and the measurement light ML#2-2 that enter the beam splitter 1331 from different directions, respectively. Therefore, the beam splitter 1331 substantially serves as an combining optical member that combines the processing light EL and the measurement light ML#2-2.

Incidentally, in a case where the wavelength of the processing light EL is different from the wavelength of the measurement light ML#2-2, the combining optical system 133 may include a dichroic mirror as the combining optical member instead of the beam splitter 1331. Even in this case, the combining optical system 133 may combine the processing light EL and the measurement light ML#2-2 (namely, combine the optical path of the processing light EL and the optical path of the measurement light ML#2-2) by using the dichroic mirror.

The measurement light ML#2-2 that has been emitted from the beam splitter 1331 enters the Galvano mirror 1341. The Galvano mirror 1341 deflects the measurement light ML#2-2, as with the case where the processing light EL is deflected. Therefore, the Galvano mirror 1341 is configured to change the irradiation position of the measurement light ML#2-2 on the surface of the workpiece W in a direction along the surface of the workpiece W.

As described above, not only the measurement light ML#2-2 but also the processing light EL enter the Galvano mirror 1341. Namely, the processing light EL and the measurement light ML#2-2 combined by the combining optical system 133 enter the Galvano mirror 1341. Therefore, both of the processing light EL and the measurement light ML#2-2 pass through the same Galvano mirror 1341. Therefore, the Galvano mirror 1341 is configured to change the irradiation position of the processing light EL on the workpiece W and the irradiation position of the measurement light ML#2-2 on the workpiece W in synchronization with each other. Namely, the Galvano mirror 1341 may change the irradiation position of the processing light EL on the workpiece W and the irradiation position of the measurement light ML#2-2 on the workpiece W in conjunction with each other.

On the other hand, the measurement light ML#2-2 enters the workpiece W through the Galvano mirror 1328 and the processing light EL enters the workpiece W without passing through the Galvano mirror 1328. Therefore, the processing system SYS is configured to independently move the irradiation position of the measurement light ML#2-2 relative to the irradiation position of the processing light EL by using the Galvano mirror 1328. The processing system SYS is configured to change the irradiation position of the processing light EL and the irradiation position of the measurement light ML#2-2 independently from each other. The processing system SYS is configured to change a positional relationship between the irradiation position of the processing light EL and the irradiation position of the measurement light ML#2-2. Note that the processing system SYS may not include the Galvano mirror 1328 in a case where the positional relationship between the irradiation position of the processing light EL and the irradiation position of the measurement light ML#2-2 is not changed.

The measurement light ML#2-2 that has been emitted from the Galvano mirror 1341 enters the fθ lens 1342. The fθ lens 1342 irradiates the workpiece W with the measurement light ML#2-2 emitted from the Galvano mirror 1341. Specifically, the fθ lens 1342 emits the measurement light ML#2-2 along the optical axis EX of the fθ lens 1342. As a result, the measurement light ML#2-2 emitted from the fθ lens 1342 propagates along the direction that is along the optical axis EX to enter the workpiece W.

The fθ lens 1342 may condense the measurement light ML#2-2 emitted from the Galvano mirror 1341 on the workpiece W. In this case, the measurement light ML#2-2 that has been emitted from the fθ lens 1342 may enter the workpiece W without passing through another optical element (in other words, an optical member, and a lens for example) having a power.

Here, as illustrated in FIG. 6, the optical path of the measurement light ML emitted from the fθ lens 1342 to the workpiece W may overlap with the optical path of the processing light EL emitted from the fθ lens 1342 to the workpiece W. However, the optical path of the measurement light ML emitted from the fθ lens 1342 to the workpiece W may not overlap, at least partially, with the optical path of the processing light EL emitted from the fθ lens 1342 to the workpiece W.

When the workpiece W is irradiated with the measurement light ML#2-2, light due to the irradiation with the measurement light ML#2-2 is generated from the workpiece W. Namely, when the workpiece W is irradiated with the measurement light ML#2-2, the light due to the irradiation with the measurement light ML#2-2 is emitted from the workpiece W. The light due to the irradiation with the measurement light ML#2-2 (in other words, the light emitted from the workpiece W due to the irradiation with the measurement light ML#2-2) may include at least one of the measurement light ML#2-2 reflected by the workpiece W (namely, reflection light), the measurement light ML#2-2 scattered by the workpiece W (namely, scattering light), the measurement light ML#2-2 diffracted by the workpiece W (namely, diffraction light) and the measurement light ML#2-2 transmitted through the workpiece W (namely, transmitted light).

At least a part of the light emitted from the workpiece W due to the irradiation with the measurement light ML #2-2 enters the objective optical system 134 as the returned light RL. Specifically, the light, which propagates along the optical path of the measurement light ML #2-2 entering the workpiece W, of the light emitted from the workpiece W due to the irradiation with the measurement light ML #2-2 enters the objective optical system 134 as the returned light RL. In this case, the optical path of the measurement light ML #2-2 that is emitted from the fθ lens 1342 to enter the workpiece W may be the same as the optical path of the returned light RL that is emitted from the workpiece W to enter the fθ lens 1342. The returned light RL that has entered the objective optical system 134 enters the combining optical system 133 through the fθ lens 1342 and the Galvano mirror 1341. The beam splitter 1331 of the combining optical system 133 emits, toward the measurement optical system 132, the returned light RL that has entered the beam splitter 1331. In the example illustrated in FIG. 6, the returned light RL that has entered the beam splitter 1331 is reflected by the polarization split surface to be emitted toward the measurement optical system 132. Therefore, in the example illustrated in FIG. 6, the returned light RL enters the polarization split surface of the beam splitter 1331 in a state where the returned light RL has a polarized direction that allows the returned light RL to be reflected by the polarization split surface.

The returned light RL that has been emitted from the beam splitter 1331 enters the Galvano mirror 1328 of the measurement optical system 132. The Galvano mirror 1328 emits, toward the mirror 1327, the returned light RL that has entered the Galvano mirror 1328. The mirror 1327 reflects, toward the beam splitter 1324, the returned light RL that has entered the mirror 1327. The beam splitter 1324 emits, toward the beam splitter 1322, at least a part of the returned light RL that has entered the beam splitter 1324. The beam splitter 1322 emits, toward the detector 1326, at least a part of the returned light RL that has entered the beam splitter 1322.

As described above, not only the returned light RL but also the measurement light ML#1-3 enter the detector 1326. Namely, the returned light RL that propagates toward the detector 1326 through the workpiece W and the measurement light ML#1-3 that propagates toward the detector 1326 without going through the workpiece W enter the detector 1326. The detector 1326 optically receives (namely, detects) the measurement light ML#1-3 and the returned light RL. Especially, the detector 1326 optically receives interference light generated by an interference between the measurement light ML#1-3 and the returned light RL. Incidentally, an operation for optically receiving the interference light generated by the interference between the measurement light ML#1-3 and the returned light RL may be considered to be equivalent to an operation for optically receiving the measurement light ML#1-3 and the returned light RL. A detected result by detector 1326 is output to the control unit 2.

Thus, the measurement optical system 132 irradiates the workpiece W with the measurement light ML through the objective optical system 134 and optically receives the returned light RL from the workpiece W through the objective optical system 134. This measurement apparatus 132 may be referred to as a light detection apparatus.

The control unit 2 acquires the detected result by the detector 1323 and the detected result by the detector 1326. The control unit 2 may generate the measurement data of the workpiece W (for example, the measurement data related to at least one of the position and the shape of the workpiece W) based on the detected result by the detector 1323 and the detected result by the detector 1326.

Specifically, since the pulse frequency of the measurement light ML#1 is different from the pulse frequency of the measurement light ML#2, a pulse frequency of the measurement light ML#1-1 is different from a pulse frequency of the measurement light ML#2-1. Therefore, the interference light generated by the interference between the measurement light ML#1-1 and the measurement light ML#2-1 is interference light in which pulsed light appears in synchronization with a timing at which the pulsed light of the measurement light ML#1-1 and the pulsed light of the measurement light ML#2-1 enter the detector 1323 at the same time. Similarly, a pulse frequency of the measurement light ML#1-3 is different from a pulse frequency of the returned light RL. Therefore, the interference light generated by the interference between the measurement light ML#1-3 and the returned light RL is interference light in which pulsed light appears in synchronization with a timing at which the pulsed light of the measurement light ML#1-3 and the pulsed light of the returned light RL enter the detector 1326 at the same time. Here, a position (a position along a time axis) of the pulsed light of the interference light detected by the detector 1326 changes depending on the positional relationship between the processing head 13 and the workpiece W. This is because the interference light detected by the detector 1326 is the interference light generated by the interference between the returned light RL that propagates toward the detector 1326 through the workpiece W and the measurement light ML#1-3 that propagates toward the detector 1326 without going through the workpiece W. On the other hand, a position (a position along a time axis) of the pulsed light of the interference light detected by the detector 1323 does not change depending on the positional relationship between the processing head 13 and the workpiece W. Therefore, it can be said that a difference in time between the pulsed light of the interference light detected by the detector 1323 and the pulsed light of the interference light detected by the detector 1326 indirectly indicates the positional relationship between the processing head 13 and the workpiece W (typically, a distance between the processing head 13 and the workpiece W). Specifically, it can be said that the difference in time between the pulsed light of the interference light detected by the detector 1323 and the pulsed light of the interference light detected by the detector 1326 indirectly indicates a distance between the processing head 13 and the workpiece W in the direction along the optical path of the measurement light ML (namely, a direction along a propagating direction of the measurement light ML). Therefore, the control unit 2 can calculate the distance between the processing head 13 and the workpiece W in a direction along the optical path of the measurement light ML (for example, the Z-axis direction) based on the difference in time between the pulsed light of the interference light detected by the detector 1323 and the pulsed light of the interference light detected by the detector 1326. In other words, the control unit 2 can calculate the position of the workpiece W in a direction along the optical path of the measurement light ML (for example, the Z-axis direction). More specifically, the control unit 2 can calculate the distance between the processing head 13 and an irradiated part of the workpiece W that is irradiated with the measurement light ML#2-2. The control unit 2 can calculate the position of the irradiated part in a direction along the optical path of the measurement light ML (for example, the Z-axis direction). Furthermore, since the irradiation position of the measurement light ML #2-2 on the workpiece W is determined by driving states of the Galvano mirrors 1341 and 1328, the control unit 2 can calculate, based on the driving states of the Galvano mirrors 1341 and 1328, the position of the irradiated part in a direction intersecting the optical path of the measurement light ML (for example, at least one of the X-axis direction and the Y-axis direction). As a result, the control unit 2 can generate the measurement data indicating the position (for example, the position in a three-dimensional coordinate space) of the irradiated part in the measurement coordinate system that is based on the processing head 13.

The processing head 13 may irradiate a plurality of parts of the workpiece W with the measurement light ML #2-2. For example, at least one of the Galvano mirrors 1341 and 1328 may change the irradiation position of the measurement light ML #2-2 on the workpiece W so that the processing head 13 irradiates the plurality of parts of the workpiece W with the measurement light ML #2-2. For example, at least one of the processing head 13 and the stage 15 may move so that processing head 13 irradiates the plurality of parts of the workpiece W with the measurement light ML #2-2. When the plurality of parts of the workpiece W are irradiated with the measurement light ML #2-2, the control unit 2 can generate the measurement data indicating the positions of the plurality of parts of the workpiece W. As a result, the control unit 2 can generate the measurement data indicating the shape of the workpiece W based on the measurement data indicating the positions of the plurality of parts. For example, the control unit 2 can generate the measurement data indicating the shape of the workpiece W by calculating, as the shape of the workpiece W, a three-dimensional shape formed by virtual planar planes (alternatively, curved planes) connecting the plurality of parts whose positions are calculated.

### (2) Operation performed by Processing System SYS

Next, the operation performed by the processing system SYS will be described. Especially, in the below-described description, a subtractive manufacturing will be described as one example of the operation performed by the processing system SYS.

In the present example embodiment, the processing system SYS may perform the subtractive manufacturing in a first subtractive manufacturing mode (a first processing mode). The processing system SYS may perform the subtractive manufacturing in a second subtractive manufacturing mode (a second processing mode) in addition to or instead of the first subtractive manufacturing mode. In a case where the processing system SYS is configured to perform the subtractive manufacturing in each of the first subtractive manufacturing mode and the second subtractive manufacturing mode, the processing system SYS may switch a processing mode of the processing system SYS between the first subtractive manufacturing mode and the second subtractive manufacturing mode.

The processing system SYS may perform the subtractive manufacturing on the workpiece W in the first subtractive manufacturing mode without using the second subtractive manufacturing mode. The processing system SYS may perform the subtractive manufacturing on the workpiece W in the second subtractive manufacturing mode without using the first subtractive manufacturing mode. Namely, the processing system SYS may not switch the processing mode of the processing system SYS between the first subtractive manufacturing mode and the second subtractive manufacturing mode in a period during which the processing system SYS performs the subtractive manufacturing on a certain workpiece W.

Alternatively, the processing system SYS may perform the subtractive manufacturing on the workpiece W in either one of the first and second subtractive manufacturing modes, and then perform the subtractive manufacturing on the workpiece W in the other one of the first and second subtractive manufacturing modes. Namely, the processing system SYS may switch the processing mode of the processing system SYS between the first subtractive manufacturing mode and the second subtractive manufacturing mode in a period during which the processing system SYS performs the subtractive manufacturing on a certain workpiece W.

The subtractive manufacturing may include a processing for removing, from the workpiece W, a removal target part WP1 by the subtractive manufacturing. The subtractive manufacturing may include a processing for removing, from the workpiece W, the removal target part WP1 that is a part of the workpiece W. In this case, the first subtractive manufacturing mode and the second subtractive manufacturing mode may be different from each other in that methods for removing the removal target part WP1 are different between them.

Next, the subtractive manufacturing in the first subtractive manufacturing mode and the subtractive manufacturing in the second subtractive manufacturing mode will be described in sequence. Incidentally, for convenience of description, the subtractive manufacturing in the first subtractive manufacturing mode is referred to as a "first subtractive manufacturing" and the subtractive manufacturing in the second subtractive manufacturing mode is referred to as a "second subtractive manufacturing" in the below-described description,

### (2-1) Subtractive Manufacturing in First Subtractive Manufacturing Mode (First Subtractive Manufacturing)

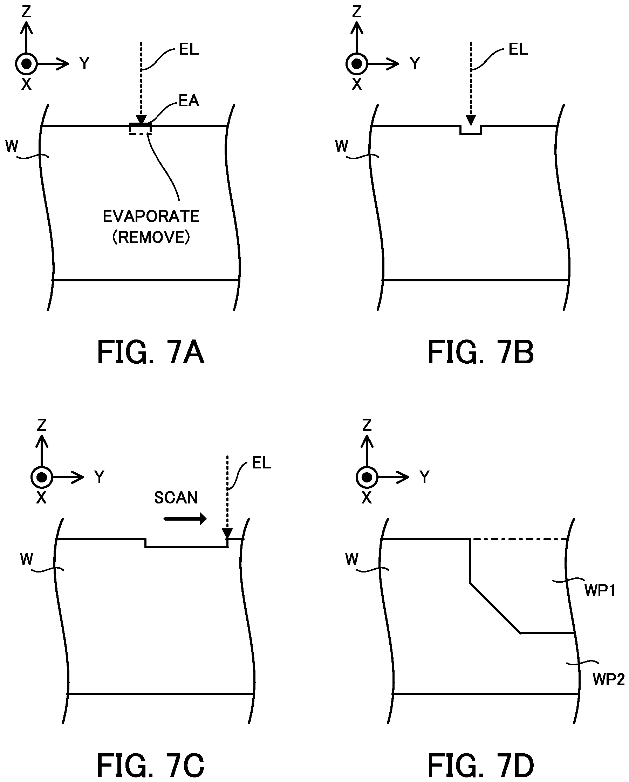

Firstly, the subtractive manufacturing in the first subtractive manufacturing mode (the first subtractive manufacturing) will be described. The first subtractive manufacturing is a processing for removing the removal target part WP1 by irradiating the removal target part WP1 with the processing light EL. Especially, the first subtractive manufacturing is a processing for removing the removal target part WP1 by irradiating the removal target part WP1 with the processing light EL to melt, evaporate or sublimate the removal target part WP1. The first subtractive manufacturing is a processing for removing the removal target part WP1 by irradiating each part of the removal target part WP1 with the processing light EL in sequence to melt, evaporate or sublimate each part of the removal target part WP1 in sequence. The first subtractive manufacturing is a processing for removing the removal target part WP1 by irradiating each part of the removal target part WP1 with the processing light EL in sequence to melt, evaporate, or sublimate the whole of the removal target part WP1. In the below-described description, the first subtractive manufacturing performed by the processing system SYS will be described below with reference to FIG. 7A to FIG. 7D. Each of FIG. 7A to FIG. 7D is a cross-sectional view that illustrates the workpiece W on which the first subtractive manufacturing is performed.

As illustrated in FIG. 7A, the processing system SYS irradiates a target irradiation area EA, which is set (in other words, formed) on the surface of the workpiece W, with the processing light EL. When the target irradiation area EA is irradiated with the processing light EL, an energy of the processing light EL is transferred to an energy-transferred part of the workpiece W that includes a part of the workpiece W overlapping the target irradiation area EA and a part of the workpiece W close to the target irradiation area EA. When heat caused by the energy of the processing light EL is transferred, a material constituting the energy-transferred part of the workpiece W is melted due to the heat caused by the energy of the processing light EL. The melted material spatters as liquid drop. Alternatively, the melted material evaporates due to the heat caused by the energy of the processing light EL. As a result, the energy-transferred part of the workpiece W is removed. Namely, as illustrated in FIG. 7B, a concave part (in other words, a groove) having a predetermined depth is formed in the surface of the workpiece W.

The processing system SYS moves the target irradiation area EA on the surface of the workpiece W by using the Galvano mirror 1341. Alternatively, the processing system SYS may move the target irradiation area EA on the surface of the workpiece W by using the head driving system 14 to move the processing head 13. Alternatively, the processing system SYS may move the target irradiation area EA on the surface of the workpiece W by using the stage driving system 16 to move the stage 15. Namely, the processing unit 1 scans the surface of the workpiece W with the processing light EL. As a result, as illustrated in FIG. 7C, the surface of the workpiece W is removed at least partially along a scanning trajectory of the processing light EL (namely, a movement trajectory of the target irradiation area EA). Therefore, the processing system SYS may appropriately melt (scatter), evaporate, or sublimate the removal target part WP1 by moving the target irradiation area EA so that the removal target part WP1 is irradiated with the processing light EL. Namely, the processing system SYS repeats an operation for removing a part of the removal target part WP1 by irradiating a part of the removal target part WP1 with the processing light EL until the whole of the removal target part WP1 is removed (namely, melted (scattered), evaporated or sublimated). As a result, the processing system SYS can appropriately remove the removal target part WP1 from the workpiece W, as illustrated in FIG. 7D.

As illustrated in FIG. 7D, after the removal target part WP1 is removed from the workpiece W, a remaining part WP2, which has not been removed by the subtractive manufacturing, remains as a residue of the workpiece W. The processing system SYS may perform the first subtractive manufacturing so that a shape (for example, a three-dimensional shape) of the remaining part WP2 becomes a target shape. For example, in a case where the remaining part WP2 is used as a desired component, the processing system SYS may perform the first subtractive manufacturing so that the shape of the remaining part WP2 becomes a target shape of the desired component.

In the present example embodiment, the first subtractive manufacturing is a subtractive manufacturing using a principle of a non-thermal processing (for example, an ablation processing). Namely, the processing system SYS may process the workpiece W by using the principle of the non-thermal processing (for example, the ablation processing). In other words, the processing system SYS may perform the non-thermal processing (for example, the ablation processing) on the workpiece W. For example, in a case where the light whose photon density (in other words, fluence) is high is used as the processing light EL, the material constituting the energy-transferred part of the workpiece W instantly evaporates and spatters. Namely, the material constituting the energy-transferred part of the workpiece W evaporates and spatters within a time sufficiently shorter than a thermal diffusion time of the workpiece W. In this case, the material constituting the energy-transferred part of the workpiece W may be released from the workpiece W as at least one of ion, atom, radical, molecule, cluster, and solid piece. Therefore, the processing system can process the workpiece W while reducing an effect of the heat caused by the energy of the processing light EL on the workpiece W as much as possible.

In a case where the subtractive manufacturing is performed on the workpiece W by using the principle of the non-thermal processing, the processing light EL may include the pulsed light the ON time of which is equal to or shorter than pico-seconds or is equal to or shorter than femto-seconds. Namely, the processing light EL may include the pulsed light whose pulse width is equal to or shorter than pico-seconds or femto-seconds. The processing light EL, which can perform the subtractive manufacturing on the workpiece W by using the principle of the non-thermal processing, may be referred to as non-thermal processing light or non-thermal processing beam.

However, the first subtractive manufacturing may be a subtractive manufacturing using the principle of a thermal processing. The processing system SYS may be considered to perform the subtractive manufacturing on the workpiece W by using the principle of the so-called thermal processing. In a case where the subtractive manufacturing is performed on the workpiece W by using the principle of thermal processing, the processing light EL may include the pulsed the ON time of which is equal to or longer than milli-seconds or nano-seconds or the continuous light. Namely, the processing light EL may include the pulsed whose pulse width is equal to or longer than milli-seconds or is equal to or longer than nano-seconds or the continuous light. The processing light EL, which can perform the subtractive manufacturing on the workpiece W by using the principle of the thermal processing, may be referred to as thermal processing light or thermal processing beam.

### (2-2) Subtractive Manufacturing in Second Subtractive Manufacturing Mode (Second Subtractive Manufacturing)

Next, the subtractive manufacturing in the second subtractive manufacturing mode (the second subtractive manufacturing) will be described.

### (2-2-1) Overview of Second Subtractive Manufacturing

Firstly, an overview of the second subtractive manufacturing will be described. The second subtractive manufacturing is a processing for removing, from the workpiece W, the removal target part WP1 that is a part of the workpiece W, as with the first subtractive manufacturing. The second subtractive manufacturing is different from the first subtractive manufacturing in that each part of the removal target part WP1 may not be irradiated with the processing light EL in sequence to remove the removal target part WP1. In other words, the second subtractive manufacturing is a processing for separating the removal target part WP1 from the remaining part WP2 by performing the subtractive manufacturing on a boundary between the removal target part WP1 and the remaining part WP2. The second subtractive manufacturing is different from the first subtractive manufacturing in that each part of the removal target part WP1 may not be melted, evaporated, or sublimated in sequence to remove the removal target part WP1. The second subtractive manufacturing is different from the first subtractive manufacturing in that the whole of the removal target part WP1 may not be melted, evaporated, or sublimated to remove the removal target part WP1.

Specifically, firstly, as described in the first subtractive manufacturing by using FIG. 7D, the remaining part WP2, which has not been removed by the subtractive manufacturing, remains as the residue of the workpiece W after the removal target part WP1 is removed from the workpiece W even in the second manufacturing. The second subtractive manufacturing is a subtractive manufacturing for leaving the remaining part WP2 by separating the removal target part WP1 from the remaining part WP2.

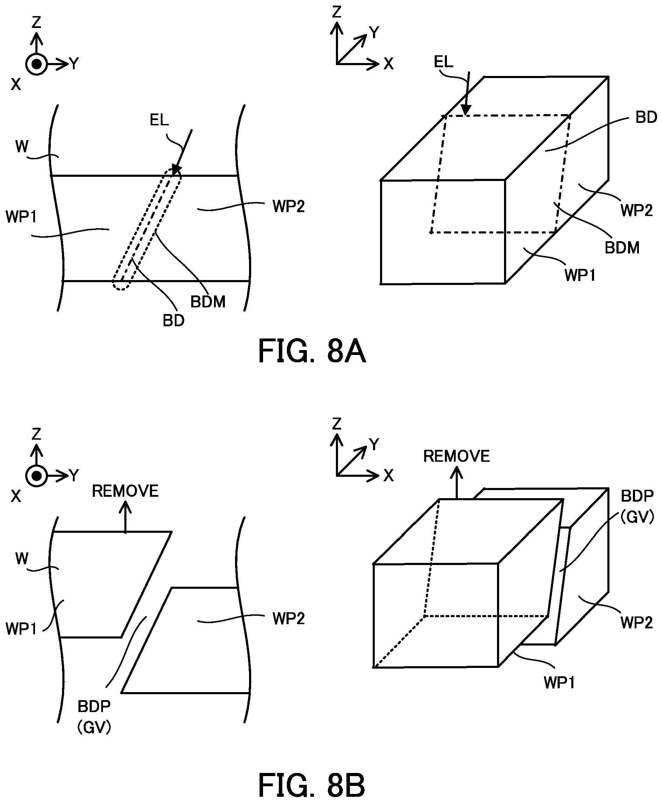

In the below-described description, the second subtractive manufacturing for separating the removal target part WP1 from the remaining part WP2 will be described with reference to FIG. 8A to FIG. 8D. FIG. 8A includes a cross-sectional view and a perspective view that illustrate the workpiece W before the second subtractive manufacturing is performed. FIG. 8B includes a cross-sectional view and a perspective view that illustrates the workpiece W after the second subtractive manufacturing is performed. As illustrated in FIG. 8A and FIG. 8B, the second subtractive manufacturing is a subtractive manufacturing for forming a boundary part BDP, which is for separating the removal target part WP1 and the remaining part WP2, at a boundary BD between the removal target part WP1 and the remaining part WP2. The second subtractive manufacturing is a subtractive manufacturing for separating the removal target part WP1 from the remaining part WP2 by forming the boundary part BDP at the boundary BD. In this case, the second subtractive manufacturing may be considered to be different from the first subtractive manufacturing, which removes the removal target part WP1 without forming the boundary part BDP, in that the second subtractive manufacturing removes the removal target part WP1 by forming the boundary part BDP. Incidentally, the boundary BD may mean a part that is the boundary between the removal target part WP1 and the remaining part WP2. The boundary BD may mean a part that divides the removal target part WP1 and the remaining part WP2.

As illustrated in FIG. 8B, the processing system SYS may form, as the boundary part BDP, a groove GV for separating the removal target part WP1 from the remaining part WP2. The groove GV serves as a gap for separating the removal target part WP1 and the remaining part WP2 from each other. As a result, the removal target part WP1 and the remaining part WP2 are separated by this gap. Incidentally, the processing system SYS may form, as at least a part of the groove GV, a slit that can serve as the gap at the boundary BD. The processing system SYS may form, as at least a part of the groove GV, a hole that can serve as the gap at the boundary BD.

A center of the groove GV in a width direction of the groove GV may coincide with the boundary BD. The center of the groove GV in the width direction of the groove GV may be away from the boundary BD toward a direction closer to the removal target part WP1. One edge of the groove GV in the width direction of groove GV may be coincident with boundary BD. The center of groove GV in the width direction of the groove GV may be away from boundary BD toward a direction closer to the remaining part WP2. The other edge of the groove GV in the width direction of groove GV may be coincident with boundary BD.

When a positional relationship between the groove GV and the boundary BD changes, a size of the remaining part WP2 changes. In this case, the processing system SYS may set the positional relationship between the groove GV and the boundary BD so that the size of the remaining part WP2 becomes a desired size. Alternatively, a user of the processing system SYS may set the positional relationship between the groove GV and the boundary BD so that the size of the remaining part WP2 becomes the desired size.

The processing system SYS may form the groove GV (namely, the boundary part BDP) at the boundary BD by irradiating the boundary BD with the processing light EL. Namely, the processing system SYS may form the groove GV at the boundary BD by irradiating a boundary area BDM, which is positioned at the boundary BD, of the workpiece W with the processing light EL. The processing itself for forming the groove GV may be the same as the above-described first subtractive manufacturing. Namely, the processing system SYS may form the groove GV at the boundary BD by performing the above-described first subtractive manufacturing for removing the boundary area BDM, which is positioned on the boundary BD, of the workpiece W of the workpiece W by irradiating the boundary BD with the processing light EL.

After the groove GV is formed, the removal target part WP1 and the remaining part WP2 are separated through the groove GV. Namely, the removal target part WP1 is removed from the workpiece W. In this case, the user of the processing system SYS may remove the removal target part WP1 from the workpiece W. In a case where the processing system SYS includes a transport apparatus (for example, a robot such as a hand arm) that is configured to transport an object, the processing system SYS may remove the removal target part WP1 from the workpiece W by using the transport apparatus to transport the removal target part WP1. In a case where the processing system SYS includes a suction apparatus that is configured to suction an object, the processing system SYS may remove the removal target part WP1 from the workpiece W by using the suction apparatus to suction the removal target part WP1. The processing system SYS may remove the removal target part WP1 from the workpiece W by tilting the stage 15 to allow the removal target part WP1 to be moved by a self-weight of the removal target part WP1. The processing system SYS may remove the removal target part WP1 from the workpiece W by rotating the stage 15 to apply centrifugal force to the removal target part WP1.

Even in a case where the second subtractive manufacturing is performed, the processing system SYS may perform the second subtractive manufacturing so that the shape (for example, the three-dimensional shape) of the remaining part WP2 becomes the target shape, as in a case where the first subtractive manufacturing is performed. For example, in a case where the remaining part WP2 is used as a desired component, the processing system SYS may perform the second subtractive manufacturing so that the shape of the remaining part WP2 becomes a target shape of the desired component.

In a case where the second subtractive manufacturing is performed, the processing system SYS may not melt, evaporate, or sublimate the whole of the removal target part WP1. Therefore, a time required to remove the removal target part WP1 from the workpiece W by the second subtractive manufacturing is shorter than a time required to remove the removal target part WP1 from the workpiece W by the first subtractive manufacturing. Therefore, the processing system SYS can reduce the time required to remove the removal target part WP1 from the workpiece W by performing the second subtractive manufacturing, compared to a case where the first subtractive manufacturing is performed. The effect of reducing the time required to remove the removal target part WP1 from the workpiece W becomes even more pronounced as the removal target part WP1 is larger. Therefore, the processing system SYS can efficiently remove the large-sized removal target part WP1 from the workpiece W.

Incidentally, in the second subtractive manufacturing, at least a part of the removal target part WP1 remains as an object at a timing at which the second subtractive manufacturing is completed. In this case, the processing system SYS may perform the second subtractive manufacturing so that a shape (for example, a three-dimensional shape) of the removal target part WP1 becomes a target shape. For example, in a case where the removal target part WP1 is used as a desired component, the processing system SYS may perform the second subtractive manufacturing so that the shape of the removal target part WP1 becomes a target shape of the desired component. Thus, according to the second subtractive manufacturing, not only the remaining part WP2 but also the removal target part WP1 are usable for a desired application.

### (2-2-2) Second Subtractive Manufacturing for Forming a Plurality of Grooves GV

Especially in the present example embodiment, the processing system SYS may remove the removal target part WP1 by forming a plurality of grooves GV at the boundary BD between the removal target part WP1 and the remaining part WP2. In other words, the processing system SYS may remove the removal target part WP1 by repeating an operation for forming the groove GV a plurality of number of times. In a case where the removal target part WP1 is removed by forming the plurality of grooves GV, a constraint of the shape of the removal target part WP1 is reduced, compared to a case where the removal target part WP1 is removed by forming a single groove GV. Namely, the processing system SYS can remove the removal target part WP1 whose shape is more complex. As a result, a constraint of the shape of the remaining part WP2 that remains after removing the removal target part WP1 is also reduced. The processing system SYS can perform the second subtractive manufacturing so that the remaining part WP2 whose shape is more complex remains. Therefore, the processing system SYS can perform the second subtractive manufacturing so that the shape of the remaining part WP2 becomes the target shape even in a case where the target shape of the remaining part WP2 is a relatively complex shape. The processing system SYS can perform the second subtractive manufacturing so that the shape of the removal target part WP1 becomes the target shape even in a case where the target shape of the removal target part WP1 is a relatively complex shape.

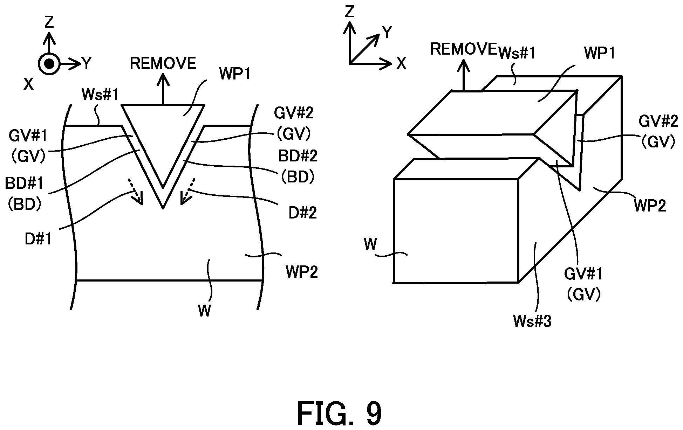

Next, a specific example of the second subtractive manufacturing for removing the removal target part WP1 by forming the plurality of grooves GV will be described with reference to FIG. 9 to FIG. 25. However, the processing system SYS may remove the removal target part WP1 by forming the single groove GV, as illustrated in FIG. 8A and FIG. 8B. Namely, the processing system SYS may remove the removal target part WP1 by performing the operation for forming the groove GV once.

### (2-2-2-1) First Specific Example of Second Subtractive Manufacturing for Forming a Plurality of Grooves GV

As illustrated in FIG. 9, the processing system SYS may remove the removal target part WP1 from the workpiece W by forming two grooves GV on the same surface of the workpiece W. Namely, a first specific example of the second subtractive manufacturing may be a subtractive manufacturing for removing the removal target part WP1 by forming the two grooves GV on the same surface of the workpiece W. In the example illustrated in FIG. 9, the processing system SYS removes the removal target part WP1 from the workpiece W by forming two grooves GV#1 and GV#2 on a first surface Ws#1 of the workpiece W. As a result, the removal target part WP1 is separated from the remaining part WP2.

The processing system SYS forms the two grooves GV#1 and GV#2 at the boundary BD between the removal target part WP1 and the remaining part WP2. Specifically, the processing system SYS forms the groove GV#1 at a first boundary BD#1, which is a part of the boundary BD. Furthermore, the processing system SYS forms the groove GV#2 at a second boundary BD#2 of the boundary BD that is different from the first boundary BD#1.

The grooves GV#1 and GV#2 are connected because the removal target part WP1 is separated from the remaining part WP2 through the two grooves GV#1 and GV#2. Namely, the two grooves GV#1 and GV#2 form a series of grooves GV that distributes on the boundary BD between the removal target part WP1 and the remaining part WP2. Therefore, the processing system SYS may form the two grooves GV#1 and GV#2 that are connected to each other. The processing system SYS may form the two grooves GV#1 and grooves GV#2 that form a series of grooves GV.

In order to form the two grooves GV#1 and GV#2 that are connected to each other, the processing system SYS may form the two grooves GV#1 and GV#2 that intersect each other. In this case, the two grooves GV#1 and GV#2 may be connected to each other at a position at which the two grooves GV#1 and GV#2 intersect each other.

Incidentally, in the example illustrated in FIG. 9, an end part of the groove GV#1 is connected to an end part of the groove GV#2. Namely, a cross-sectional shape of the groove GV including the grooves GV#1 and GV#2 is a V-shape. However, a middle part of the groove GV#1 may be connected to the end part of the groove GV#2. A middle part of the groove GV#2 may be connected to the end part of the groove GV#1. Namely, the cross-sectional shape of the groove GV including the grooves GV#1 and GV#2 may be a T-shape. Alternatively, the middle part of the groove GV#1 may be connected to the middle part of the groove GV#2. Namely, the cross-sectional shape of the groove GV including grooves GV#1 and GV#2 may be a cross-shape.

In order to form the two grooves GV#1 and GV#2 that are connected to each other, the processing system SYS may form the groove GV#1 extending from the first surface Ws#1 along a first direction D#1 and the groove GV#2 extending from the first surface Ws#1 along a second direction D#2 that is different from the first direction D#1. Incidentally, in the present example embodiment, a direction along which the groove GV extends may mean a depth direction of the groove GV. In this case, the processing system SYS may form the groove GV#1 whose depth direction is the first direction D#1 and the groove GV#2 whose depth direction is the second direction D#2. Incidentally, the first direction D#1 may be any linear direction. Namely, the first direction D#1 is not limited to a direction of an arrow illustrated in FIG. 9. Similarly, the second direction D#2 may be any linear direction. Namely, the second direction D#2 is not limited to a direction of an arrow illustrated in FIG. 9.

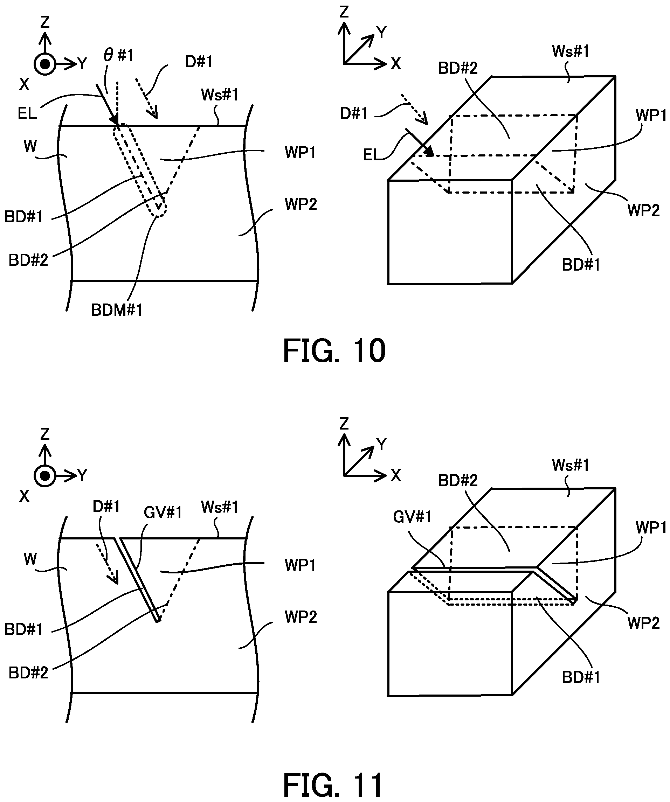

In this case, as illustrated in FIG. 10, the processing system SYS may set an irradiation direction of the processing light EL relative to the workpiece W in order to form the groove GV#1. Specifically, the processing system SYS may set the irradiation direction of the processing light EL relative to the workpiece W to the first direction D#1. Namely, the processing system SYS may set a state of the processing unit 1 to a state in which the processing unit 1 can irradiate the workpiece W with the processing light EL from the first direction D#1 relative to the workpiece W.

Then, the processing system SYS may irradiate the workpiece W (especially, the first surface Ws#1 of the workpiece W) with the processing light EL from the first direction D#1 relative to the workpiece W. Specifically, the processing system SYS may irradiate the first boundary BD#1 between the removal target part WP1 and the remaining part WP2 with the processing light EL from the first direction D#1 through the first surface Ws#1 of the workpiece W. Namely, the processing system SYS may irradiate a first boundary area BDM#1 of the workpiece W positioned at the first boundary BD#1 with the processing light EL. As a result, as illustrated in FIG. 11, the first boundary area BDM#1 is removed and the groove GV#1 extending along the first direction D#1 is formed at the first boundary BD#1. Namely, the groove GV#1 whose depth direction is the first direction D#1 is formed at the first boundary BD#1.

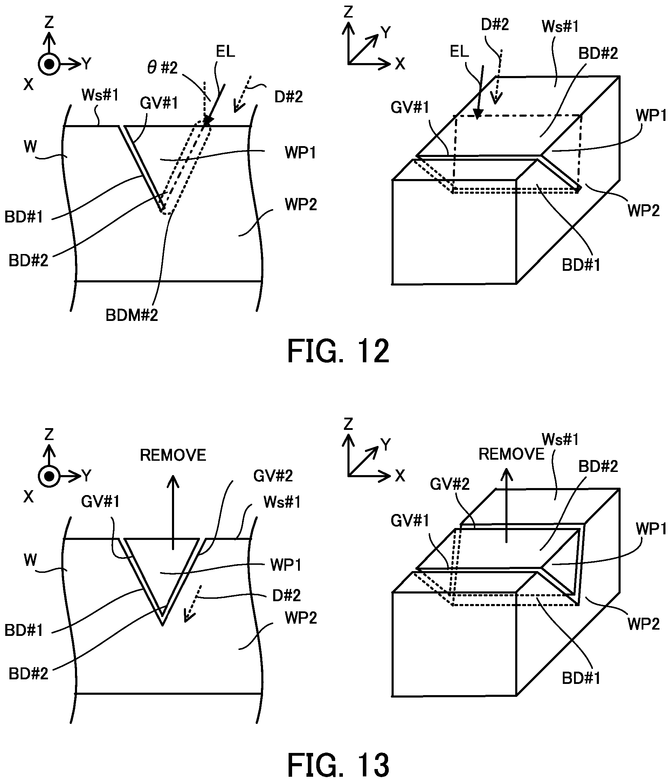

Then, as illustrated in FIG. 12, the processing system SYS may set (in this case, change) the irradiation direction of the processing light EL relative to the workpiece W in order to form the groove GV#2. Specifically, the processing system SYS may set the irradiation direction of the processing light EL relative to the workpiece W to the second direction D#2. The processing system SYS may change the irradiation direction of the processing light EL relative to the workpiece W from the first direction D#1 to the second direction D#2. Namely, the processing system SYS may change the state of the processing unit 1 from the state in which the processing unit 1 can irradiate the workpiece W with the processing light EL from the first direction D#1 relative to the workpiece W to a state in which the processing unit 1 can irradiate the workpiece W with the processing light EL from the second direction D#2 relative to the workpiece W.

In order to change the irradiation direction of the processing light EL, the processing system SYS may move the processing head 13 by using the head driving system 14. In this case, the processing system SYS may move the processing head 13 so as to change a state of the processing head 13 from a state in which the processing head 13 can irradiate the workpiece W with the processing light EL from the first direction D#1 relative to the workpiece W to a state in which the processing head 13 can irradiate the workpiece W with the processing light EL from the second direction D#2 relative to the workpiece W. Especially, the processing system SYS may rotationally move the processing head 13 around a rotational axis that intersects an axis orthogonal to the first surface Ws#1 of the workpiece W in which the groove GV#1 has been already formed. In the example illustrated in FIG. 12, since the first surface Ws#1 of the workpiece W is a surface along the XY plane, the processing system SYS may rotationally move the processing head 13 around a rotational axis intersecting the Z-axis orthogonal to the XY plane. For example, the processing system SYS may rotationally move the processing head 13 around at least one of a rotational axes along the X-axis direction and a rotational axis along the Y-axis direction. As a result, the processing system SYS can change the irradiation direction of the processing light EL relative to the workpiece W from the first direction D#1 to the second direction D#2.

The processing head 13 that irradiates the workpiece W with the processing light EL from the first direction D#1 may be considered to irradiate the workpiece W with the processing light EL from a first incident angle θ1 corresponding to the first direction D#1. Namely, the processing head 13 that irradiates the workpiece W with the processing light EL from the first direction D#1 may be considered to irradiate the workpiece W with the processing light EL that enters the workpiece W at the first incident angle θ1. The processing head 13 that irradiates the workpiece W with the processing light EL from the second direction D#2 may be considered to irradiate the workpiece W with the processing light EL from a second incident angle θ2 corresponding to the second direction D#2 (typically, the second incident angle θ2 that is different from the first incident angle θ1) . Namely, the processing head 13 that irradiates the workpiece W with the processing light EL from the second direction D#2 may be considered to irradiate the workpiece W with the processing light EL that enters the workpiece W at the second incident angle θ2. **In** this case, the processing system SYS may be considered to move the processing head 13 so as to change the state of the processing head 13 from a state in which the processing head 13 can irradiate the workpiece W with the processing light EL from the first incident angle θ1 to a state in which the processing head 13 can irradiate the workpiece W with the processing light EL from a second incident angle θ2.

Incidentally, when a mount angle of the processing head 13 relative to the workpiece W changes, the irradiation direction of the processing light EL relative to the workpiece W (namely, an incident angle at which the processing light EL emitted from the processing head 13 enters the workpiece W) changes. Therefore, the processing system SYS may move the processing head 13 so as to change the mount angle of the processing head 13 from a first mount angle corresponding to the first direction D#1 to a second mount angle corresponding to the second direction D#2. Namely, the processing system SYS may move the processing head 13 so as to change the mount angle of the processing head 13 from the first mount angle at which the processing head 13 can irradiate the workpiece W with the processing light EL from the first direction D#1 to the second mount angle at which the processing head 13 can irradiate the workpiece W with the processing light EL from the second direction D#2. Note that the mount angle of the processing head 13 relative to the workpiece W may mean an angle formed between a predetermined reference axis (for example, the Z-axis) and an optical axis of the processing head 13 (for example, the optical axis EX of the fθ lens 1342), for example.

In order to change the irradiation direction of the processing light EL, the processing system SYS may move the stage 15 by using the stage driving system 16 in addition to or instead of moving the processing head 13. In this case, the processing system SYS may move the stage 15 so as to change a state of the stage 15 from a state in which the workpiece W is irradiated with the processing light EL from the first direction D#1 relative to the workpiece W placed on the stage 15 to a state in which the workpiece W is irradiated with the processing light EL from the second direction D#2 relative to the workpiece W placed on the stage 15. Especially, the processing system SYS may rotationally move the stage 15 around a rotational axis that intersects an axis orthogonal to the first surface Ws#1 of the workpiece W in which the groove GV#1 has been already formed. In the example illustrated in FIG. 12, since the first surface Ws#1 of the workpiece W is the surface along the XY plane, the processing system SYS may rotationally move the stage 15 around a rotational axis intersecting the Z-axis orthogonal to the XY plane. For example, the processing system SYS may rotationally move the stage 15 around at least one of a rotational axes along the X-axis direction and a rotational axis along the Y-axis direction. As a result, the processing system SYS can change the irradiation direction of the processing light EL relative to the workpiece W from the first direction D#1 to the second direction D#2.

The state of the stage 15 may include a placement angle of the stage 15. The placement angle of the stage 15 may mean an angle of the placement surface 151 of the stage 15. The angle of the placement surface 151 may mean an angle between a predetermined reference plane (for example, the XY plane) and the placement surface 151 of the stage 15. In this case, the processing system SYS may change the placement angle of the stage 15 from a first placement angle that can realize the state in which the workpiece W is irradiated with the processing light EL from the first direction D#1 relative to the workpiece W placed on the stage 15 to a second placement angle that can realize the state in which the workpiece W is irradiated with the processing light EL from the second direction D#2 relative to the workpiece W placed on the stage 15.

When the processing head 13 moves, a relative positional relationship between the processing light EL emitted from the processing head 13 and the workpiece W that is irradiated with the processing light EL changes. Similarly, when the stage 15 moves, the relative positional relationship between the processing light EL emitted from the processing head 13 and the workpiece W that is irradiated with the processing light EL changes. Therefore, in both cases, the processing system SYS may be considered to change the relative positional relationship between the processing light EL and the workpiece W. Namely, the processing system SYS may be considered to change the relative positional relationship between the processing light EL and the workpiece W from a positional relationship in which the processing unit 1 can irradiate the workpiece W with the processing light EL from the first direction D#1 relative to the workpiece W to a positional relationship in which the processing unit 1 can irradiate the workpiece W with the processing light EL from the second direction D#2 relative to the workpiece W.

As illustrated in FIG. 12, the irradiation position that is irradiated with the processing light EL to form the groove GV#2 on the first surface Ws#1 is usually different from the irradiation position that is irradiated with the processing light EL to form the groove GV#1 is on the first surface Ws#1. Specifically, the irradiation position that is irradiated with the processing light EL to form the groove GV#2 on the first surface Ws#1 is different from the irradiation position that is irradiated with the processing light EL to form the groove GV#1 is on the first surface Ws#1 in a direction along the first surface Ws#1. Therefore, the processing system SYS may change the irradiation position of the processing light EL on the workpiece W in addition to changing the irradiation direction of the processing light EL in order to form the groove GV#2. Specifically, the processing system SYS may change the irradiation position of the processing light EL on the workpiece W along the direction along the first surface Ws#1 that is irradiated with the processing light EL #1.

In order to change the irradiation position of the processing light EL, the processing system SYS may move the processing head 13 by using the head driving system 14. For example, the processing system SYS may linearly move the processing head 13 along at least one of the X-axis direction and the Y-axis direction. Alternatively, in order to change the irradiation position of the processing light EL, the processing system SYS may move the stage 15 by using the stage driving system 16 in addition to or instead of moving the processing head 13. For example, the processing system SYS may linearly move the stage 15 along at least one of the X-axis direction and the Y-axis direction.

Then, the processing system SYS may irradiate the workpiece W (especially, the first surface Ws#1 of the workpiece W) with the processing light EL from the second direction D#2 relative to the workpiece W. Specifically, the processing system SYS may irradiate the second boundary BD#2 between the removal target part WP1 and the remaining part WP2 with the processing light EL from the second direction D#2 through the first surface Ws#1 of the workpiece W. Namely, the processing system SYS may irradiate a second boundary area BDM#2 of the workpiece W positioned at the second boundary BD#2 with the processing light EL. As a result, as illustrated in FIG. 13, the second boundary area BDM#2 is removed and the groove GV#2 extending along the second direction D#2 is formed at the second boundary BD#2. Namely, the groove GV#1 whose depth direction is the second direction D#2 is formed at the second boundary BD#2.

After the groove GV#2 is formed, the groove GV#2 is connected to the groove GV#1. As a result, a series of grooves GV is formed at the boundary BD between the removal target part WP1 and the remaining part WP2 by the grooves GV#1 and GV#2 that are connected to each other. As a result, as illustrated in FIG. 13, the removal target part WP1 is separated from the remaining part WP2 through a series of grooves GV formed by the grooves GV#1 and GV#2. Namely, the removal target part WP1 is removed from the workpiece W.

Incidentally, in the example illustrated in FIG. 9 to FIG. 13, the processing system SYS removes the removal target part WP1 by irradiating the first surface Ws#1 of the workpiece W that intersects the Z-axis direction with the processing light EL. In this case, as can be seen from FIG. 9, the processing system SYS can remove the removal target part WP1 without penetrating the workpiece W with the processing light EL. As a result, a throughput required for the processing is improved. Furthermore, a repertoire of the processing is increased. On the other hand, the processing system SYS may remove the removal target part WP1 by irradiating a third surface Ws#3 (see FIG. 9) of the workpiece W that is along the Z-axis direction with the processing light EL. In this case, as can be seen from FIG. 9, the processing system SYS may remove the removal target part WP1 by penetrating the workpiece W with the processing light EL. Furthermore, in this case, the processing system SYS may form the grooves GV#1 and GV#2 together at one time. Namely, the processing system SYS may form the grooves GV#1 and GV#2 together at one time without stopping the irradiation of the processing light EL by moving the irradiation position of the processing light EL on the third surface Ws#3 along a V-shaped movement trajectory.

Thus, as long as it is possible to form the desired groove GV on the workpiece W, the surface of the workpiece W that is irradiated with the processing light EL by the processing system SYS may be any surface. For example, the processing system SYS may form the desired groove GV in the workpiece W by irradiating one surface of the workpiece W with the processing light EL. For example, the processing system SYS may form the desired groove GV in the workpiece W by irradiating two surfaces of the workpiece W with the processing light EL. For example, the processing system SYS may form the desired groove GV in the workpiece W by irradiating three surfaces of the workpiece W with the processing light EL. For example, the processing system SYS may form the desired groove GV in the workpiece W by irradiating four or more surfaces of the workpiece W with the processing light EL. The same may be applied in a second specific example to a third specific example described below.

### (2-2-2-2) Second Specific Example of Second Subtractive Manufacturing

The second specific example of the second subtractive manufacturing is different from the first specific example of the first subtractive manufacturing, which is the subtractive manufacturing for removing the removal target part WP1 from the workpiece W by forming two grooves GV on the same surface of the workpiece W, in that it is a subtractive manufacturing for removing the removal target part WP1 from the workpiece W by forming two grooves GV on two different surfaces of the workpiece W, respectively. Other features of the second specific example of the second subtractive manufacturing may be the same as other features of the first specific example of the first subtractive manufacturing.

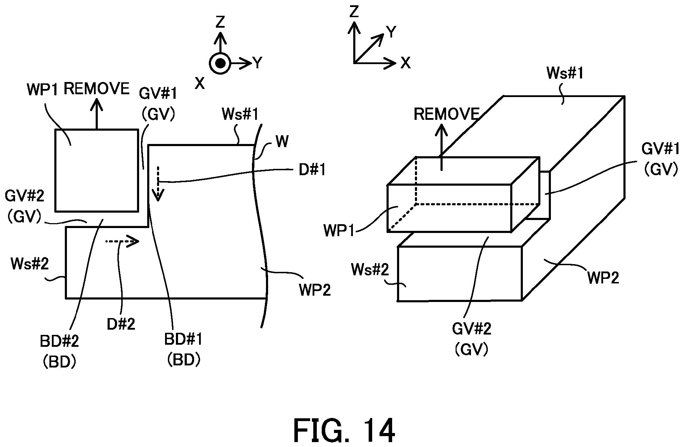

In this case, as illustrated in FIG. 14, the processing system SYS may remove the removal target part WP1 from the workpiece W by forming a groove GV#1 on a first surface Ws#1 of the workpiece W and forming a groove GV#2 on a second surface Ws#2 of the workpiece W that is different from the first surface Ws#1. The second surface Ws#2 typically faces toward a direction that is different from a direction toward which the first surface Ws#1 faces. As a result, the removal target part WP1 is separated from the remaining part WP2. Incidentally, in the second specific example, the workpiece W is typically a polyhedron. However, the workpiece W may be a three-dimensional object (for example, a sphere) that is different from the polyhedron.

Even in a case where the second specific example of the second subtractive manufacturing is performed, the processing system SYS may perform an operation that is the same as that in a case where the first specific example of the second subtractive manufacturing is performed. However, the processing system SYS form the groove GV#1 extending from the first surface Ws#1 of the workpiece W along a first direction D#1 and the groove GV#2 extending from the second surface Ws#2 of the workpiece W along a second direction D#2, instead of forming two grooves GV#1 and GV#2 extending from the first surface Ws#1 of the workpiece W along the first direction D#1 and the second direction D#2, respectively.

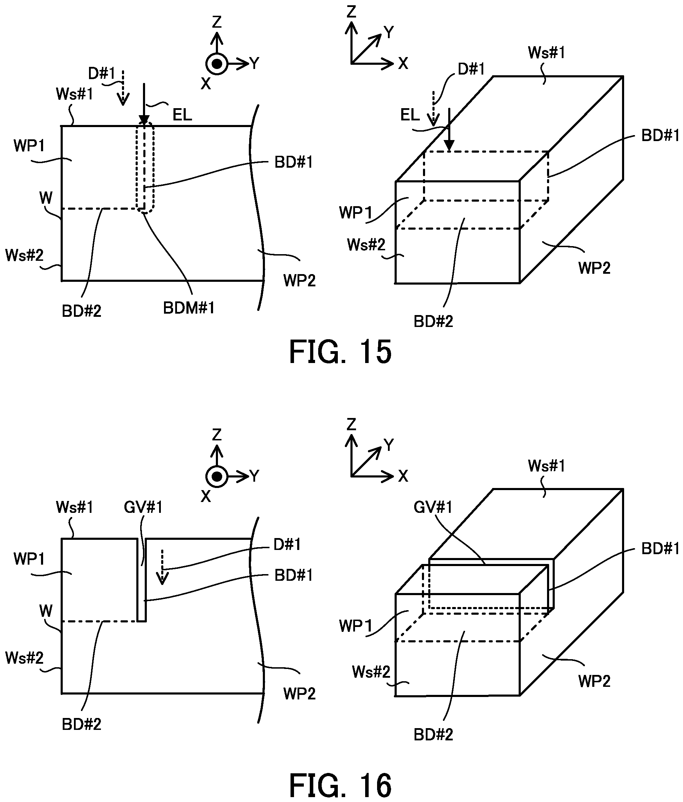

Specifically, as illustrated in FIG. 15, the processing system SYS may irradiate the workpiece W (especially, the first surface Ws#1 of the workpiece W) with the processing light EL from the first direction D#1 relative to the workpiece W. Specifically, the processing system SYS may irradiate a first boundary BD#1 between the removal target part WP1 and the remaining part WP2 with the processing light EL from the first direction D#1 through the first surface Ws#1 of the workpiece W. Namely, the processing system SYS may irradiate a first boundary area BDM#1 of the workpiece W positioned at the first boundary BD#1 with the processing light EL. Incidentally, as can be seen from FIG. 15, the first direction D#1 in the second specific example may not be the same direction or may be the same direction as the first direction D#1 in the above-described first specific example. As a result, as illustrated in FIG. 16, the first boundary area BDM#1 is removed and the groove GV#1 extending along the first direction D#1 is formed at the first boundary BD#1.

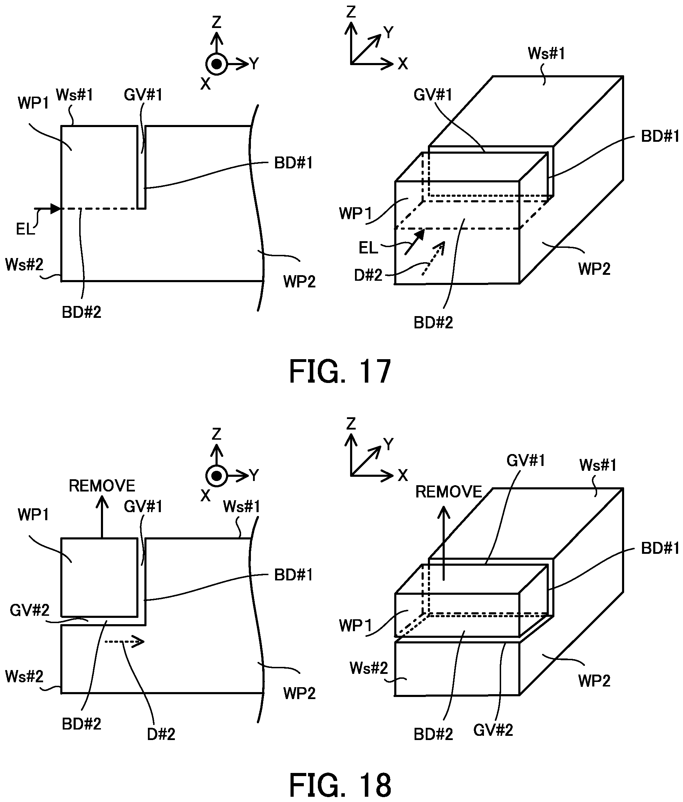

Then, as illustrated in FIG. 17, the processing system SYS may set (in this case, change) the irradiation direction of the processing light EL relative to the workpiece W in order to form the groove GV#2. Then, as illustrated in FIG. 17, the processing system SYS may irradiate the workpiece W (especially, the second surface Ws#2 of the workpiece W) with the processing light EL from the second direction D#2 relative to the workpiece W. Specifically, the processing system SYS may irradiate a second boundary BD#2 between the removal target part WP1 and the remaining part WP2 with the processing light EL from the second direction D#2 through the second surface Ws#2 of the workpiece W. Namely, the processing system SYS may irradiate a second boundary area BDM#2 of the workpiece W positioned at the second boundary BD#2 with the processing light EL. Incidentally, as can be seen from FIG. 17, the second direction D#2 in the second specific example may not be the same direction or may be the same direction as the second direction D#2 in the above-described first specific example. As a result, as illustrated in FIG. 18, the second boundary area BDM#2 is removed and the groove GV#2 extending along the second direction D#2 is formed at the second boundary BD#2.

After the groove GV#2 is formed, the groove GV#2 is connected to the groove GV#1. As a result, a series of grooves GV is formed at the boundary BD between the removal target part WP1 and the remaining part WP2 by the grooves GV#1 and GV#2 that are connected to each other. As a result, as illustrated in FIG. 18, the removal target part WP1 is separated from the remaining part WP2 through a series of grooves GV formed by the grooves GV#1 and GV#2. Namely, the removal target part WP1 is removed from the workpiece W.

### (2-2-2-3) Third Specific Example of Second Subtractive Manufacturing for Forming a Plurality of Grooves GV

The third specific example of the second subtractive manufacturing is different from each of the first and second specific examples of the first subtractive manufacturing, which is the subtractive manufacturing for removing the removal target part WP1 from the workpiece W by forming two grooves GV, in that it is a subtractive manufacturing for removing the removal target part WP1 from the workpiece W by forming three or more grooves GV. Other features of the third specific example of the second subtractive manufacturing may be the same as other features of each of the first and second specific examples of the first subtractive manufacturing.

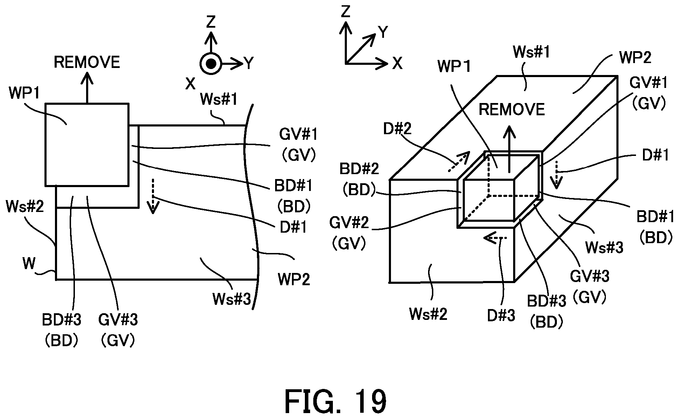

For example, FIG. 19 illustrates an example in which the third specific example of the second subtractive manufacturing is the subtractive manufacturing for removing the removal target part WP1 from the workpiece W by forming three grooves GV. In this case, as illustrated in FIG. 19, the processing system SYS may remove the removal target part WP1 from the workpiece W by forming three grooves GV#1, GV#2, and GV#3 in the workpiece W. As a result, the removal target part WP1 is separated from the remaining part WP2. Incidentally, for convenience of description, an example in which the third specific example of the second subtractive manufacturing is the subtractive manufacturing for forming three the grooves GV#1 to GV#3 will be described in the below-described description. However, even in a case where the third specific example of the second subtractive manufacturing is the subtractive manufacturing for forming the four or more grooves GV, the processing system SYS may perform the subtractive manufacturing as described below.

For example, the processing system SYS may remove the removal target part WP1 from the workpiece W by forming the three grooves GV#1 to GV#3 on the same surface of the workpiece W. For example, the processing system SYS may remove the removal target part WP1 from the workpiece W by forming two of the three grooves GV#1 to GV#3 on one of two different surfaces of the workpiece W and forming remaining one of the three grooves GV#1 to GV#3 on the other surface of the two different surfaces of the workpiece W. For example, the processing system SYS may remove the removal target part WP1 from the workpiece W by forming the three grooves GV#1 to GV#3 on three different surfaces of the workpiece W, respectively. In the example illustrated in FIG. 19, the processing system SYS removes the removal target part WP1 from the workpiece W by forming the groove GV#1 on a first surface Ws#1 of the workpiece W, forming the groove GV#2 on a second surface Ws#2 of the workpiece W, and forming the groove GV#3 on a third surface Ws#3 of the workpiece W that is different from the first surface Ws#1 and the second surface Ws#2. Incidentally, the first surface Ws#1 typically faces toward a direction that is different from each of a direction toward which the second surface Ws#2 faces and a direction toward which the third surface Ws#3 faces. The second surface Ws#2 typically faces toward a direction that is different from each of a direction toward which the first surface Ws#1 faces and a direction toward which the third surface Ws#3 faces. The third surface Ws#3 typically faces toward a direction that is different from each of a direction toward which the first surface Ws#1 faces and a direction toward which the second surface Ws#2 faces. In the below-described description, for convenience of description, an example in which the third specific example of the second subtractive manufacturing is the subtractive manufacturing for forming the three grooves GV#1 to GV#3 on the first surface Ws#1 to the third surface Ws#3 of the workpiece W, respectively, will be described.

The processing system SYS forms three grooves GV#1 to GV#3 at the boundary BD between removal target part WP1 and the remaining part WP2. Specifically, the processing system SYS forms the groove GV#1 on a first boundary BD#1, which is a part of the boundary BD. Furthermore, the processing system SYS forms the groove GV#2 on a second boundary BD#2 of the boundary BD that is different from the first boundary BD#1. Furthermore, the processing system SYS forms the groove GV#3 at a third boundary BD#3 of the boundary BD that is different from the first boundary BD#1 and the second boundary BD#2.

The three grooves GV#1 to GV#3 are connected because the removal target part WP1 is separated from the remaining part WP2 through the three grooves GV#1 to GV#3. Namely, the three grooves GV#1 to GV#3 form a series of grooves GV that distributes on the boundary BD between the removal target part WP1 and the remaining part WP2. Therefore, the processing system SYS may form the three grooves GV#1 to GV#3 that are connected to one another. The processing system SYS may form the three grooves GV#1 to GV#3 that form forming a series of grooves GV.

In order to form three grooves GV#1 to GV#3 that are connected to each other, the processing system SYS may form the three grooves GV#1 to GV#3 that intersect one another. In this case, the three grooves GV#1 to GV#3 may be connected to one another at a position at which at least two of the three grooves GV#1 to GV#3 intersect each other.

In order to form the three grooves GV#1 to GV#3 that are connected to one another, the processing system SYS may form the groove GV#1 extending from a first surface Ws#1 along the first direction D#1, the groove GV#2 extending from a second surface Ws#2 along the second direction D#2 that is different from the first direction D#1, and the groove GV#3 extending from the third surface Ws#3 along a third direction D#3 that is different from the first direction D#1 and the second direction D#2. The processing system SYS may form the groove GV#1 whose depth direction is the first direction D#1, the groove GV#2 whose depth direction is the second direction D#2, and the groove GV#3 whose depth direction is the third direction D#3.

Even in a case where the third specific example of the second subtractive manufacturing is performed, the processing system SYS may perform an operation that is the same as that in a case where the first or second specific example of the second subtractive manufacturing is performed. However, the processing system SYS further forms the groove GV#3 in addition to the grooves GV#1 and GV#2 formed in the first or second specific example of the second subtractive manufacturing.

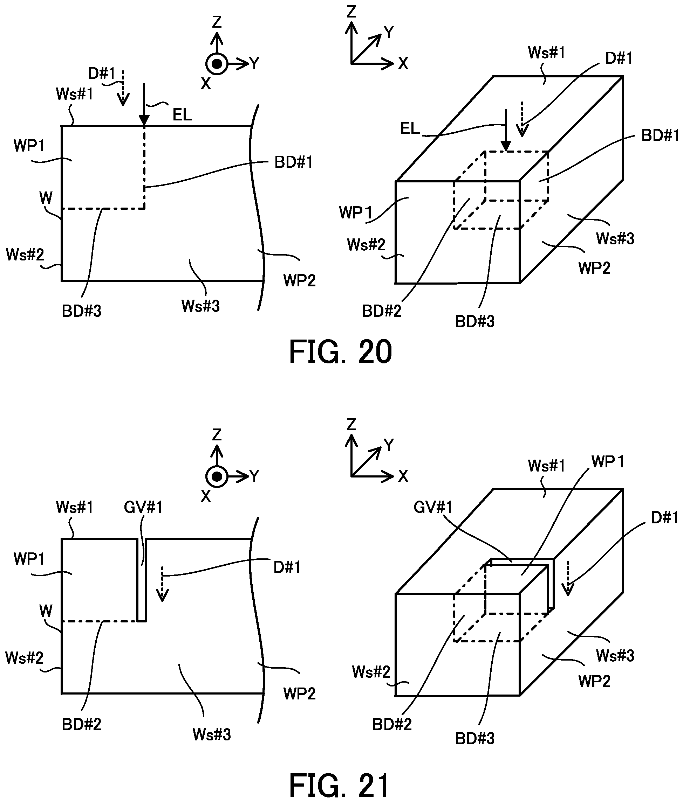

Specifically, as illustrated in FIG. 20, the processing system SYS may irradiate the workpiece W (especially, the first surface Ws#1 of the workpiece W) with the processing light EL from the first direction D#1 relative to the workpiece W. Specifically, the processing system SYS may irradiate a first boundary BD#1 between the removal target part WP1 and the remaining part WP2 with the processing light EL from the first direction D#1 through the first surface Ws#1 of the workpiece W. Namely, the processing system SYS may irradiate a first boundary area BDM#1 of the workpiece W positioned at the first boundary BD#1 with the processing light EL. Incidentally, as can be seen from FIG. 20, the first direction D#1 in the third specific example may not be the same direction or may be the same direction as the first direction D#1 in the above-described first or second specific example. As a result, as illustrated in FIG. 21, the first boundary area BDM#1 is removed and the groove GV#1 extending along the first direction D#1 is formed at the first boundary BD#1.

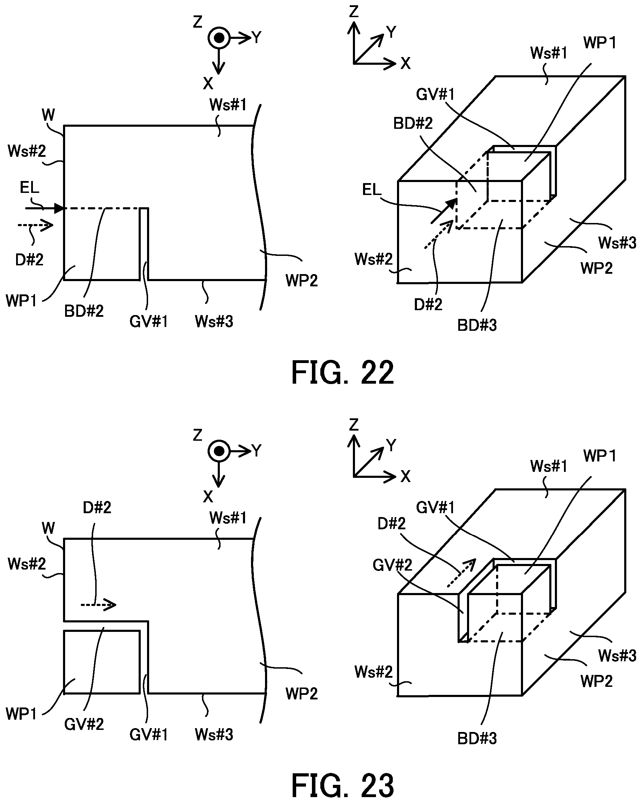

Then, as illustrated in FIG. 22, the processing system SYS may set (in this case, change) the irradiation direction of the processing light EL relative to the workpiece W in order to form the groove GV#2 even in the third specific example, as with the first or second specific example. Then, as illustrated in FIG. 22, the processing system SYS may irradiate the workpiece W (especially, the second surface Ws#2 of the workpiece W) with the processing light EL from the second direction D#2 relative to the workpiece W. Specifically, the processing system SYS may irradiate a second boundary BD#2 between the removal target part WP1 and the remaining part WP2 with the processing light EL from the second direction D#2 through the second surface Ws#2 of the workpiece W. Namely, the processing system SYS may irradiate a second boundary area BDM#2 of the workpiece W positioned at the second boundary BD#2 with the processing light EL. Incidentally, as can be seen from FIG. 22, the second direction D#2 in the third specific example may not be the same direction or may be the same direction as the second direction D#2 in the above-described first or second specific example. As a result, as illustrated in FIG. 23, the second boundary area BDM#2 is removed and the groove GV#2 extending along the second direction D#2 is formed at the second boundary BD#2.

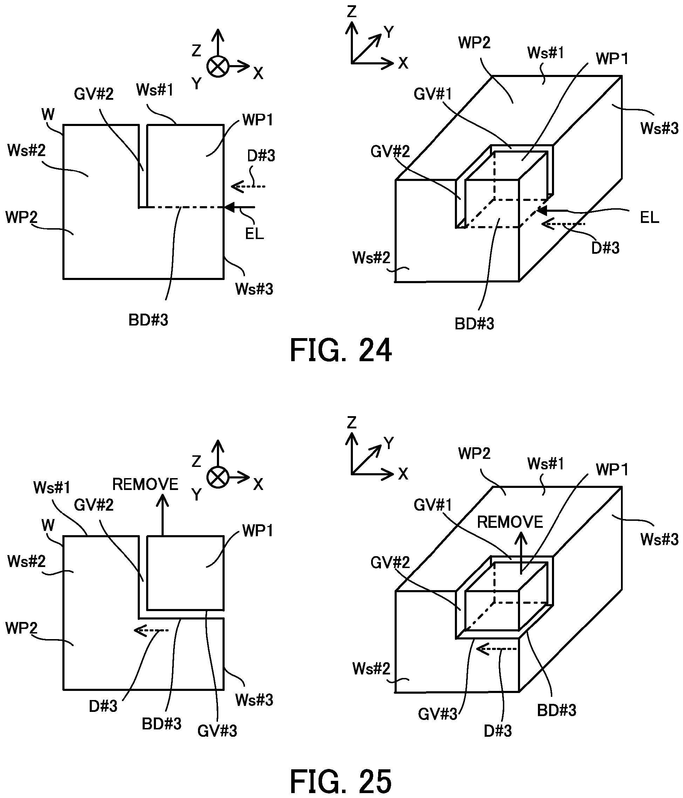

Then, as illustrated in FIG. 24, the processing system SYS may set (in this case, change) the irradiation direction of the processing light EL relative to the workpiece W in order to form the groove GV#3. Specifically, the processing system SYS may set the irradiation direction of the processing light EL relative to the workpiece W to the third direction D#3. The processing system SYS may change the irradiation direction of the processing light EL relative to the workpiece W from the second direction D#2 to the third direction D#3. Namely, the processing system SYS may change the state of the processing unit 1 from a state in which the processing unit 1 can irradiate the workpiece W with the processing light EL from the second direction D#2 relative to the workpiece W to a state in which the processing unit 1 can irradiate the workpiece W with the processing light EL from the third direction D#3 relative to the workpiece W.

Incidentally, even in the third specific example, the processing system SYS may move the processing head 13 by using the head driving system 14 in order to change the irradiation direction of the processing light EL, as with the first specific example. For example, the processing system SYS may move the processing head 13 so as to change the state of the processing head 13 from a state in which the processing head 13 can irradiate the workpiece W with the processing light EL to a state in which the processing head 13 can irradiate the workpiece W with the processing light EL from the third direction D#3 relative to the workpiece W. The processing system SYS may move the processing head 13 so as to change the state of the processing head 13 to a state in which the processing head 13 can irradiate the workpiece W with the processing light EL from a third incident angle. The third incident angle is typically different from the first incident angle θ1 corresponding to the first direction D#1 and the second incident angle θ2 corresponding to the second direction D#2.

Similarly, the processing system SYS may move the stage 15 by using the stage driving system 16 in order to change the irradiation direction of the processing light EL. For example, the processing system SYS may move the stage 15 so as to change the state of the stage 15 to a state in which the workpiece W is irradiated with the processing light EL from the second direction D#2 relative to the workpiece W placed on the stage 15. The processing system SYS may move the stage 15 so as to change the placement angle of the stage 15 to a third placement angle that can realize the state in which the workpiece W is irradiated with the processing light EL from the third direction D#3 relative to the workpiece W placed on the stage 15. The third placement angle is typically different from at least one of the first placement angle that can realize the state in which the workpiece W is irradiated with the processing light EL from the first direction D#1 and the second placement angle that can realize the state in which the workpiece W is irradiated with the processing light EL from the second direction D#2.

When at least one of the processing head 13 and the stage 15 moves, the relative positional relationship between the processing light EL and the workpiece W changes. In this case, the processing system SYS may be considered to change the relative positional relationship between the processing light EL and the workpiece W to a positional relationship in which the processing unit 1 can irradiate the workpiece W with the processing light EL from the third direction D#3 relative to the workpiece W.

Then, the processing system SYS may irradiate the workpiece W (especially, the third surface Ws#3 of the workpiece W) with the processing light EL from the third direction D#3 relative to the workpiece W. Specifically, the processing system SYS may irradiate a third boundary BD#3 between the removal target part WP1 and the remaining part WP2 with the processing light EL from the third direction D#3 through the third surface Ws#3 of the workpiece W. Namely, the processing system SYS may irradiate a third boundary area BDM#3 of the workpiece W positioned at the third boundary BD#3 with the processing light EL. As a result, as illustrated in FIG. 25, the third boundary area BDM#3 is removed and the groove GV#3 extending along the third direction D#3 is formed at the third boundary BD#3. Namely, the groove GV#3 whose depth direction is the third direction D#3 is formed at the third boundary BD#3.

After the groove GV#3 is formed, the groove GV#1 to the groove GV#3 are connected to one another. As a result, a series of grooves GV is formed at the boundary BD between the removal target part WP1 and the remaining part WP2 by the grooves GV#1 to GV#3 that are connected to one another. As a result, as illustrated in FIG. 25, the removal target part WP1 is separated from the remaining part WP2 through a series of grooves GV formed by the grooves GV#1 to GV#3. Namely, the removal target part WP1 is removed from the workpiece W.

Thus, in the third specific example, the processing system SYS can remove the removal target part WP1 from the workpiece W by forming three or more grooves GV. Therefore, the processing system SYS can appropriately remove the removal target part WP1, which cannot be easily removed by simply forming two or less grooves GVs, as illustrated in FIG. 20 to FIG. 25. For example, as illustrated in FIG. 20 to FIG. 25, the processing system SYS can appropriately remove the removal target part WP1 having shape, which is difficult to be removed by simply forming two or less grooves GVs. Therefore, the processing system SYS can efficiently remove the removal target part WP1 having various shapes from the workpiece W. For example, as illustrated in FIG. 20 to FIG. 25, the processing system SYS can appropriately remove the removal target part WP1 that exists in a position where it is difficult to remove it by simply forming two or less grooves GV. Therefore, the processing system SYS can efficiently remove the removal target part WP1 that exist in various positions from the workpiece W.

Incidentally, in the example illustrated in FIG. 19, the groove GV#1 may be regarded as a groove extending from the third surface Ws#3 along the third direction D#3. In this case, the processing system SYS may form the groove GV#1 extending from the third surface Ws#3 along the third direction D#3, the groove GV#2 extending from the second surface Ws#2 along the second direction D#2, and the groove GV#3 extending from the third surface Ws#3 along the third direction D#3. For example, the processing system SYS may form the groove GV#1 extending from the third surface Ws#3 along the third direction D#3 by irradiating the third surface Ws#3 with the processing light EL, form the groove GV#2 extending from the second surface Ws#2 along the second direction D#2 by irradiating the second surface Ws#2 with the processing light EL, and form the groove GV#3 extending from the third surface Ws#3 along the third direction D#3 by irradiating the third surface Ws#3 with the processing light EL.

Similarly, in the example illustrated in FIG. 19, the groove GV#2 may be regarded as a groove extending from the first surface Ws#1 along the first direction D#1. In this case, the processing system SYS may form the groove GV#1 extending from the first surface Ws#1 along the first direction D#1, the groove GV#2 extending from the first surface Ws#1 along the first direction D#1, and the groove GV#3 extending from the third surface Ws#3 along the third direction D#3. For example, the processing system SYS may form the groove GV#1 extending from the first surface Ws#1 along the first direction D#1 by irradiating the first surface Ws#1 with the processing light EL, form the groove GV#2 extending from the first surface Ws#1 along the first direction D#1 by irradiating the first surface Ws#1 with the processing light EL, and form the groove GV#3 extending from the third surface Ws#3 along the third direction D#3 by irradiating the third surface Ws#3 with the processing light EL.

Similarly, in the example illustrated in FIG. 19, the groove GV#3 may be regarded as a groove extending from the second surface Ws#2 along the second direction D#2. In this case, the processing system SYS may form the groove GV#1 extending from the first surface Ws#1 along the first direction D#1, the groove GV#2 extending from the second surface Ws#2 along the second direction D#2, and the groove GV#3 extending from the second surface Ws#2 along the second direction D#2. For example, the processing system SYS may form the groove GV#1 extending from the first surface Ws#1 along the first direction D#1 by irradiating the first surface Ws#1 with the processing light EL, form the groove GV#2 extending from the second surface Ws#2 along the second direction D#2 by irradiating the second surface Ws#2 with the processing light EL, and form the groove GV#3 extending from the second surface Ws#2 along the second direction D#2 by irradiating the second surface Ws#2 with the processing light EL.

### (2-2-3) Flow of Second Subtractive Manufacturing

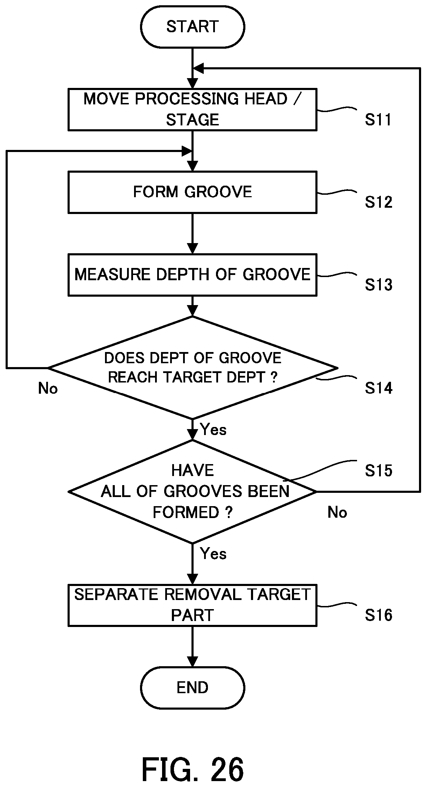

Next, with reference to FIG. 26, a flow of the second subtractive manufacturing will be described. FIG. 26 is a flowchart that illustrates the flow of the second subtractive manufacturing.

As illustrated in FIG. 26, the control unit 2 moves at least one of the processing head 13 and the stage 15 so that the irradiation direction of the processing light EL relative to the workpiece W is set to a desired direction (a step S11). For example, the control unit 2 moves at least one of the processing head 13 and the stage 15 so that the irradiation direction of the processing light EL is the same as the depth direction of the groove GV that is being formed from now.

Then, the processing unit 1 forms the groove GV in the workpiece W by irradiating the workpiece W with the processing light EL under the control of the control unit 2 (a step S12). For example, in a case where the above-described groove GV#1 is formed, the processing unit 1 forms the groove GV#1 by irradiating the first boundary area BDM#1 of the workpiece W positioned at the first boundary BD#1 with the processing light EL in sequence. In this process, the processing unit 1 forms the groove GV#1 by gradually removing the first boundary area BDM#1 of the workpiece W along the depth direction of the groove GV#1. Therefore, the processing unit 1 gradually removes the first boundary area BDM#1 of the workpiece W so that the depth of the groove GV#1 gradually increases. Even in a case where other grooves GV#2 or GV#3 different from the groove GV#1 is formed, the processing unit 1 may perform the same operation.

In a case where the processing system SYS processes the workpiece W so that the depth of each of the grooves GV#1 and GV#2 gradually increases, the processing system SYS may form the whole of the groove GV#1 and then form the whole of the groove GV#2. The processing system SYS may form a part of the groove GV#1, then form a part of the groove GV#2, then form another part of the groove GV#1, and then form another part of the groove GV#2. Namely, the processing system SYS may alternately perform an operation for forming a part of the groove GV#1 and an operation for forming a part of the groove GV#2. Alternatively, the processing system SYS may form a part of the groove GV#1, then form the whole of the groove GV#2, and then form another part of the groove GV#1.

In a case where the processing system SYS processes the workpiece W so that the depth of each of the grooves GV#1, GV#2 and GV#3 gradually increases, the processing system SYS may form the whole of the groove GV#1, then form the whole of the groove GV#2, and then form the whole of the groove GV#3. The processing system SYS may form a part of the groove GV#1, then form a part of the groove GV#2, then form a part of the groove GV#3, then form a part of the groove GV#1, then form another part of the groove GV#2, and then form another part of the groove GV#3. Namely, the processing system SYS may alternately perform an operation for forming a part of the groove GV#1, an operation for forming a part of the groove GV#2, and an operation for forming a part of the groove GV#3. Alternatively, the processing system SYS may form a part of the groove GV#1, then form a part or the whole of the groove GV#2, then form a part or the whole of the groove GV#3, and then form another part of the groove GV#1.

After starting to form the groove GV, the processing system SYS measures the depth (namely, a size in the depth direction) of the already-formed groove GV (a step S13). Namely, the processing system SYS may measure the depth of the groove GV in the process of forming (the step S13). In order to measure the depth of the groove GV, the processing unit 1 may irradiate the already-formed groove GV with the measurement light ML. Namely, the processing unit 1 may emit the measurement light ML into the already-formed groove GV. Then, the control unit 2 may calculate (namely, measure) the depth of the groove GV based on the detected result by the detector 1326 of the returned light RL of the measurement light ML returning from the groove GV.

In order to accurately measure the depth of the groove GV, the processing unit 1 may irradiate the groove GV with the measurement light ML so that the measurement light ML reaches deep into the groove GV (typically, reaches to a bottom of the groove GV). For example, the processing unit 1 may irradiate the groove GV with the measurement light ML so that an irradiation direction of the measurement light ML is a direction that is the same as the depth direction of the groove GV. Namely, the processing unit 1 may irradiate the groove GV with the measurement light ML from a direction that is the as the depth direction of the groove GV. In this case, there is a higher possibility that the measurement light ML reaches deeper into the groove GV (typically, reaches the bottom of the groove GV), compared to a case where the irradiation direction of the measurement light ML is a direction that is different from the depth direction of the groove GV. Therefore, the processing system SYS can measure the depth of the groove GV more accurately, compared to a case where the irradiation direction of the measurement light ML is the direction that is different from the depth direction of the groove GV.

As one example, in a case where the above-described groove GV#1 is formed, the processing unit 1 may irradiate the groove GV#1 with the measurement light ML so that the irradiation direction of the measurement light ML is a direction that is the same as the depth direction of the groove GV#1 (for example, is the first direction D#1). As a result, the processing system SYS can accurately measure the depth of the groove GV#1. As another example, in a case where the above-described groove GV#2 is formed, the processing unit 1 may irradiate the groove GV#2 with the measurement light ML so that the irradiation direction of the measurement light ML is a direction that is the same as the depth direction of the groove GV#2 (for example, is the second direction D#2). As a result, the processing system SYS can accurately measure the depth of the groove GV#2. As one example, in a case where the above-described groove GV#3 is formed, the processing unit 1 may irradiate the groove GV#3 with the measurement light ML so that the irradiation direction of the measurement light ML is a direction that is the same as the depth direction of the groove GV#3 (for example, is the third direction D#3). As a result, the processing system SYS can accurately measure the depth of the groove GV#3.

The processing system SYS may measure the depth of the already-formed groove GV in at least a part of a period during which the workpiece W is actually irradiated with the processing light EL to form the groove GV. Namely, the processing system SYS may perform an operation for forming the groove GV by using the processing light EL and an operation for measuring the depth of the groove GV by using the measurement light ML in parallel. Alternatively, the processing system SYS may temporarily stop an operation for irradiating the workpiece W with the processing light EL and then measure the depth of the already-formed groove GV.

The processing system SYS may measure the depth of the already-formed groove GV each time a predetermined time elapses after starting to form the groove GV. Alternatively, the processing system SYS may measure the depth of the already-formed groove GV every time a random amount of time elapses after starting to form the groove GV.

The processing system SYS may estimate the depth of the already-formed groove GV and measure the depth of the already-formed groove GV at a timing determined based on the estimated depth of the groove GV. For example, the control unit 2 generates or acquires processing control information indicating a processing condition for forming the groove GV, and forms the groove by controlling the operation of the processing unit 1 based on the processing control information. The processing control information may include processing path information indicating a processing path (a so-called tool path) indicating the irradiation position of the processing light EL, for example. In this case, the control unit 2 may estimate the depth of the already-formed groove GV based on the processing control information. Alternatively, a removed amount per unit time by the processing unit 1 is larger as an intensity of the processing light EL is higher. Therefore, the control unit 2 may estimate the depth of the already-formed groove GV based on the intensity of the processing light EL. Alternatively, the depth of the groove GV is expected to be deeper as an elapsed time period after the processing unit 1 starts the subtractive manufacturing is longer. Therefore, the control unit 2 may estimate the depth of the already-formed groove GV based on the elapsed time period after the processing unit 1 starts the subtractive manufacturing.

The processing system SYS may actually measure the depth of the already-formed groove GV at a timing at which the estimated depth of the groove GV reaches a target depth of the groove GV. Namely, the processing system SYS may actually measure the depth of the already-formed groove GV at a timing at which the groove GV depth is estimated to reach the target depth of the groove GV. In this case, the processing system SYS may not necessarily perform the operation for measuring the depth of the groove GV more than necessary. Namely, the processing system SYS can reduce the number of times by which the operation for measuring the depth of the groove GV is performed. In this case, a throughput of the processing system SYS is improved, considering that a certain amount of time period is required to measure the depth of the groove GV.

The processing system SYS may actually measure the depth of the already-formed groove GV before the estimated depth of the groove GV reaches the target depth. Namely, the processing system SYS may actually measure the depth of the already-formed groove GV before the depth of the groove GV reaches the target depth. Namely, the processing system SYS may actually measure the depth of the groove GV which is formed in the process of forming the groove GV having the target depth and whose depth is shallower than the target depth,. In other words, the processing system SYS may actually measure the depth of the groove GV in the process of forming. In this case, there is a lower possibility that the depth of the groove GV exceeds the target depth more than necessary. Therefore, the processing system SYS can appropriately form the groove GV having the target depth.

In a case where the depth of the groove GV is actually measured before the estimated depth of the groove GV reaches the target depth, the processing system SYS may actually measure the depth of the already-formed groove GV after the estimated depth of the groove GV reaches a predetermined depth that is shallower than the target depth. For example, the processing system SYS may actually measure the depth of the already-formed groove GV after the estimated depth of the groove GV reaches the predetermined depth that is obtained by multiplying the target depth by a factor that is smaller than 1. In this case, the processing system SYS may form the groove GV based on the above-described processing control information until the estimated depth of the groove GV reaches the predetermined depth. On the other hand, after the estimated depth of the groove GV reaches the predetermined depth, the processing system SYS may form the groove GV based on both of the processing control information and the measured result of the depth of the already-formed groove GV. In this case, the processing system SYS can form the groove GV based on the measured result of the depth of the already-formed groove GV, and therefore can accurately form the groove GV having the target depth.

In a case where the depth of the groove GV is actually measured before the estimated depth of the groove GV reaches the target depth, the processing system SYS may measure the depth of the groove GV so that a frequency of measuring the depth of the already-formed groove GV is higher as the estimated depth of the groove GV is closer to the target depth. Namely, the processing system SYS may measure the depth of the groove GV so that the frequency of measuring the depth of the already-formed groove GV is higher as a difference between the estimated depth of the groove GV and the target depth is smaller. In this case, the processing system SYS may not necessarily perform the operation for measuring the depth of the groove GV more than necessary in a situation where there is a low possibility that the depth of the groove GV reaches the target depth because the difference between the estimated depth of the groove GV and the target depth is relatively large. On the other hand, the processing system SYS can appropriately measure the depth of the groove GV so that the depth of the groove GV does not exceed the target depth more than necessary in a situation where there is a possibility that the depth of the groove GV reaches the target depth because the difference between the estimated depth of the groove GV and the target depth is relatively small.. Therefore, the processing system SYS can appropriately form the groove GV having the target depth while improving the throughput of the processing system SYS to some extent.

Then, the control unit 2 determines whether or not the depth of the groove GV measured at the step S13 reaches the target depth (a step S14). Incidentally, the target depth may be set for each groove GV. For example, in a case where the above-described groove GV#1 is formed, the control unit 2 may determine whether or not the depth of the groove GV#1 reaches a first target depth that is the target depth of the groove GV#1. For example, in a case where the above-described groove GV#2 is formed, the control unit 2 may determine whether or not the depth of the groove GV#2 reaches a second target depth that is the target depth of the groove GV#2. For example, in a case where the above-described groove GV#3 is formed, the control unit 2 may determine whether or not the depth of the groove GV#3 reaches a third target depth that is the target depth of the groove GV#3.

Note that the target depth may indicate a target value itself of the depth of the groove. In this case, the control unit 2 may determine whether or not the depth of the groove GV measured at the step S13 reaches the target value indicated by the target depth.

Alternatively, the target depth may indicate a range of the target value of the depth of the groove. In this case, the control unit 2 may determine whether or not the depth of the groove GV measured at the step S13 reaches a value that is included in the range of the target value indicated by the target depth. For example, the control unit 2 may determine whether or not the depth of the groove GV measured at the step S13 reaches a minimum value, a median value, a maximum value, or any other value of the range of the target value indicated by the target depth. In a case where the target depth indicates the range of the target value of the depth of the groove, the processing system SYS can form the groove GV having an appropriate depth in a case where at least one of a processing rate and a measurement rate varies. Especially, the processing system SYS can form the plurality of grooves GV having an appropriate depth in a situation where it is not easy to make the depths of the plurality of the grooves GV be equal to each other due to a variation of at least one of the processing rate and the measurement rate.

As a result of the determination at the step S14, in a case where it is determined that the depth of the groove GV does not reached the target depth (the step S14: No), the processing unit 1 continues the operation at the step S12 for forming the groove GV (the step S12). Namely, the processing unit 1 continues to form the groove GV so that the depth of the groove GV is closer to the target depth. As a result, the processing unit 1 continues the operation for forming the groove GV by irradiating the workpiece W with the processing light EL until the depth of the groove GV measured at the step S13 reaches the target depth. Namely, the processing system SYS substantially alternately repeats the operation for forming the groove GV by irradiating the workpiece W with the processing light EL (the step S12) and the operation for measuring the depth of the groove GV by irradiating the groove GV with the measurement light ML (the step S13). In this case, the processing system SYS may be considered to form the groove GV having the target depth by using the measured result of the depth of the groove GV and the processing light EL.

In a case where it is determined that the depth of the groove GV does not reach the target depth, the control unit 2 may control the processing unit 1 based on the measured result of the depth of the groove GV and the target depth of the groove GV. Namely, the control unit 2 may control the irradiation of the processing light EL by the processing unit 1 to the workpiece W based on the measured result of the depth of the groove GV and the target depth of the groove GV. For example, the control unit 2 may control an irradiation aspect of the processing light EL so that the depth of the groove GV reaches the target depth. The irradiation aspect of the processing light EL may include at least one of the intensity of the processing light EL, an intensity distribution of the processing light EL in a plane intersecting the propagating direction of the processing light EL, an irradiation time period of the processing light EL, and a movement speed of the irradiation position of the processing light EL (namely, a scanning speed of the processing light EL). In a case where the processing light EL includes the pulsed light, the irradiation aspect of the processing light EL may include at least one of an ON time (namely, a pulse width) of the pulse light and a duty ratio of the pulsed light.

On the other hand, as a result of the determination at the step S14, in a case where it is determined that the depth of the groove GV reaches the target depth (the step S14: Yes), the processing unit 1 may not continue the operation at the step S12 for forming the groove GV.

However, even in a case where it is determined that the depth of the groove GV reaches the target depth, the processing unit 1 may continue the operation at the step S12 for forming the groove GV. In this case, the processing system SYS may form the groove GV having the depth that is deeper than the target depth.

Then, the control unit 2 determines whether or not the processing unit 1 has formed all of the grooves GV that should be formed on the workpiece W (a step S15). For example, in a case where the first specific example of the second subtractive manufacturing illustrated in FIG. 9 or the second specific example of the second subtractive manufacturing illustrated in FIG. 14 described above is performed, the control unit 2 determines whether or not the processing unit 1 has formed all of the two grooves GV#1 and GV#2. For example, in a case where the third specific example of the second subtractive manufacturing illustrated in FIG. 19 described above is performed, the control unit 2 determines whether or not the processing unit 1 has formed all of the three grooves GV#1 to GV#3.

As a result of the determination at the step S15, in a case where it is determined that the processing unit 1 has not yet formed all of the grooves GV that should be formed on the workpiece W (the step S15: No), the processing system SYS performs the operations from the step S11 to the step S14 again in order to form the unformed groove GV on the workpiece W. Namely, the processing system SYS repeats the operations from the step S11 to the step S14 until all of the grooves GV that should be formed on the workpiece W have been formed on the workpiece W. For example, in a case where the first specific example of the second subtractive manufacturing illustrated in FIG. 9 or the second specific example of the second subtractive manufacturing illustrated in FIG. 14 described above is performed, the processing system SYS performs an operation for forming the groove GV#1 until the depth of the groove GV#1 reaches the first target depth that is the target depth of the groove GV#1, and performs an operation for forming the groove GV#2 until the depth of the groove GV#2 reaches the second target depth that is the target depth of the groove GV#2. For example, in a case where the third specific example of the second subtractive manufacturing illustrated in FIG. 14 described above is performed, the processing system SYS performs the operation for forming the groove GV#1 until the depth of the groove GV#1 reaches the first target depth that is the target depth of the groove GV#1, performs the operation for forming the groove GV#2 until the depth of the groove GV#2 reaches the second target depth that is the target depth of the groove GV#2, and performs an operation for forming the groove GV#3 until the depth of the groove GV#3 reaches the third target depth that is the target depth of the groove GV#3.

Here, in a case where the plurality of the grooves GV are formed, the processing system SYS may control, based on the measured result of the depth of one groove GV, the operation for form another groove GV that is different from the one groove GV. For example, in a case where the depth of the one groove GV exceeds the target depth, the control unit 2 may change the target depth of the another groove GV. As one example, the control unit 2 may change the target depth of the another groove GV to a new target depth that is determined based on the depth of the one groove GV. As one example, in a case where the depth of the one groove GV exceeds the target depth of 3.0 mm to be 3.1 mm, the control unit 2 may change the target depth of the another groove GV from 3.0 mm to 3.1 mm. In this case, the processing system SYS can adjust the depth of the groove GV that is to be formed from now to be equal to the depth of the already-formed groove GV. As a result, even in a case where the depth of the already-formed groove GV exceeds the target depth, the processing system SYS can appropriately form the groove GV so that the removal target part WP1 is separated from the remaining part WP2.

On the other hand, as a result of the determination at the step S15, in a case where it is determined that the processing unit 1 has already formed all of the grooves GV that should be formed on the workpiece W (the step S15: Yes), the removal target part WP1 is separated from the remaining part WP2 (a step S16).

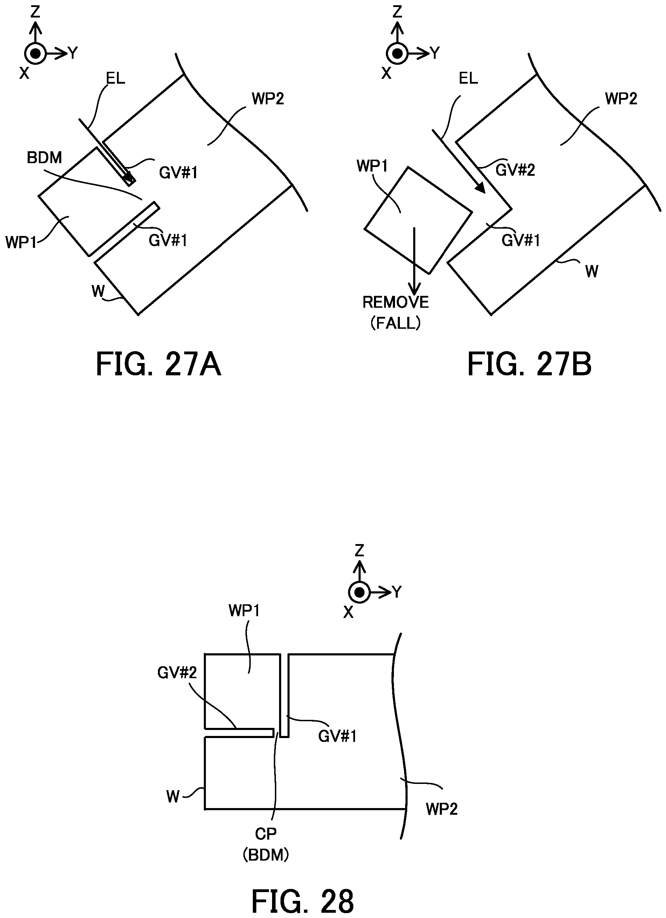

In this case, the processing system SYS may separate the removal target part WP1 from the remaining part WP2 so that the removal target part WP1, which is separated from the remaining part WP2 by a series of grooves GV, falls from the remaining part WP2 due to gravity. For example, FIG. 27A illustrates the workpiece W in the process of performing the second specific example of the subtractive manufacturing illustrated in FIG. 14. In the process of performing the second subtractive manufacturing, the removal target part WP1 and the remaining part WP2 are connected through at least a part of the boundary area BDM of the workpiece W positioned at the boundary BD. Therefore, the removal target part WP1 does not basically fall from the remaining part WP2 due to the gravity until the second subtractive manufacturing is completed. Then, after the second subtractive manufacturing is completed, the removal of the boundary area BDM of the workpiece W is completed, as illustrated in FIG 27B. Namely, the formation of the groove GV for separating the removal target part WP1 from the remaining part WP2 is completed. As a result, the removal target part WP1 is separated from the remaining part WP2 through the groove GV, and therefore the removal target part WP1 falls from the remaining part WP2 due to the gravity.

In a case where the removal target part WP1 is separated from the remaining part WP2 by the removal target part WP1 falling from the remaining part WP2, the processing system SYS may control (typically, change) the placement angle of the stage 15 on which the workpiece W is placed so that the removal target part WP1 falls from the remaining part WP2. Namely, the processing system SYS may control the placement angle of the stage 15 to allow the removal target part WP1 to fall from the remaining part WP2.

In this case, the processing system SYS may control the placement angle of the stage 15 so that the removal target part WP1 fall from the remaining part WP2 by passing through a position that is different from the optical path of the processing light EL, as illustrated in FIG. 27A. Namely, the processing system SYS may control the placement angle of the stage 15 so that a falling path of the removal target part WP1 does not intersect the optical path of the processing light EL. The processing system SYS may control the placement angle of the stage 15 so that the falling removal target part WP1 does not pass through the optical path of the processing light EL. The processing system SYS may control the placement angle of the stage 15 so that the falling removal target part WP1 does not shield the optical path of the processing light EL. The processing system SYS may control the placement angle of the stage 15 so that the removal target part WP1 falls through a position that is not irradiated with the processing light EL. The processing system SYS may control the placement angle of the stage 15 so that the removal target part WP1 falls through a position at which the processing using the processing light EL is not performed. In this case, the optical path of the processing light EL is not shielded by the falling removal target part WP1. Therefore, the processing light EL is not shielded by the falling removal target part WP1. As a result, even when the removal target part WP1 falls, the subtractive manufacturing of the workpiece W by the processing system SYS is not disturbed. Namely, even when the removal target part WP1 falls, the processing system SYS can appropriately continue the subtractive manufacturing of the workpiece W.

Considering such an effect that the subtractive manufacturing of the workpiece W is not disturbed, the processing system SYS may control the placement angle of the stage 15 so that the removal target part WP1 falls by passing through a position that allows the removal target part WP1 not to disturb the processing using the processing light EL.

Incidentally, not only in a period during which the removal target part WP1 falls, but also in a period during which the groove GV is formed, the processing system SYS may control the placement angle of the stage 15 so that the removal target part WP1 does not shield the optical path of the processing light EL. The processing system SYS may move the processing head 13 so that the removal target part WP1 does not shield the optical path of the processing light EL, in addition to or instead of controlling the placement angle of the stage 15. Namely, the processing system SYS may change the relative positional relationship between the workpiece W and the processing light EL by moving at least one of the processing head 13 and the stage 15 so that the removal target part WP1 does not shield the optical path of the processing light EL. In this case, the subtractive manufacturing of the workpiece W by the processing system SYS is not disturbed by the removal target part WP1 in the period during which the groove GV is formed. Therefore, the processing system SYS can appropriately perform the subtractive manufacturing of the workpiece W.

As one example, the processing system SYS gradually forms the groove GV by gradually removing the boundary area BDM of the workpiece W positioned at the boundary BD between the removal target part WP1 and the remaining part WP2 as described above. In this case, the boundary area BDM connecting the removal target part WP1 and the remaining part WP2 gradually becomes smaller as the groove GV is formed gradually more. As a result, there is a higher possibility that the removal target part WP1 moves relative to the remaining part WP2 due to the gravity or the like as the boundary area BDM is smaller. For example, there is a possibility that the removal target part WP1 moves so that the width of the groove GV becomes narrower. In this case, there is a possibility that the processing light EL does not reach deep into the groove GV (typically, does not reach the bottom of the groove GV) due to the narrowing of the groove GV. As a result, there is a possibility that the processing system SYS cannot form the groove GV having the target depth. Therefore, the processing system SYS may change the relative positional relationship between the workpiece W and the processing light EL so that the removal target part WP1 does not shield the optical path of the processing light EL. For example, the processing system SYS may change the relative positional relationship between the workpiece W and the processing light EL so that the width of the groove GV is not narrowed by the movement of the removal target part WP1 toward an unintended direction. As a result, the processing system SYS can appropriately perform the subtractive manufacturing of the workpiece W.

As illustrated in FIG. 28, the processing system SYS may complete the formation of the groove GV so that at least a part of the boundary area BDM of the workpiece W positioned at the boundary BD remains as a connection part CP that connects the removal target part WP1 and the remaining part WP2. In this case, even when the formation of the groove GV is completed, the removal target part WP1 does not fall because the removal target part WP1 and the remaining part WP2 are connected through the connection part CP. Therefore, the processing system SYS can prevent an unintended falling (separation) of the removal target part WP1 at an unintended timing. As a result, since the unintended separation of the removal target part WP1 is prevented, the processing system SYS can ensure that the removal target part WP1 does not shield the optical path of the processing light EL.

The processing system SYS may form two or more grooves GV so that the connection part CP is positioned between the two or more grooves GV. In the example illustrated in FIG. 28, the processing system SYS may form two grooves GV#1 and GV#2 so that the connection part CP is positioned between the two grooves GV#1 and GV#2. Furthermore, in the example illustrated in FIG. 28, the processing system SYS may form three grooves GV#1, GV#2 and GV#3 so that the connection part CP is positioned between at least two of the three grooves GV#1, GV#2 and GV#3.

The control unit 2 may set a size of the connection part CP based on a size of the removal target part WP1. For example, the control unit 2 may set the size of the connection part CP to be 1/30 to 1/100 of the size of the removal target part WP1. As one example, in a case where the size of the removal target part WP1 is from 10 mm to 20 mm, the control unit 2 may leave the connection part CP whose size is from 0.2 mm to 0.3 mm.

The control unit 2 may set a volume of the connection part CP based on a volume of the groove GV. For example, the control unit 2 may set the volume of the connection part CP so that the volume of the connection part CP is smaller than the volume of the groove GV.

In a case where the removal target part WP1 is connected to the remaining part WP2 through the connection part CP, the processing system SYS may remove the connection part CP by irradiating the connection part CP with the processing light EL at a desired timing. In this case, the processing system SYS may allow the removal target part WP1 to fall (namely, to be separated from the remaining part WP2) at the desired timing.

Alternatively, the processing system SYS may change the placement angle of the stage 15 so that the connection part CP is broken by the self-weight of the removal target part WP1. Alternatively, in a case where the processing system SYS includes a transport apparatus such as a robotic hand, the processing system SYS may use the transport apparatus to separate the removal target part WP1 from the remaining part WP2 so that a force for breaking the connection part CP is applied to the connection part CP. Even in this case, the processing system SYS can separate the removal target part WP1 from the remaining part WP2 at the desired timing.

Alternatively, the user of the processing system SYS may separate the removal target part WP1 from the remaining part WP2 so that the force for breaking the connection part CP is applied to the connection part CP. Even in this case, the user of the processing system SYS can separate the removal target part WP1 from the remaining part WP2 at the desired timing.

The processing system SYS may include a support member that supports the removal target part WP1 in order to prevent the connection part CP from breaking and the removal target part WP1 from falling at an unintended timing.

The control unit 2 may determine based on the measured result of the depth of the groove GV whether or not the processing of the workpiece W is completed. Namely, the control unit 2 may determine based on the measured result of the depth of the groove GV whether the removal of the removal target part WP1 from the workpiece W is completed. For example, the control unit 2 may determine that the processing of the workpiece W is completed in a case where the depths of all measured grooves GV reach the target depth. For example, the control unit 2 may determine that the removal of the removal target part WP1 from the workpiece W is completed in a case where the depths of all measured grooves GV reach the target depth. For example, the control unit 2 may determine that the processing of the workpiece W is not completed in a case where the depth of at least one measured groove GV does not reach the target depth. For example, the control unit 2 may determine that the removal of the removal target part WP1 from the workpiece W is not completed in a case where the depth of at least one measured groove GV does not reach the target depth.

Alternatively, the processing system SYS may measure the removal target part WP1 by using the measurement light ML in order to determine whether or not the processing of the workpiece W is completed. Considering that the removal target part WP1 falls after all the grooves GV are formed as described above, the control unit 2 may determine that the processing of the workpiece W is completed in a case where the measured result by the measurement light ML indicates that the removal target part WP1 has fallen (namely, the removal target part WP1 that is a part of the workpiece W does not exist with the workpiece W).

After removing the removal target part WP1 from the remaining part WP2, the processing system SYS may further perform a second subtractive manufacturing on the remaining part WP2. In a case where it is determined that the processing of the workpiece W is completed, the processing system SYS may further perform the second subtractive manufacturing on the remaining part WP2. Namely, the processing system SYS may perform the second subtractive manufacturing for separating a new removal target part WP1, which corresponds to a part of the remaining part WP2, from the remaining part WP2.

After removing the removal target part WP1 from the remaining part WP2, the processing system SYS may further perform a second subtractive manufacturing on the removal target part WP1. In a case where it is determined that the processing of the workpiece W is completed, the processing system SYS may further perform the second subtractive manufacturing on the removal target part WP1. Namely, the processing system SYS may perform the second subtractive manufacturing for separating a new removal target part WP1, which corresponds to a part of the removal target part WP1, from the removal target part WP1.

### (2-2-4) Switching of Processing Mode

As described above, the processing system SYS may switch the processing mode between the first subtractive manufacturing mode and the second subtractive manufacturing mode. In this case, the processing system SYS may switch the processing mode of the processing system SYS according to a first and second switching methods described below.

### (2-2-4-1) First Switching Method of Switching Processing Mode

As described above, the processing system SYS can efficiently remove the large-sized removal target part WP1 from the workpiece W by performing the second subtractive manufacturing. On the other hand, in a case where the second subtractive manufacturing is performed, the processing system SYS removes the removal target part WP1 from the workpiece W by forming the groove GV. Therefore, a shape of the remaining part WP2 from which the removal target part WP1 is removed has a shape having a surface defining the groove GV. Therefore, the second subtractive manufacturing is subject to a certain restriction of the shape of the remaining part WP2, compared to the first subtractive manufacturing. Therefore, there is a possibility that the second subtractive manufacturing cannot make the shape of the remaining part WP2 be the same as the target shape, compared to the first subtractive manufacturing. Namely, there is a possibility that an accuracy of the shape of the remaining part WP2 formed by the second subtractive manufacturing is lower than an accuracy of the shape of the remaining part WP2 formed by the first subtractive manufacturing.

Incidentally, the accuracy of the shape of the remaining part WP2 here is an index value for evaluating whether the actual shape of the remaining part WP2 is close to the target shape of the remaining part WP2. The accuracy of the shape of the remaining part WP2 may be an index value that becomes higher as the actual shape of the remaining part WP2 is closer to the target shape of the remaining part WP2. The accuracy of the shape of the remaining part WP2 may be an index value that is higher as a difference between the actual shape of the remaining part WP2 and the target shape of the remaining part WP2 is smaller.

Therefore, the processing system SYS may switch the processing mode of the processing system SYS between the first subtractive manufacturing mode and the second subtractive manufacturing mode based on the size of the removal target part WP1 that should be removed from the workpiece W. Namely, the first switching method of switching the processing mode may be a method of switching the processing mode based on the size of the removal target part WP1.

In this case, the control unit 2 may calculate the size of the removal target part WP1. For example, the control unit 2 may calculate the size of the removal target part WP1 based on model data (for example, CAD (Computer Aided Design) data) indicating a three-dimensional model of the removal target part WP1. Alternatively, the size of the removal target part WP1 may be input into the processing system SYS by the user of the processing system SYS. In this case, the control unit 2 may acquire information related to the size of the removal target part WP1 input by the user.

Then, the control unit 2 may select one of the first and second subtractive manufacturing modes as the processing mode of the processing system SYS based on the size of the removal target part WP1. Namely, the control unit 2 may set the processing mode of the processing system SYS to one of the first and second subtractive manufacturing modes based on the size of the removal target part WP1.

For example, in a case where the size of the removal target part WP1 exceeds a predetermined size, the processing system SYS may select the second subtractive manufacturing mode as the processing mode of the processing system SYS. Namely, the processing system SYS may prioritize an efficient removal of the removal target part WP1 over an improvement of the accuracy of the shape of the remaining part WP2. As a result, the processing system SYS can efficiently remove, from the workpiece W, the removal target part WP1 whose size is so large that it exceeds the predetermined size.

For example, in a case where the size of the removal target part WP1 does not exceed the predetermined size, the processing system SYS may select the first subtractive manufacturing mode as the processing mode of the processing system SYS. In this case, the processing system SYS may prioritize the improvement of the accuracy of the shape of the remaining part WP2 over the efficient removal of the removal target part WP1. As a result, the processing system SYS can remove the removal target part WP1 while preventing a deterioration of the accuracy of the shape of the remaining part WP2.

Then, the control unit 2 may control the processing unit 1 to remove the removal target part WP1 in the selected processing mode. For example, in a case where the size of the removal target part WP1 exceeds the predetermined size, the control unit 2 may control the processing unit 1 to remove the removal target part WP1 in the second subtractive manufacturing mode. For example, in a case where the size of the removal target part WP1 does not exceed the predetermined size, the control unit 2 may control the processing unit 1 to remove the removal target part WP1 in the first subtractive manufacturing mode.

Incidentally, the control unit 2 may present the selected processing mode to the user of the processing system SYS before controlling the processing unit 1 to remove the removal target part WP1 in the selected processing mode. The user may decide whether or not the processing unit 1 removes the removal target part WP1 in the processing mode selected by the control unit 2.

### (2-2-4-2) Second Switching Method of Switching Processing Mode

The processing system SYS may switch the processing mode of the processing system SYS between the first and second subtractive manufacturing modes so that the processing system SYS processes the workpiece W in the first subtractive manufacturing mode after processing the workpiece W in the second subtractive manufacturing mode. In this case, the processing system SYS may remove the removal target part WP1 from the remaining part WP2 by processing the workpiece W in the second subtractive manufacturing mode. Then, the processing system SYS may make the shape of the remaining part WP2 be closer to (typically, is the same as) the target shape of the remaining part WP2 by processing the remaining part WP2 in the first subtractive manufacturing mode. Namely, the processing system SYS may perform the first subtractive manufacturing as a finishing processing for the remaining part WP2 formed by the second subtractive manufacturing.

Specifically, the processing system SYS may perform the first subtractive manufacturing for removing at least a part of the remaining part WP2 by irradiating at least a part of the remaining part WP2 with the processing light EL. For example, the processing system SYS may perform the first subtractive manufacturing for removing at least a part of the remaining part WP2 by irradiating at least a part of a surface of the remaining part WP2, which is exposed outside by the removing the removal target part WP1, with the processing light EL. Note that the surface of the remaining part WP2 exposed to the outside by removing the removal target part WP1 may be referred to as a boundary surface because it formed the boundary BD between the removal target part WP1 and the remaining part WP2. Especially, the processing system SYS may perform the first subtractive manufacturing for removing at least a part of the remaining part WP2 so that the shape of the remaining part WP2 is closer to (typically, is the same as) the target shape of the remaining part WP2.

In this case, the processing system SYS can reduce the time required to remove the removal target part WP1 from the workpiece W by performing the second subtractive manufacturing and make the shape of the remaining part WP2 be closer to (typically, is the same as) the target shape of the remaining part WP2 by performing the first subtractive manufacturing. Namely, the processing system SYS can achieve both of the efficient removal of the removal target part WP1 and the improvement of the accuracy of the shape of the remaining part WP2.

In a case where the first subtractive manufacturing is performed as the finishing processing for the remaining part WP2 formed by the second subtractive manufacturing, the processing system SYS may measure a three-dimensional shape of at least a part of the remaining part WP2 formed by the second subtractive manufacturing before performing the first subtractive manufacturing. The processing system SYS may then perform the first subtractive manufacturing based on a measured result of the three-dimensional shape of at least a part of the remaining part WP2. For example, the processing system SYS may perform the first subtractive manufacturing based on the measured result of the three-dimensional shape of at least a part of the remaining part WP2 so that the shape of the remaining part WP2 is closer to (typically, is the same as) the target shape. In this case, the processing system SYS can appropriately make the shape of the remaining part WP2 be closer to (typically, be the same as) the target shape by the first subtractive manufacturing, because the actual three-dimensional shape of the remaining part WP2 is actually measured.

In order to measure the three-dimensional shape of at least a part of the remaining part WP2, the processing unit 1 may irradiate at least a part of the remaining part WP2 with the measurement light ML. For example, the processing unit 1 may irradiate at least a part of the surface (namely, the boundary surface) of the remaining part WP2, which is exposed outside by removing of the removal target part WP1, with the measurement light ML. For example, the processing unit 1 may irradiate at least a part of a surface of the remaining part WP2, which is exposed outside before the removal target part WP1 is removed, with the measurement light ML. Then, the control unit 2 may calculate (namely, measure) the three-dimensional shape of at least a part of the remaining part WP2 based on the detected result by the detector 1326 of the returned light RL of the measurement light ML returning from at least a part of the remaining part WP2. For example, the control unit 2 may calculate the three-dimensional shape of at least a part of the surface (namely, the boundary surface) of the remaining part WP2, which is exposed outside by removing the removal target part WP1. For example, the control unit 2 may calculate the three-dimensional shape of at least a part of the surface of the remaining part WP2, which is exposed outside before the removal target part WP1 is removed.

The processing system SYS may measure the three-dimensional shape of at least a part of the remaining part WP2 after the removal of the removal target part WP1 is completed. Namely, the processing system SYS may measure the three-dimensional shape of at least a part of the remaining part WP2 after an end of a processing period during which the subtractive manufacturing for removing the removal target part WP1 is performed. Alternatively, the processing system SYS may measure the three-dimensional shape of at least a part of the remaining part WP2 in at least a part of the processing period during which the subtractive manufacturing for removing the removal target part WP1 is performed. Namely, the processing system SYS may measure the three-dimensional shape of at least a part of the remaining part WP2 in at least a part of the processing period during which the workpiece W is irradiated with the processing light EL to remove the removal target part WP1. Alternatively, the processing system SYS may measure the three-dimensional shape of at least a part of the remaining part WP2 before an start of the processing period during which the subtractive manufacturing for removing the removal target part WP1 is performed.

In a case where the three-dimensional shape of at least a part of the remaining part WP2 is measured during the processing period or before the start of the processing period, the processing system SYS may measure a three-dimensional shape of at least a part of the removal target part WP1 in addition to the three-dimensional shape of at least a part of the remaining part WP2. Namely, the processing system SYS may measure a three-dimensional shape of at least a part of the workpiece W. In this case, the processing system SYS may perform the first subtractive manufacturing as the finishing processing based on a measured result of the three-dimensional shape of at least a part of the removal target part WP1 (alternatively, the three-dimensional shape of at least a part of the workpiece W), in addition to the measured result of the three-dimensional shape of at least a part of the remaining part WP2.

In a case where the first subtractive manufacturing is performed as the finishing processing for the remaining part WP2 formed by the second subtractive manufacturing, a processing accuracy of the first subtractive manufacturing performed as the finishing processing may be higher than a processing accuracy of the second subtractive manufacturing performed prior to the first subtractive manufacturing. **In** this case, the processing system SYS can appropriately make the shape of the remaining part WP2 be closer to (typically, be the same as) the target shape by the first subtractive manufacturing.

There is a possibility that the processing accuracy varies depending on a beam characteristic of the processing light EL. **In** this case, the processing system SYS may perform the first subtractive manufacturing by using the processing light EL having a first beam characteristic, and may perform the second subtractive manufacturing by using the processing light EL having a second beam characteristic that is different from the first beam characteristic. Each of the first and second beam characteristics may be set to an appropriate beam characteristic that can achieve a state in which the processing accuracy of the first subtractive manufacturing performed by using the processing light EL having the first beam characteristic is higher than the processing accuracy of the second subtractive manufacturing performed by using the processing light EL having the second beam characteristic.

A diameter of a beam spot formed by the processing light EL on the surface of the workpiece W is one example of the beam characteristic of the processing light EL. Specifically, the processing accuracy is higher as the diameter of the beam spot is smaller. Therefore, the processing system SYS may perform the first subtractive manufacturing by using the processing light EL that forms the beam spot having a first diameter on the surface of the workpiece W, and may perform the second subtractive manufacturing by using the processing light EL that forms the beam spot having a second diameter larger than the first diameter on the surface of the workpiece W. Namely, the processing system SYS may perform the second subtractive manufacturing with a second processing accuracy by using the processing light EL that forms the beam spot having the second diameter on the surface of the workpiece W, and then perform the first subtractive manufacturing with a first processing accuracy higher than the second processing accuracy by using the processing light EL that forms the beam spot having the first diameter smaller than the second diameter on the surface of the workpiece W.

**In** a case where the processing light EL includes the pulsed light, the ON time of the pulsed light (namely, the pulse width) is one example of the beam characteristic of the processing light EL. Specifically, the processing accuracy is higher as the pulse width is shorter. Therefore, the processing system SYS may perform the first subtractive manufacturing by using, as the processing light EL, the pulse light having a first pulse width, and may perform the second subtractive manufacturing by using, as the processing light EL, the pulse light having the second pulse width longer than the first pulse width. Namely, the processing system SYS may perform the second subtractive manufacturing with a second processing accuracy by using, as the processing light EL, the pulse light having the second pulse width, and then perform the first subtractive manufacturing with a first processing accuracy higher than the second processing accuracy by using, as the processing light EL, the pulse light having the first pulse width shorter than the second pulse width. processing may be performed. As one example, the processing system SYS may perform the second subtractive manufacturing with the second processing accuracy by using, as the processing light EL, the pulsed light whose pulse width is equal to or longer than milli-seconds or is equal to or longer than nano-seconds. Then, the processing system SYS may perform the first subtractive manufacturing with the first processing accuracy higher than the second processing accuracy by using, as the processing light EL, the pulsed light whose pulse width is equal to or shorter than pico-seconds or l femto-seconds.

In a case where the pulsed light whose pulse width is equal to or shorter than pico-seconds or is equal to or shorter than femto-seconds is used as the processing light EL, the processing system SYS may be considered to perform the subtractive manufacturing of the workpiece W by using the principle of the non-thermal processing as described above. Furthermore, in a case where the pulsed light whose pulse width is equal to or longer than milli-seconds or is equal to or longer than nano-seconds is used as the processing light EL, the processing system SYS may be considered to perform the subtractive manufacturing of the workpiece W by using the principle of the thermal processing as described above. In this case, the processing system SYS may perform the second subtractive manufacturing with a second processing accuracy by using the processing light EL, which can perform the subtractive manufacturing of the workpiece W by using the principle of the thermal processing. Then, the processing system SYS may perform the first subtractive manufacturing with a first processing accuracy higher than the second processing accuracy, by using the processing light EL, which can perform the subtractive manufacturing of the workpiece W by using the principle of the non-thermal processing. In this case, the continuous light may be used as the processing light EL that can perform the subtractive manufacturing of the workpiece W by using the principle of the thermal processing, in addition to or instead of the pulsed light whose pulse width is equal to or longer than milliseconds or is equal to or longer than nanoseconds or longer.

The processing accuracy in a case where the workpiece W is irradiated with the processing light EL so that a converged position of the processing light EL is positioned on the surface of the workpiece W is higher than the processing accuracy in a case where the workpiece W is irradiated with the processing light EL so that the converged position of the processing light EL is away from the surface of the workpiece W along the propagating direction of the processing light EL. In this case, the processing system SYS may perform the first subtractive manufacturing by using the processing light EL whose converged position is on the surface of the workpiece W, and may perform the second subtractive manufacturing by using the processing light EL whose converged position is away from the surface of the workpiece W.

Incidentally, the processing system SYS may perform a processing that is different from the subtractive manufacturing as the finishing processing for the remaining part WP2. For example, the processing system SYS may perform a planar processing as the finishing processing for the remaining part WP2. The planar processing may include a processing that makes at least a part of the surface of the remaining part WP2 be closer to a flat surface (namely, that smooths it). As one example, the processing system SYS may perform the planar processing that makes at least a part of the surface of the remaining part WP2 be closer to the flat surface by irradiating at least a part of the surface of the remaining part WP2 with the processing light EL to melt the material of at least a part of the surface of the remaining part WP2 and then solidifying the melted material. In this case, the planar processing may be referred to as a remelt processing because the material of at least a part of the surface of the remaining part WP2 is melted.

The processing system SYS may perform the finishing processing for the removal target part WP1, in addition to or instead of performing the finishing processing for the remaining part WP2. A detail of the finishing processing for the removal target part WP1 may be the same as a detail of the finishing processing for the remaining part WP2.

### (2-2-5) Application Example of Second Subtractive Manufacturing

Next, an application example of the second subtractive manufacturing will be described.

### (2-2-5-1) First Application Example of Second Subtractive Manufacturing

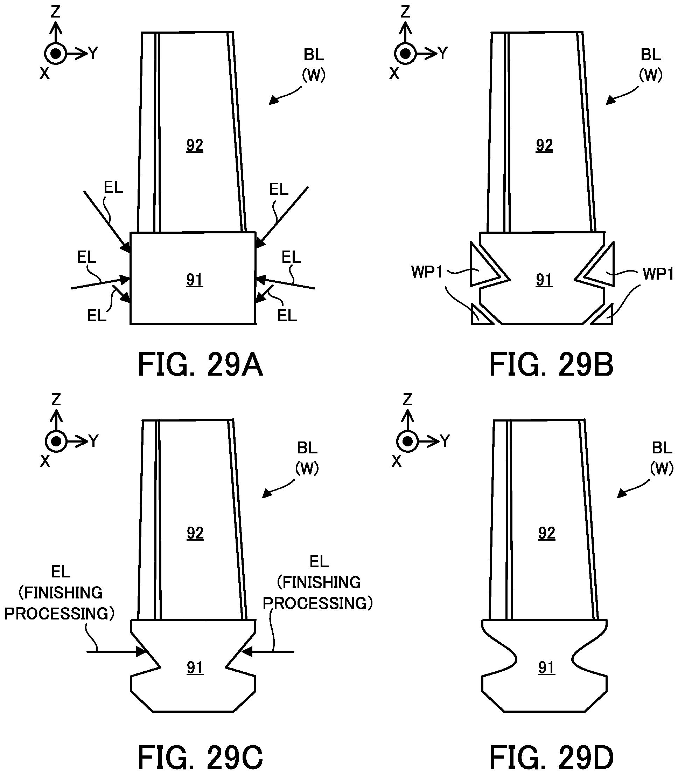

First, with reference to FIG. 29A to FIG. 29D, a first application example of the second subtractive manufacturing will be described. Each of FIG. 29A to FIG. 29D is a cross-sectional view that illustrates the workpiece W on which the first application example of the second subtractive manufacturing is performed.

As illustrated in FIG. 29A to FIG. 29D, the processing system SYS may manufacture the turbine blade BL illustrated in FIG. 4 by performing the second subtractive manufacturing on the workpiece W. For example, as illustrated in FIG. 29A, the workpiece W may include the shank 91 that does not have the target shape and the blade body 92 that is connected to the shank and that has the target shape. Namely, the workpiece W may be an intermediate product of the turbine blade BL. The intermediate product of the turbine blade BL may be manufactured by a casting.

In this case, the processing system SYS may perform the second subtractive manufacturing for remove a part of the shank 91 so that the shape of the shank 91 is closer to the target shape. Specifically, as illustrated in FIG. 29B, the processing system SYS may irradiate the shank 91 with the processing light EL from an arrow direction of each processing light EL so as to form a plurality of the grooves GV in the shank 91. As a result, as illustrated in FIG. 29B, the processing system SYS may remove, from the shank 91, a plurality of removal target parts WP1 each of which corresponds to a part of the shank 91.

Then, the processing system SYS may perform the finishing processing for the workpiece W (namely, the remaining part WP2) from which the plurality of removal target parts WP1 have been removed, if necessary. For example, as illustrated in FIG. 29C, the processing system SYS may perform the finishing processing for removing a part of the shank 91 by irradiating at least a part of the shank 91 from which the plurality of removal target parts WP1 have been removed with the processing light EL so that the shape of the shank 91 becomes the target shape. As a result, the turbine blade BL is completed as illustrated in FIG. 29D.

### (2-2-5-2) Second Application Example of Second Subtractive Manufacturing

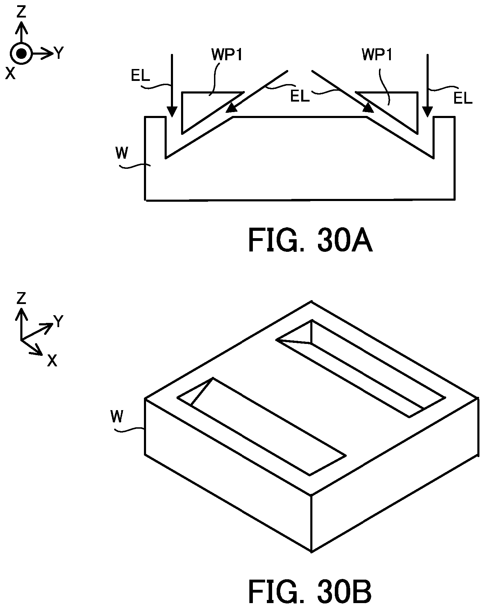

Next, with reference to FIG. 30A to FIG. 33 to B, a second application example of the second subtractive manufacturing will be described. Each of FIG. 30A to FIG. 33B is a cross-sectional view that illustrates the workpiece W on which the second application example of the second subtractive manufacturing is performed.

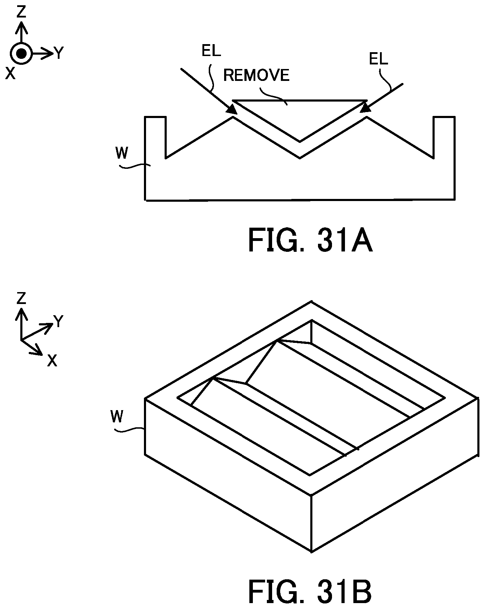

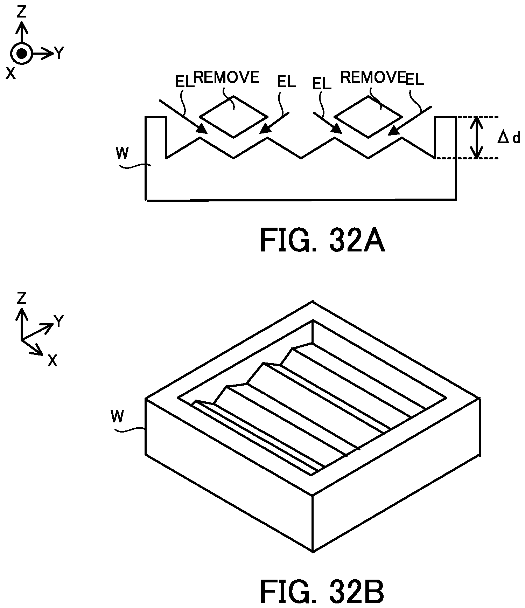

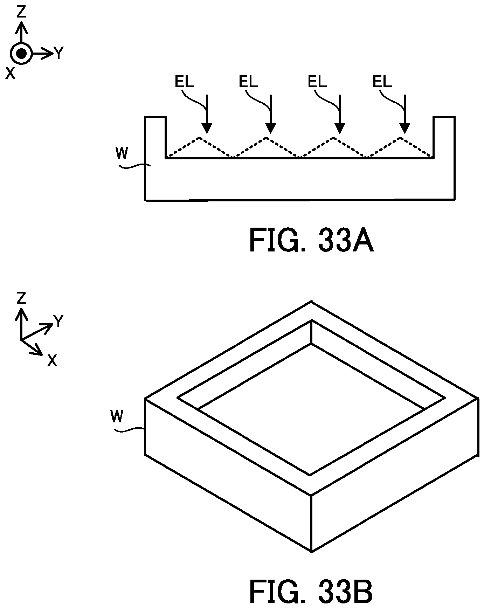

As illustrated in FIG. 30A to FIG. 33B, the processing system SYS may form a hole having a predetermined shape in the workpiece W by performing the second subtractive manufacturing on the workpiece W. FIG. 30A to FIG. 33B illustrates an example in which the second subtractive manufacturing is performed to form the hole whose cross-sectional shape is a rectangular shape and whose depth is a predetermined depth. In this case, for example, as illustrated in FIG. 30A to FIG. 32B, the processing system SYS may remove a plurality of removal target part WP1 from the workpiece W in sequence by performing the above-described first specific example of the second subtractive manufacturing, which forms two grooves GV that are connected to each other in sequence, the plurality of number of times. For example, as illustrated in FIG. 30A and FIG. 30B, the processing system SYS may remove the removal target part WP1 from a desired position of the workpiece W. The control unit 2 of the processing system SYS controls the processing unit 1 so as to make the removal target part WP1 fall or separate from the remaining part WP2 of the workpiece W. After the control unit 2 makes the removal target part WP1 fall or separate from the remaining part WP2 of the workpiece W, for example, as illustrated in FIG 31A and FIG. 31B, the processing system SYS may remove, from the workpiece W, a part protruding from an surrounding area as the removal target part WP1. The control unit 2 of the processing system SYS controls the processing unit 1 so as to make the removal target part WP1 fall or separate from the remaining part WP2 of the workpiece W. After the control unit 2 makes the removal target part WP1 fall or separate from the remaining part WP2 of the workpiece W, the processing system SYS may repeat an operation for further removing, from the workpiece W, a part protruding from the surrounding area as the removal target part WP1, as illustrated in FIG. 32A and FIG. 32B, for example. The control unit 2 of the processing system SYS controls the processing unit 1 so as to make the removal target part WP1 fall or separate from the remaining part WP2 of the workpiece W. In this case, the control unit 2 may change the irradiation direction of the processing light EL so that the second subtractive manufacturing is allowed to be continued. For example, in the example illustrated in FIG. 32A and FIG. 32B, the control unit 2 may change the irradiation direction of the processing light EL from a direction along the YZ plane to a direction along the XZ plane. When it becomes difficult to remove the removal target part WP1 by the second subtractive manufacturing, the processing system SYS may perform the first subtractive manufacturing for removing a residual of the removal target part WP1 by irradiating the residual of the removal target part WP1, which should be removed to form the hole, with the processing light EL, for example, as illustrated in FIG. 33(a) and 33(b). As a result, as illustrated in FIG. 33A and FIG. 33B, the hole whose cross-sectional shape is the rectangular shape and whose depth is the predetermined depth is formed. Incidentally, in each of the above-described examples, the control unit 2 of the processing system SYS may control the processing unit to remove the removal target part WP1 by emitting the processing light EL.

The control unit 2 may control the characteristic of the processing light EL based on the target depth Δd of the hole that should be formed. For example, the control unit 2 may control at least one of the incident angle of the processing light EL, the intensity of the processing light EL, and the irradiation time period of the processing light EL based on the target depth Δd of the hole that should be formed. In this case, the control unit 2 may control the characteristic of the processing light EL so that the depth of the hole formed by the processing light EL does not exceed the target depth Δd. The control unit 2 may control a timing for completing the second subtractive manufacturing based on the target depth Δd. The control unit 2 may control a timing for starting the first subtractive manufacturing after completing the second subtractive manufacturing based on the target depth Δd. The control unit 2 may control a timing for completing the first subtractive manufacturing based on the target depth Δd.

### (2-2-5-3) Third Application Example of Second Subtractive Manufacturing

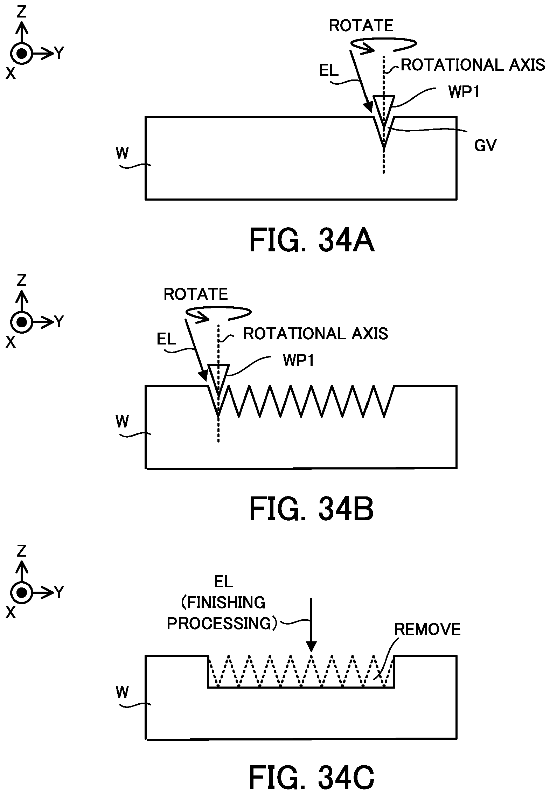

Next, with reference to FIG. 34A to FIG. 34C, a third application example of the second subtractive manufacturing will be described. Each of FIG. 34A to FIG. 34C is a cross-sectional view that illustrates the workpiece W on which the third application example of the second subtractive manufacturing is performed.

As illustrated in FIG. 34A to FIG. 34C, the third application example of the second subtractive manufacturing is a subtractive manufacturing for form the hole having the predetermined shape in the workpiece W, as with the second application example of the second subtractive manufacturing. The third application example of the second subtractive manufacturing is different from the second application example of the second subtractive manufacturing in that a method of forming the hole is different. Specifically, as illustrated in FIG. 34A, the processing system SYS irradiates the workpiece W with the processing light EL so that the processing light EL obliquely enters the surface of the workpiece W. The processing system SYS rotates the processing light EL around a rotational axis that intersects (typically, is orthogonal to) the surface of the workpiece W while irradiating the workpiece W with the processing light EL. For example, the processing system SYS rotates the processing head 13 around the rotational axis that intersects (typically, is orthogonal to) the surface of the workpiece W, thereby rotating the processing light EL around this rotational axis. As a result, as illustrated in FIG. 34A, a conical-shaped groove GV is formed and a conical-shaped removal target part WP1 is removed from the workpiece W. Alternatively, the processing system SYS may rotate the stage 15 around the rotational axis that intersects (typically, is orthogonal to) the surface of the workpiece W, in addition to or instead of rotating the processing head 13. Even in this case, as illustrated in FIG. 34A, the conical-shaped groove GV is formed and the conical-shaped removal target part WP1 is removed from the workpiece W. However, in a case where the stage 15 is rotated, the rotational axis of the stage 15 may be set to a rotational axis passing through a center of the conical-shaped groove GV. As illustrated in FIG. 34B, the processing system SYS may remove a plurality of conical-shaped removal target parts WP1 from the workpiece W by repeating an operation for removing the conical-shaped removal target part WP1 from the workpiece W. Then, as illustrated in FIG. 34C, the processing system SYS may perform a first subtractive manufacturing for removing a residual of the removal target part WP1 by irradiating the residual of the removal target part WP1, which should be removed to form the hole, with the processing light EL. As a result, as illustrated in FIG. 34C, the hole whose cross-sectional shape is the rectangular shape and whose depth is the predetermined depth is formed.

In this case, the processing system SYS can remove the plurality of conical-shaped removal target parts WP1 by repeatedly using the processing control information for removing a single conical-shaped removal target part WP1. Namely, the processing system SYS can use the processing control information repeatedly.

Incidentally, in the above-described description, the processing system SYS forms the conical-shaped groove GV by rotating the processing head 13 (alternatively, the stage 15, the same is applied in this paragraph) once around the rotational axis. However, the processing system SYS may form the conical-shaped groove GV including a plurality of the grooves GV by rotating the processing head 13 by a predetermined rotational angle, which is smaller than 360 degrees, around the rotational axis. For example, the processing system SYS may form the conical-shaped groove GV including two grooves GV by performing an operation for rotating the processing head 13 around the rotational axis by 180 degrees twice.

### (3) Technical Effect of Processing System SYS

As described above, the processing system SYS can perform the second subtractive manufacturing for remove the removal target part WP1 by irradiating the boundary BD between the removal target part WP1 and the remaining part WP2 with the processing light EL to form the groove GV. As a result, as already described, the processing system SYS can reduce the time required to remove the removal target part WP1 from the workpiece W by performing the second subtractive manufacturing, compared to a case where the first subtractive manufacturing for removing the removal target part by irradiating the removal target part WP1 with the processing light EL is performed. Therefore, the processing system SYS can efficiently remove the large-sized removal target part WP1 from the workpiece W.

Furthermore, the processing system SYS can measure the depth of the groove GV by using the measurement light ML. Therefore, as already described, the processing system SYS can appropriately form the groove GV so that the depth of the groove GV becomes the target depth. Namely, the processing system SYS can appropriately form the groove GV having the target depth.

Incidentally, the processing system SYS may calculate a difference between the depth of the groove GV measured by using the measurement light ML and the target depth in order to form the groove GV so that the depth of the groove GV becomes the target depth. In this case, in a case where the calculated difference is larger than a predetermined difference, the processing system SYS may continue the second subtractive manufacturing. On the other hand, in a case where the calculated difference is smaller than the predetermined difference, the processing system SYS may form the groove GV by using the principle of the non-thermal processing so that the depth of the groove GV becomes the target depth. Namely, the processing system SYS may form the groove GV by using the ablation processing so that the depth of the groove GV becomes the target depth. As a result, the processing system SYS can accurately form the groove GV having the target depth.

Furthermore, the processing system SYS can switch the processing mode of the processing system SYS between the first subtractive manufacturing mode in which the first subtractive manufacturing is performed and the second subtractive manufacturing mode in which the second subtractive manufacturing is performed. Therefore, as already described, the processing system SYS can achieve both of the efficient removal of the removal target part WP1 and the improvement of the accuracy of the shape of the remaining part WP2.

Furthermore, the processing system SYS can contribute to a Goal 9 "Industry, Innovation and Infrastructure" and a Goal 12 "Responsible Consumption and Production" of a Sustainable Development Goals (SDGs) led by the United Nations.

### (4) Modified Example

Next, a modified example of the processing system SYS will be described.

### (4-1) First Modified Example

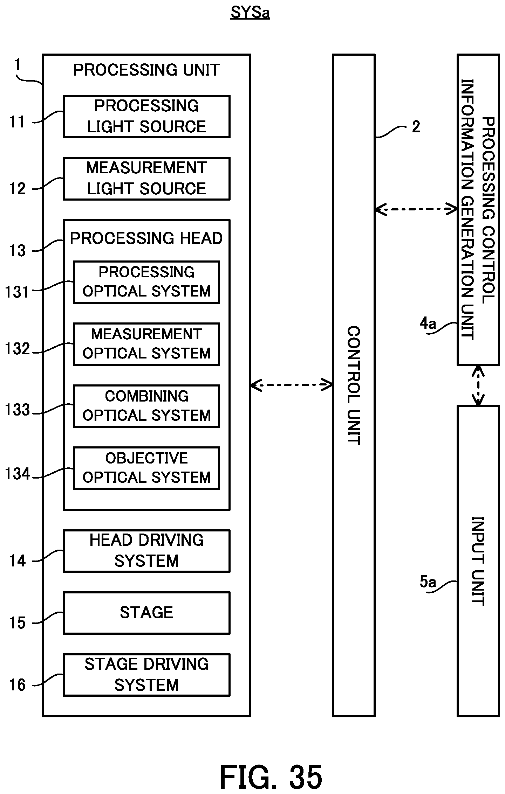

First, with reference to FIG. 35, a first modified example of the processing system SYS will be described. FIG. 35 is a block diagram that illustrates a configuration of the first modified example of the processing system SYS. Incidentally, the first modified example of the processing system SYS is referred to as a "processing system SYSa" for convenience of description in the below-described description.

As illustrated in FIG. 35, the processing system SYSa is different from the above-described processing system SYS in that it has a processing control information generation unit 4a and an input unit 5a. Other feature of the processing system SYSa may be the same as other feature of the processing system SYS.

The processing control information generation unit 4a generates the processing control information indicating the processing condition for processing the workpiece W. For example, in a case where the processing unit 1 performs the subtractive manufacturing as described above, the processing control information generation unit 4a may generate the processing control information indicating the processing condition for performing the subtractive manufacturing of the workpiece W. Namely, the processing control information generation unit 4a may generate the processing control information indicating the processing condition for performing the subtractive manufacturing for removing the removal target part WP1 from the workpiece W. In other words, the processing control information generation unit 4a may generate the processing control information indicating the processing condition for performing the subtractive manufacturing for separating the removal target part WP1 and the remaining part WP2.

The processing control information may include the processing path information that indicates the processing path (so-called tool path) indicating the irradiation position of the processing light EL, for example. As one example, the processing control information may include the processing path information that indicates the processing path indicating the irradiation position of the processing light EL at each time in the processing period during which the subtractive manufacturing is performed. As another example, the processing control information may include the processing path information that indicates the processing path indicating the irradiation position of the processing light EL at each time in a processing period during which the finishing processing, which is performed after the subtractive manufacturing, is performed.

The processing control information may include at least one of information indicating the irradiation direction of the processing light EL, information related to a scanning direction of the processing light EL, information indicating a movement direction of the stage 15, and information indicating the movement distance of the stage 15, in addition to or instead of the processing path information. For example, the processing control information may include information related to the irradiation direction of the processing light EL at each time in the processing period. For example, the processing control information may include information related to the scanning direction of the processing light EL at each time in the processing period. For example, the processing control information may include information related to the movement direction of the stage 15 at each time in the processing period. For example, the processing control information may include information about the movement distance of the stage 15 at each time in the processing period. It includes at least one of the irradiation direction of EL, the scanning direction, information on the rotation of the stage, information on which direction is the irradiation direction and which direction is the scanning direction after rotating the stage.

The processing control information generation unit 4a may generate the processing control information based on the model data (for example, the CAD (Computer Aided Design) data) indicating the three-dimensional model of the workpiece W. For example, the processing control information generation unit 4a may generate the processing control information based on a difference between a shape indicated by the three-dimensional model and an actual shape of the workpiece W. The processing control information generation unit 4a may generate, based on the difference between the shape indicated by the three-dimensional model and the actual shape of the workpiece W, the processing control information for processing the workpiece W so that the actual shape of the workpiece W is closer to or is the same as the shape indicated by the three-dimensional model.

In this case, the processing system SYS may measure the shape of the workpiece W by using the measurement light ML. For example, the processing system SYS may measure the shape of the workpiece W in a period during which the subtractive manufacturing is performed. In this case, the processing control information generation unit 4a may generate the processing control information, which is used for the subsequent subtractive manufacturing, based on the model data and a measured result of the shape of the workpiece W. For example, the processing system SYS may measure the shape of the workpiece W after the subtractive manufacturing is completed. After the subtractive manufacturing is completed, the processing system SYS may measure the shape of the surface of the workpiece W that intersects an irradiation direction of the measurement light EL in the processing period. In this case, the processing control information generation unit 4a may generate the processing control information, which is used for the finishing processing that is performed subsequent to the subtractive manufacturing, based on the model data and the measured result of the shape of the workpiece W. Alternatively, in a case where the difference between the shape indicated by the three-dimensional model and the actual shape of the workpiece W is larger than an allowable amount, the processing system SYS may perform the subtractive manufacturing again instead of performing the finishing processing.

Alternatively, the processing control information generation unit 4a may generate the processing control information based on a user's request for the processing operation performed by the processing system SYS.

The user's request may include a request related to the removal target part WP1 of the workpiece W, for example. For example, the user's request may include a request for specifying a position of the removal target part WP1. For example, the user's request may include a request for specifying a shape of the removal target part WP1.

For example, the user's request may include a request related to the remaining part WP2 of the workpiece W that remains after the removal target part WP1 is removed. For example, the user's request may include a request for specifying a position of the remaining part WP2. For example, the user's request may include a request for specifying a shape (for example, the target shape) of the remaining part WP2.

The user's request may be input to the input unit 5a. Namely, the user's request may be input to the processing control information generation unit 4a through the input unit 5a. The input unit 5a may be any apparatus that is configured to allow the user's request to be input thereto. For example, the input unit 5a may include an operational apparatus (for example, at least one of a keyboard, a mouse, and a touch panel) that is allowed to be operated by the user. In this case, the user may input the user's requests to the processing control information generation unit 4a by operating the operational apparatus. For example, the input unit 5a may include a recording medium reading apparatus that is configured to read information recorded on a recording medium. In this case, the user may input the user's request to the processing control information generation unit 4a by allowing the recording medium reading apparatus to read the recording medium on which information related to the user's request is recorded. For example, the input unit 5a may include a communication apparatus that is configured to receive information transmitted through a communication network. In this case, the user may input the user's request to the processing control information generation unit 4a by transmitting the information related to the user's request to the processing control information generation unit 4a through the communication network.

In this first modified example of the processing system SYS, the processing control information generation unit 4a can appropriately generate the processing control information. As a result, the control unit 2 can appropriately control the processing unit 1 to process the workpiece W based on the processing control information. Namely, the processing unit 1 can process the workpiece W appropriately based on the processing control information.

### (4-2) Second Modified Example

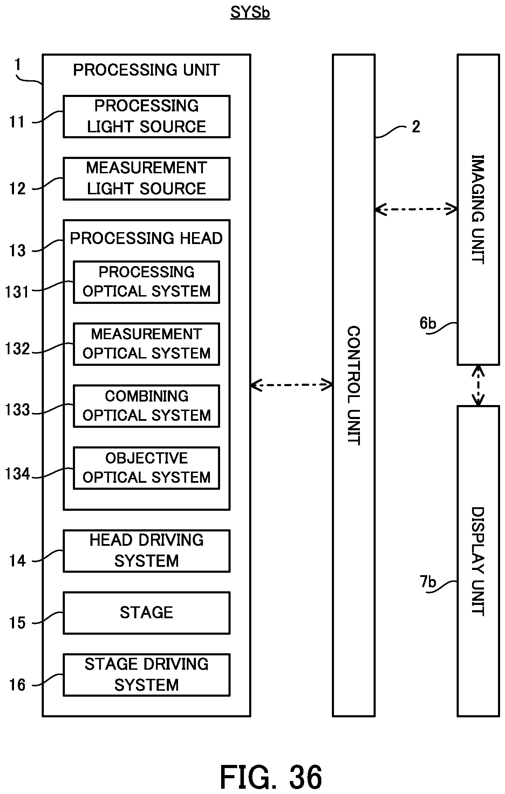

Next, with reference to FIG. 36, a second modified example of the processing system SYS will be described. FIG. 36 is a block diagram that illustrates a configuration of the second modified example of the processing system SYS. Incidentally, the second modified example of the processing system SYS is referred to as a "processing system SYSb" for convenience of description in the below-described description..

As illustrated in FIG. 36, the processing system SYSb is different from the above-described processing system SYS or SYSa in that it includes an imaging unit 6b and a display unit 7b. Other features of the processing system SYSb may be the same as other features of the processing system SYS or SYSa.

The imaging unit 6b is an apparatus that is configured to capture an image of the workpiece W. For example, the imaging unit 6b may capture the image of the workpiece W in at least part of the processing period during which the processing unit 1 performs the subtractive manufacturing. Namely, the imaging unit 6b may capture the image of the workpiece W during the processing period. For example, the imaging unit 6b may capture the image of the workpiece W before the processing period starts. Namely, the imaging unit 6b may capture the image of the workpiece W before the processing unit 1 starts the subtractive manufacturing. For example, the imaging unit 6b may capture the image of the workpiece W after the processing period has ended. Namely, the imaging unit 6b may capture the image of the workpiece W after the processing unit 1 has completed the subtractive manufacturing.

The display unit 7b is an apparatus that is configured to display an image generated by the imaging unit 6b capturing the image of the workpiece W. In this case, the user of the processing system SYS can recognize a state of the workpiece W by checking the image displayed on the display unit 7b. For example, the user can recognize a processing state of the workpiece W.

### (4-3) Other Modified Example

The processing system SYS may be configured to emit a plurality of processing lights EL. In this case, the processing system SYS may include a single processing head 13 that is configured to emit the plurality of processing lights EL. The processing system SYS may include a plurality of processing heads 13 that are configured to emit the plurality of processing lights EL, respectively. The processing system SYS may perform the first subtractive manufacturing by using first processing light EL of the plurality of processing lights EL. The processing system SYS may perform the second subtractive manufacturing using second processing light EL, which is different from the first processing light EL, of the plurality of processing lights EL.

The processing system SYS may include a plurality of processing heads 13. A first processing head 13 of the plurality of processing heads 13 may be configured to emit the processing light EL and the measurement light ML for performing the first subtractive manufacturing. A second processing head 13, which is different from the first processing head 13, of the plurality of processing heads 13 may be configured to emit the processing light EL and the measurement light ML for performing the second subtractive manufacturing. The first processing head 13 of the plurality of processing heads 13 may be configured to emit the processing light EL for performing the first subtractive manufacturing, but may not emit the measurement light ML. The second processing head 13, which is different from the first processing head 13, of the plurality of processing heads 13 may be configured to emit the processing light EL for performing the second subtractive manufacturing, but may not emit the measurement light ML. A third processing head 13, which is different from the first and second processing heads 13, of the plurality of processing heads 13 may be configured to emit the measurement light ML, but may not emit the processing light EL.

The processing system SYS may include an additional function heads in addition to the processing heads 13. The additional function head may be an apparatus for providing an optional function that is selected according to the processing performed by the processing system SYS. Typically, a characteristic of the additional function head may be different from a characteristic of the processing head 13. For example, a property of the additional function head may be different from a property of the processing head 13. For example, a function of the additional function head may be different from a function of the processing head 13. A rotational head that includes a rotatable spindle is one example of the additional function head. A tool that can process the workpiece W may be attachable to the spindle. **In** this case, the additional function head may serve as an apparatus that is configured to perform a machine-processing on the workpiece W. A measurement head that is configured to measure the workpiece W is another example of the additional function head. For example, the measurement head may include a 3D scanner that is configured to measure the three-dimensional shape of the workpiece W. A processing head that is configured to perform the additive manufacturing is another example of the additional function head.

In a case where the processing system SYS includes the processing head 13 and the additional function head, the head driving system 14 may move both of the processing head 13 and the additional function head. Alternatively, the processing system SYS may include an additional function head driving system that is configured to move the additional function head in addition to the head driving system 14 that is configured to move the processing head 13. In this case, a part of the head driving system 14 may be used as a part of the additional function head driving system. Namely, the head driving system 14 and the additional function head driving system may share one component. As one example, the head driving system 14 and the additional function head driving system may share a rail member to which the processing head 13 and the additional function head are movably attached.

As described above, the processing system SYS measures the depth of the groove GV. In this case, the control unit 2 may calculate a progress status of the processing of the workpiece W based on the measured result of the depth of the groove GV. The control unit 2 may display information related to the progress status of the processing of the workpiece W on the display unit 7b or the like. As one example, the control unit 2 may display, as the information related to the progress status of the processing of the workpiece W on the display unit 7b or the like, a display object indicating the shape of the workpiece W that is the same as the progress status of the processing of the workpiece W.. As a result, the user of the processing system SYS can appropriately recognize the progress status of the processing of the workpiece W.

In the above-described description, the processing system SYS measures the depth of the groove GV, which is formed in the workpiece W by using the processing light EL, by irradiating the workpiece W with the measurement light ML emitted from the processing head 13. However, the processing system SYS may measure the depth of the groove GV by using other method. For example, the processing system SYS may include a measurement apparatus that is configured to measure the depth of the groove GV separately from the processing head 13, and may measure the depth of the groove GV by using the measurement apparatus. Alternatively, the processing system SYS may measure the depth of the groove GV by using a measurement apparatus positioned outside the processing system SYS. In a case where the depth of the groove GV is measured by using the measurement apparatus positioned outside the processing system SYS, the workpiece W may be unloaded from the processing system SYS after the processing system SYS has completed the processing of the workpiece W, and the unloaded workpiece W may be placed on the measurement apparatus. The measurement apparatus may measure the depth of the groove GV by using a measurement method that is the same as a measurement method (for example, an interferometry) that is used by the processing head 13 to measure the depth of the groove GV. Alternatively, the measurement apparatus may measure the depth of the groove GV by using a measurement method (for example, a Time Of Flight method) that is different from measurement method that is used by the processing head 13 to measure the depth of the groove GV.

The processing system SYS may measure the shape of the workpiece W in addition to or instead of measuring the depth of the groove GV by using any measurement method that uses or does not use the measurement light ML. Especially, the processing system SYS may measure the shape of the workpiece W that has been already processed. For example, the processing system SYS may measure the shape of the remaining part WP2, which is exposed to the outside by removing the removal target part WP1. Namely, the processing system SYS may measure the shape of the remaining part WP2 facing the boundary part BDP. For example, the processing system SYS may measure the shape of the workpiece W that has been processed by a part of the processing light EL (so-called a side part of the processing light EL) that is away from the condensed position.

The shape of the workpiece W may include a shape of the surface of the workpiece W. In this case, the processing system SYS may measure the shape of the workpiece W in addition to or instead of measuring the depth of the groove GV by using any measurement method that uses or does not use the measurement light ML. Especially, the processing system SYS may measure the shape of the surface of the workpiece W that has been already processed. For example, the processing system SYS may measure the shape of the surface of the remaining part WP2, which is exposed to the outside by removing the removal target part WP1. Namely, the processing system SYS may measure the shape of the surface of the remaining part WP2 facing the boundary part BDP. For example, the processing system SYS may measure the shape of the surface of the workpiece W that has been processed by a part of the processing light EL (so-called a side part of the processing light EL) that is away from the condensed position.

The control unit 2 may calculate a difference between a target shape of the workpiece W after processing and a current actual shape of the workpiece W based on the measured result of the shape of the workpiece W. The control unit 2 may display information related to the difference between the target shape of the workpiece W after processing and the current actual shape of the workpiece W on the display unit 7b or the like.

The processing system SYS may include: a processing head that irradiates the workpiece W with the processing light EL but does not irradiating the workpiece W with the measurement light ML; and a measurement head that that irradiates the workpiece W with the measurement light ML but does not irradiating the workpiece W with the processing light EL, separately.

In the above-described description, the processing system SYS includes the objective optical system 134 that irradiates the workpiece W with both of the processing light EL and the measurement light ML. However, the processing system SYS may include an objective optical system 134 that irradiates the workpiece W with the processing light EL and an objective optical system 134 that that irradiates the workpiece W with the measurement light ML, separately. In this case, the processing head 13 may not include the combining optical system 133 that combines the processing light EL and the measurement light ML.

In the above-described description, the processing unit 1 is configured to measure the workpiece W. However, the processing unit 1 may not be configured to measure the workpiece W. In this case, processing unit 1 may not include the measurement optical system 132. The processing system SYS may not include the measurement light source 12.

In the above-described description, the processing unit 1 includes the head driving system 14. However, the processing unit 1 may not include the head driving system 14. Namely, the processing head 13 may not be movable. Moreover, in the above-described description, the processing unit 1 includes the stage driving system 16. However, the processing unit 1 may not include the stage driving system 16. Namely, the stage 15 may not be movable.

In the above-described description, the processing system SYS processes the workpiece W by irradiating the workpiece W with the processing light EL. However, the processing system SYS may process the workpiece W by irradiating the workpiece W with any energy beam that is different from the light. In this case, the processing system SYS may include a beam irradiation apparatus that is configured to emit any energy beam in addition to or instead of the processing light source 11. At least one of a charged particle beam, an electromagnetic wave and the like is one example of any energy beam. A least one of an electron beam, an ion beam and the like is one example of the charged particle beam.

### (5) Supplementary Note

Regarding the above-described example embodiment, below described Supplementary notes are further disclosed.

### [Supplementary 1]

A processing method of separating an object into a first part and a second part by irradiating the object with a processing beam, wherein
the processing method comprises:
forming a first boundary part of a plurality of boundary parts, which are for separating the first part and the second part, by irradiating the object with the processing beam from a first direction relative to the object; and
forming a second boundary part of the plurality of boundary parts by irradiating the object with the processing beam from a second direction, which is different from the first direction, relative to the object.

### [Supplementary Note 2]

The processing method according to the Supplementary Note 1, wherein
the forming the first boundary part includes forming a first groove whose depth direction is the first direction in the object by irradiating the object with the processing beam from the first direction, and
the forming the second boundary part includes forming a second groove whose depth direction is the second direction in the object by irradiating the object with the processing beam from the second direction.

### [Supplementary Note 3]

The processing method according to the Supplementary Note 1 or 2, wherein
the irradiating the object with the processing beam from the first direction relative to the object includes irradiating a first surface of the object with the processing beam, and
the irradiating the object with the processing beam from the second direction relative to the object includes irradiating a second surface, which is different from the first surface, of the object with the processing beam.

### [Supplementary Note 4]

The processing method according to any one of the Supplementary Notes 1 to 3, wherein
the irradiating the object with the processing beam from the first direction relative to the object includes setting a placing apparatus on which the object is placed to a first placement angle, and
the irradiating the object with the processing beam from the second direction relative to the object includes setting the placing apparatus to a second placement angle that is different from the first placement angle.

### [Supplementary Note 5]

The processing method according to any one of the Supplementary Notes 1 to 4, wherein
the irradiating the object with the processing beam from the first direction relative to the object includes irradiating the object with the processing beam from a first incident angle by a processing head that emits the processing beam, and
the irradiating the object with the processing beam from the second direction relative to the object includes irradiating the object with the processing beam from a second incident angle, which is different from the first incident angle, by the processing head.

### [Supplementary Note 6]

The processing method according to any one of the Supplementary Notes 1 to 5 comprising changing a positional relationship between the object and the processing beam from a first relationship that allows the object to be irradiated with the processing beam from the first direction to a second relationship that allows the object to be irradiated with the processing beam from the second direction.

### [Supplementary Note 7]

The processing method according to any one of the Supplementary Notes 1 to 6 further comprising forming a third boundary part of the plurality of boundary parts by irradiating the object with the processing beam from a third direction different, which is different from at least one of the first and second directions, relative to the object.

### [Supplementary Note 8]

The processing method according to the Supplementary Note 7, wherein
the forming the third boundary part includes forming a third groove whose depth direction is the third direction in the object by irradiating the object with the processing beam from the third direction.

### [Supplementary Note 9]

The processing method according to the Supplementary Note 7 or 8, wherein
the irradiating the object with the processing beam from the first direction relative to the object includes irradiating a first surface of the object with the processing beam,
the irradiating the object with the processing beam from the second direction relative to the object includes irradiating a second surface, which is different from the first surface, of the object with the processing beam, and
the irradiating the object with the processing beam from the third direction relative to the object includes forming the third boundary part in a third surface of the object by irradiating the third surface, which is different from at least one of the first surface and the second surface, of the object with the processing beam.

### [Supplementary Note 10]

The processing method according to the Supplementary Note 7 or 8, wherein
the irradiating the object with the processing beam from the first direction relative to the object includes irradiating a first surface of the object with the processing beam,
the irradiating the object with the processing beam from the second direction relative to the object includes irradiating a second surface, which is different from the first surface, of the object with the processing beam, and
the irradiating the object with the processing beam from the third direction relative to the object includes forming the third boundary part in a third surface of the object by irradiating the third surface, which is different from both of the first surface and the second surface, of the object with the processing beam.

### [Supplementary Note 11]

The processing method according to any one of the Supplementary Notes 7 to 10, wherein
the irradiating the object with the processing beam from the first direction relative to the object includes setting a placing apparatus on which the object is placed to a first placement angle,
the irradiating the object with the processing beam from the second direction relative to the object includes setting the placing apparatus to a second placement angle that is different from the first placement angle, and
the irradiating the object with the processing beam from the third direction relative to the object includes setting the placing apparatus to a third placement angle that is different from at least one of the first and second placement angles.

### [Supplementary Note 12]

The processing method according to any one of the Supplementary Notes 7 to 11, wherein
the irradiating the object with the processing beam from the first direction relative to the object includes irradiating the object with the processing beam from a first incident angle by a processing head that emits the processing beam,
the irradiating the object with the processing beam from the second direction relative to the object includes irradiating the object with the processing beam from a second incident angle, which is different from the first incident angle, by the processing head, and
the irradiating the object with the processing beam from the third direction relative to the object includes irradiating the object with the processing beam from a third incident angle, which is different from at least one of the first and second incident angles.

### [Supplementary Note 13]

The processing method according to any one of the Supplementary Notes 7 to 12 comprising changing a positional relationship between the object and the processing beam from a first relationship that allows the object to be irradiated with the processing beam from the first direction or a second relationship that allows the object to be irradiated with the processing beam from the second direction to a third relationship that allows the object to be irradiated with the processing beam from the third direction.

### [Supplementary Note 14]

The processing method according to any one of the Supplementary Notes 1 to 13, wherein
the forming the plurality of boundary parts in the object includes forming the plurality of boundary parts in the object so that depths of the plurality of boundary parts become respective target depths.

### [Supplementary Note 15]

The processing method according to any one of the Supplementary Notes 1 to 14, wherein
the forming each of the plurality of boundary parts in the object includes:
forming a groove in the object by irradiating the object with the processing beam; and
measuring a depth of the groove by emitting a measurement beam into the groove.

### [Supplementary Note 16]

The processing method according to the Supplementary Note 15 wherein
a measurement of the depth of the groove is performed before the groove has a target depth.

### [Supplementary Note 17]

The processing method according to the Supplementary Note 15 or 16 wherein
a measurement of the depth of the groove is started after the groove reaches a target depth.

### [Supplementary Note 18]

The processing method according to any one of the Supplementary Notes 15 to 17 wherein
the forming the groove includes forming the groove by d emitting the processing beam so that the depth of the groove is closer to a target depth in a case where the depth of the groove measured by using the measurement beam does not reach the target depth.

### [Supplementary Note 19]

The processing method according to any one of the Supplementary Notes 15 to 18 wherein
the forming the groove includes controlling an irradiation of the processing beam to the object based on the depth of the groove measured by using the measurement beam and a target depth.

### [Supplementary Note 20]

The processing method according to any one of the Supplementary Notes 15 to 19, wherein
the forming the boundary part includes forming the groove in the object by irradiating the object with each of the processing beam and the measurement beam through an irradiation optical system so that the depth of the groove measured by using the measurement beam becomes a target depth.

### [Supplementary Note 21]

The processing method according to the Supplementary Note 20, wherein
an optical path of the processing beam emitted from the irradiation optical system to the object overlaps with an optical path of the measurement beam emitted from the irradiation optical system to the object.

### [Supplementary Note 22]

The processing method according to any one of the Supplementary Notes 15 to 21, wherein
the forming the first boundary part includes:
forming a first groove in the object by irradiating the object with the processing beam from the first direction; and
measuring a depth of the first groove by irradiating the first groove with the measurement beam from the first direction, and forming the first groove in the object so that the depth of the first groove measured by the measurement light becomes a first target depth,
the forming the second boundary part includes:
   forming a second groove in the object by irradiating the object with the processing beam from the second direction; and
   measuring a depth of the second groove by irradiating the groove with the measurement beam entering the object from the second direction, and forming the second groove in the object so that the depth of the second groove measured by the measurement light becomes a second target depth.

### [Supplementary Note 23]

The processing method according to any one of the Supplementary Notes 1 to 22, wherein
the processing method includes d changing an angle of a placing apparatus on which the object is placed so that the first part falls from the second part after the plurality of boundary parts are formed.

### [Supplementary Note 24]

The processing method according to any one of the Supplementary Notes 1 to 23, wherein
the processing method includes changing an angle of a placing apparatus on which the object is placed so that the first part falls from the second part while passing through a position that is different from an optical path of the processing beam.

### [Supplementary Note 25]

The processing method according to any one of the Supplementary Notes 1 to 24, wherein
forming the plurality of boundary parts includes changing a positional relationship between the object and the processing beam so that the first part does not shield an optical path of the processing beam.

### [Supplementary Note 26]

The processing method according to any one of the Supplementary Notes 1 to 25, wherein
the processing method further includes forming a plurality of boundary parts, which are for separating a third part that is a part of the second part from the second part, by irradiating the object with the processing beam after the first part and the second part are separated.

### [Supplementary Note 27]

The processing method according to any one of the Supplementary Notes 1 to 26, wherein
the processing method includes setting a processing condition for processing the object so as to separate the first part from the second part based on a three-dimensional model of the object.

### [Supplementary Note 28]

The processing method according to any one of the Supplementary Notes 1 to 27, wherein
the processing method includes:
acquiring a user's request for a processing operation for processing the object so as to separate the first part form the second part; and
setting a processing condition for processing the object so as to separate the first part from the second part based on the user's request.

### [Supplementary Note 29]

The processing method according to any one of the Supplementary Notes 1 to 28, wherein
the processing method includes:
generating an image in which the object is included by capturing an image of the object in at least a part of a processing period during which the object is processed by using the processing beam; and
displaying the generated image.

### [Supplementary Note 30]

The processing method according to any one of the Supplementary Notes 1 to 29, wherein
a processing for forming the plurality of boundary parts is a second processing,
the processing method further includes performing a first processing for processing the second part by irradiating at least a part of the second part with the processing beam after the second processing.

### [Supplementary Note 31]

The processing method according to the Supplementary Note 30, wherein
the performing the first processing includes:
measuring a three-dimensional shape of the second part; and
performing the first processing based on the measured three-dimensional shape of the second part.

### [Supplementary Note 32]

The processing method according to the Supplementary Note 30 or 31, wherein
a processing accuracy of the first processing is higher than a processing accuracy of the second processing.

### [Supplementary Note 33]

The processing method according to any one of the Supplementary Notes 30 to 32, wherein
the performing the first processing includes irradiating, with the processing beam, a boundary surface of the second part of the object from which the first part has been separated by performing the second processing.

### [Supplementary Note 34]

The processing method according to any one of the Supplementary Notes 30 to 33, wherein
the performing the first processing includes removing and processing at least a part of the second part so that a shape of at least a part of the second part, from which the first part has been separated, becomes a target shape.

### [Supplementary Note 35]

The processing method according to any one of the Supplementary Notes 30 to 34, wherein
the first processing is performed by irradiating the object with the processing beam having a first pulse width, and
the second processing is performed by irradiating the object with the processing beam having a second pulse width that is larger than the first pulse width.

### [Supplementary Note 36]

The processing method according to any one of the Supplementary Notes 30 to 35, wherein
the second processing is performed by irradiating the object with a thermal processing beam, and
the first processing is performed by irradiating the object with a non-thermal processing beam.

### [Supplementary Note 37]

A processing apparatus that is configured to perform the processing method according to any one of the Supplementary Notes 30 to 36, wherein
the processing apparatus is configured to perform a switching between a first processing mode that is used for the first processing and a second processing mode that is used for the second processing.

### [Supplementary Note 38]

A processing method of separating an object into a first part and a second part by irradiating the object with a processing beam, wherein
the processing method comprises:
forming a first groove of a plurality of grooves, which are for separating the first part and the second part, by irradiating the object with the processing beam from a first direction relative to the object; and
forming a second groove of the plurality of grooves by irradiating the object with the processing beam from a second direction, which is different from the first direction, relative to the object.

### [Supplementary Note 39]

A processing method of separating an object into a first part and a second part by irradiating the object with a processing beam, wherein
the processing method comprises:
forming a groove, which is for separating the first part and the second part, by irradiating the object with the processing beam from a first direction relative to the object;
measuring a depth of the groove by irradiating the groove with a measurement beam from the first direction; and
forming a groove having a target depth by using a measured result of the depth of the groove and the processing beam, wherein
forming the groove having the target depth includes processing the object by emitting the processing beam so that the depth of the groove is closer to the target depth in a case where the depth of the groove measured by using the measurement beam does not reach the target depth.

### [Supplementary Note 40]

The processing method according to the Supplementary Note 39, wherein
the measuring the depth of the groove includes measuring the depth of the groove by irradiating the object with the measurement beam in at least a part of a period during which the object is irradiated with the processing beam.

### [Supplementary Note 41]

The processing method according to any one of the Supplementary Notes 15 to 22 ad 39 to 40, wherein
the measuring the depth of the groove includes measuring the depth of the groove by irradiating the object with the measurement beam in at least a part of a period during which an irradiation of the processing beam to the object is stopped.

### [Supplementary Note 42]

A processing method of removing a first part from an object by irradiating the object with a processing beam, wherein
a removal of the first part using the processing beam is performed by using at least one of a first subtractive manufacturing mode and a second subtractive manufacturing mode,
the removing the first part in the second subtractive manufacturing mode includes:
   forming a first boundary part of a plurality of boundary parts, which are for separating at least a part of the first part from the object, by irradiating the object with the processing beam from a first direction relative to the object; and
   forming a second boundary part of the plurality of boundary parts by irradiating the object with the processing beam from a second direction, which is different from the first direction, relative to the object,
   the removing the first part in the first subtractive manufacturing mode includes removing and processing the first part by irradiating the first part with the processing beam.

### [Supplementary Note 43]

The processing method according to the Supplementary Note 42, wherein
a processing accuracy in the first subtractive manufacturing is higher than a processing accuracy in the second subtractive manufacturing.

### [Supplementary Note 44]

The processing method according to the Supplementary Note 42 or 43 comprising separating a part of the first part from the object in the second subtractive manufacturing mode, and then removing and processing a residual of the first part in the first subtractive manufacturing mode by irradiating a residual part of the object with the processing beam.

### [Supplementary Note 45]

The processing method according to the Supplementary Note 44 removing and processing the residual of the first part in the first subtractive manufacturing mode so that a shape of at least a part of a second part of the object, which remains after the first part is removed becomes a target shape.

### [Supplementary Note 46]

The processing method according to any one of the Supplementary Notes 42 to 45, wherein
at least a part of the first part is removed and processed by using the second subtractive manufacturing mode in a case where a size of the first part exceeds a predetermined size.
the first part is removed and processed by using only the first subtractive manufacturing mode in a case where the size of the first part does not exceed the predetermined size, and

### [Supplementary Note 47]

The processing method according to any one of the Supplementary Notes 42 to 46, wherein
the second subtractive manufacturing mode is performed by irradiating the object with the processing beam having a first pulse width, and
the first subtractive manufacturing mode is performed by irradiating the object with the processing beam having a second pulse width that is smaller than the first pulse width.

### [Supplementary Note 48]

The processing method according to any one of the Supplementary Notes 42 to 47, wherein
the second subtractive manufacturing mode is performed by irradiating the object with a thermal processing beam, and
the first subtractive manufacturing mode is performed by irradiating the object with a non-thermal processing beam.

### [Supplementary Note 49]

A processing apparatus that is configured to perform the processing method according to any one of the Supplementary Notes 42 to 48, wherein
the processing apparatus is configured to perform a switching between the first subtractive manufacturing mode and the second subtractive manufacturing mode.

### [Supplementary Note 50]

The processing method according to any one of the Supplementary Notes 1 to 30 and 38 to 49, wherein
the processing beam is a light source that is configured to generate, as pulsed light, light including frequency components that are arranged with equal interval on a frequency axis.

### [Supplementary Note 51]

A processing method of removing a first part from an object by irradiating the object with a processing beam, wherein
a removal of the first part using the processing beam is performed by using at least one of a first subtractive manufacturing mode and a second subtractive manufacturing mode,
the removing the first part in the first subtractive manufacturing mode includes removing and processing the first part by irradiating the first part with the processing beam having a first pulse width,
the removing the first part in the second subtractive manufacturing mode includes forming a boundary part, which is for separating at least a part of the first part from the object, by irradiating the object with the processing beam, which has a second pulse width that is larger than the first pulse width, from a first direction relative to the object.

### [Supplementary Note 52]

A processing method of removing a first part from an object by irradiating the object with a processing beam, wherein
a removal of the first part using the processing beam is performed by using at least one of a first subtractive manufacturing mode and a second subtractive manufacturing mode,
the removing the first part in the first subtractive manufacturing mode includes removing and processing the first part by irradiating the first part with a non-thermal processing beam,
the removing the first part in the second subtractive manufacturing mode includes forming a boundary part, which is for separating at least a part of the first part from the object, by irradiating the object with a thermal processing beam from a first direction relative to the object.

### [Supplementary Note 53]

A processing method of removing a first part from an object by irradiating the object with a processing beam, wherein
a removal of the first part using the processing beam is performed by using at least one of a first subtractive manufacturing mode and a second subtractive manufacturing mode,
the removing the first part in the first subtractive manufacturing mode includes removing and processing the first part by irradiating the first part with the processing beam having a first beam characteristic,
the removing the first part in the second subtractive manufacturing mode includes forming a boundary part, which is for separating at least a part of the first part from the object, by irradiating the object with the processing beam, which has a second beam characteristic that is different from the first beam characteristic, from a first direction relative to the object.

The features of each example embodiment described above may be combined with each other. A part of the feature of each example embodiment described above may not be used. The feature of each example embodiment described above may be replaced with the feature of another example embodiment. Moreover, the disclosures of all publications and United States patents related to the apparatus that is cited in each example embodiment described above are incorporated in the disclosures of the present application by reference if it is legally permitted.

The present invention is allowed to be changed, if desired, without departing from the essence or spirit of the invention which can be read from the claims and the entire specification, and a processing method and a processing apparatus, which involve such changes, are also intended to be within the technical scope of the present invention.

### Description of Reference Codes

- SYS, SYSa, SYSb: processing system
- 1: processing unit
- 13: processing head
- 15: stage
- 2: control unit
- 4a: processing control information generation unit
- 5a: input unit
- 6b: imaging unit
- 7b: display unit
- EL: processing light
- ML: measurement light
- W: workpiece
- WP1: removal target part
- WP2: remaining part
- BD: boundary
- BDP: boundary part
- BDM: boundary area
- GV: groove

## Claims

1. A processing method of separating an object into a first part and a second part by irradiating the object with a processing beam, wherein
the processing method comprises:
forming a first boundary part of a plurality of boundary parts, which are for separating the first part and the second part, by irradiating the object with the processing beam from a first direction relative to the object; and
forming a second boundary part of the plurality of boundary parts by irradiating the object with the processing beam from a second direction, which is different from the first direction, relative to the object.

2. The processing method according to claim 1, wherein
the forming the first boundary part includes forming a first groove whose depth direction is the first direction in the object by irradiating the object with the processing beam from the first direction, and
the forming the second boundary part includes forming a second groove whose depth direction is the second direction in the object by irradiating the object with the processing beam from the second direction.

3. The processing method according to claim 1 or 2, wherein
the irradiating the object with the processing beam from the first direction relative to the object includes irradiating a first surface of the object with the processing beam, and
the irradiating the object with the processing beam from the second direction relative to the object includes irradiating a second surface, which is different from the first surface, of the object with the processing beam.

4. The processing method according to any one of claims 1 to 3, wherein
the irradiating the object with the processing beam from the first direction relative to the object includes setting a placing apparatus on which the object is placed to a first placement angle, and
the irradiating the object with the processing beam from the second direction relative to the object includes setting the placing apparatus to a second placement angle that is different from the first placement angle.

5. The processing method according to any one of claims 1 to 4, wherein
the irradiating the object with the processing beam from the first direction relative to the object includes irradiating the object with the processing beam from a first incident angle by a processing head that emits the processing beam, and
the irradiating the object with the processing beam from the second direction relative to the object includes irradiating the object with the processing beam from a second incident angle, which is different from the first incident angle, by the processing head.

6. The processing method according to any one of claims 1 to 5 comprising changing a positional relationship between the object and the processing beam from a first relationship that allows the object to be irradiated with the processing beam from the first direction to a second relationship that allows the object to be irradiated with the processing beam from the second direction.

7. The processing method according to any one of claims 1 to 6 further comprising forming a third boundary part of the plurality of boundary parts by irradiating the object with the processing beam from a third direction different, which is different from at least one of the first and second directions, relative to the object.

8. The processing method according to claim 7, wherein
the forming the third boundary part includes forming a third groove whose depth direction is the third direction in the object by irradiating the object with the processing beam from the third direction.

9. The processing method according to claim 7 or 8, wherein
the irradiating the object with the processing beam from the first direction relative to the object includes irradiating a first surface of the object with the processing beam,
the irradiating the object with the processing beam from the second direction relative to the object includes irradiating a second surface, which is different from the first surface, of the object with the processing beam, and
the irradiating the object with the processing beam from the third direction relative to the object includes forming the third boundary part in a third surface of the object by irradiating the third surface, which is different from at least one of the first surface and the second surface, of the object with the processing beam.

10. The processing method according to claim 7 or 8, wherein
the irradiating the object with the processing beam from the first direction relative to the object includes irradiating a first surface of the object with the processing beam,
the irradiating the object with the processing beam from the second direction relative to the object includes irradiating a second surface, which is different from the first surface, of the object with the processing beam, and
the irradiating the object with the processing beam from the third direction relative to the object includes forming the third boundary part in a third surface of the object by irradiating the third surface, which is different from both of the first surface and the second surface, of the object with the processing beam.

11. The processing method according to any one of claims 7 to 10, wherein
the irradiating the object with the processing beam from the first direction relative to the object includes setting a placing apparatus on which the object is placed to a first placement angle,
the irradiating the object with the processing beam from the second direction relative to the object includes setting the placing apparatus to a second placement angle that is different from the first placement angle, and
the irradiating the object with the processing beam from the third direction relative to the object includes setting the placing apparatus to a third placement angle that is different from at least one of the first and second placement angles.

12. The processing method according to any one of claims 7 to 11, wherein
the irradiating the object with the processing beam from the first direction relative to the object includes irradiating the object with the processing beam from a first incident angle by a processing head that emits the processing beam,
the irradiating the object with the processing beam from the second direction relative to the object includes irradiating the object with the processing beam from a second incident angle, which is different from the first incident angle, by the processing head, and
the irradiating the object with the processing beam from the third direction relative to the object includes irradiating the object with the processing beam from a third incident angle, which is different from at least one of the first and second incident angles.

13. The processing method according to any one of claims 7 to 12 comprising changing a positional relationship between the object and the processing beam from a first relationship that allows the object to be irradiated with the processing beam from the first direction or a second relationship that allows the object to be irradiated with the processing beam from the second direction to a third relationship that allows the object to be irradiated with the processing beam from the third direction.

14. The processing method according to any one of claims 1 to 13, wherein
the forming the plurality of boundary parts in the object includes forming the plurality of boundary parts in the object so that depths of the plurality of boundary parts become respective target depths.

15. The processing method according to any one of claims 1 to 14, wherein
the forming each of the plurality of boundary parts in the object includes:
forming a groove in the object by irradiating the object with the processing beam; and
measuring a depth of the groove by emitting a measurement beam into the groove.

16. The processing method according to claim 15 wherein
a measurement of the depth of the groove is performed before the groove has a target depth.

17. The processing method according to claim 15 or 16 wherein
a measurement of the depth of the groove is started after the groove reaches a target depth.

18. The processing method according to any one of claims 15 to 17 wherein
the forming the groove includes forming the groove by d emitting the processing beam so that the depth of the groove is closer to a target depth in a case where the depth of the groove measured by using the measurement beam does not reach the target depth.

19. The processing method according to any one of claims 15 to 18 wherein
the forming the groove includes controlling an irradiation of the processing beam to the object based on the depth of the groove measured by using the measurement beam and a target depth.

20. The processing method according to any one of claims 15 to 19, wherein
the forming the boundary part includes forming the groove in the object by irradiating the object with each of the processing beam and the measurement beam through an irradiation optical system so that the depth of the groove measured by using the measurement beam becomes a target depth.

21. The processing method according to claim 20, wherein
an optical path of the processing beam emitted from the irradiation optical system to the object overlaps with an optical path of the measurement beam emitted from the irradiation optical system to the object.

22. The processing method according to any one of claims 15 to 21, wherein
the forming the first boundary part includes:
forming a first groove in the object by irradiating the object with the processing beam from the first direction; and
measuring a depth of the first groove by irradiating the first groove with the measurement beam from the first direction, and forming the first groove in the object so that the depth of the first groove measured by the measurement light becomes a first target depth,
the forming the second boundary part includes:
forming a second groove in the object by irradiating the object with the processing beam from the second direction; and
measuring a depth of the second groove by irradiating the groove with the measurement beam entering the object from the second direction, and forming the second groove in the object so that the depth of the second groove measured by the measurement light becomes a second target depth.

23. The processing method according to any one of claims 1 to 22, wherein
the processing method includes d changing an angle of a placing apparatus on which the object is placed so that the first part falls from the second part after the plurality of boundary parts are formed.

24. The processing method according to any one of claims 1 to 23, wherein
the processing method includes changing an angle of a placing apparatus on which the object is placed so that the first part falls from the second part while passing through a position that is different from an optical path of the processing beam.

25. The processing method according to any one of claims 1 to 24, wherein
forming the plurality of boundary parts includes changing a positional relationship between the object and the processing beam so that the first part does not shield an optical path of the processing beam.

26. The processing method according to any one of claims 1 to 25, wherein
the processing method further includes forming a plurality of boundary parts, which are for separating a third part that is a part of the second part from the second part, by irradiating the object with the processing beam after the first part and the second part are separated.

27. The processing method according to any one of claims 1 to 26, wherein
the processing method includes setting a processing condition for processing the object so as to separate the first part from the second part based on a three-dimensional model of the object.

28. The processing method according to any one of claims 1 to 27, wherein
the processing method includes:
acquiring a user's request for a processing operation for processing the object so as to separate the first part form the second part; and
setting a processing condition for processing the object so as to separate the first part from the second part based on the user's request.

29. The processing method according to any one of claims 1 to 28, wherein
the processing method includes:
generating an image in which the object is included by capturing an image of the object in at least a part of a processing period during which the object is processed by using the processing beam; and
displaying the generated image.

30. The processing method according to any one of claims 1 to 29, wherein
a processing for forming the plurality of boundary parts is a second processing,
the processing method further includes performing a first processing for processing the second part by irradiating at least a part of the second part with the processing beam after the second processing.

31. The processing method according to claim 30, wherein
the performing the first processing includes:
measuring a three-dimensional shape of the second part; and
performing the first processing based on the measured three-dimensional shape of the second part.

32. The processing method according to claim 30 or 31, wherein
a processing accuracy of the first processing is higher than a processing accuracy of the second processing.

33. The processing method according to any one of claims 30 to 32, wherein
the performing the first processing includes irradiating, with the processing beam, a boundary surface of the second part of the object from which the first part has been separated by performing the second processing.

34. The processing method according to any one of claims 30 to 33, wherein
the performing the first processing includes removing and processing at least a part of the second part so that a shape of at least a part of the second part, from which the first part has been separated, becomes a target shape.

35. The processing method according to any one of claims 30 to 34, wherein
the first processing is performed by irradiating the object with the processing beam having a first pulse width, and
the second processing is performed by irradiating the object with the processing beam having a second pulse width that is larger than the first pulse width.

36. The processing method according to any one of claims 30 to 35, wherein
the first processing is performed by irradiating the object with a non-thermal processing beam, and
the second processing is performed by irradiating the object with a thermal processing beam.

37. A processing apparatus that is configured to perform the processing method according to any one of claims 30 to 36, wherein
the processing apparatus is configured to perform a switching between a first processing mode that is used for the first processing and a second processing mode that is used for the second processing.

38. A processing method of separating an object into a first part and a second part by irradiating the object with a processing beam, wherein
the processing method comprises:
forming a first groove of a plurality of grooves, which are for separating the first part and the second part, by irradiating the object with the processing beam from a first direction relative to the object; and
forming a second groove of the plurality of grooves by irradiating the object with the processing beam from a second direction, which is different from the first direction, relative to the object.

39. A processing method of separating an object into a first part and a second part by irradiating the object with a processing beam, wherein
the processing method comprises:
forming a groove, which is for separating the first part and the second part, by irradiating the object with the processing beam from a first direction relative to the object;
measuring a depth of the groove by irradiating the groove with a measurement beam from the first direction; and
forming a groove having a target depth by using a measured result of the depth of the groove and the processing beam, wherein
forming the groove having the target depth includes processing the object by emitting the processing beam so that the depth of the groove is closer to the target depth in a case where the depth of the groove measured by using the measurement beam does not reach the target depth.

40. The processing method according to claim 39, wherein
the measuring the depth of the groove includes measuring the depth of the groove by irradiating the object with the measurement beam in at least a part of a period during which the object is irradiated with the processing beam.

41. The processing method according to any one of claims 15 to 22 ad 39 to 40, wherein
the measuring the depth of the groove includes measuring the depth of the groove by irradiating the object with the measurement beam in at least a part of a period during which an irradiation of the processing beam to the object is stopped.

42. A processing method of removing a first part from an object by irradiating the object with a processing beam, wherein
a removal of the first part using the processing beam is performed by using at least one of a first subtractive manufacturing mode and a second subtractive manufacturing mode,
the removing the first part in the first subtractive manufacturing mode includes removing and processing the first part by irradiating the first part with the processing beam,
the removing the first part in the second subtractive manufacturing mode includes:
forming a first boundary part of a plurality of boundary parts, which are for separating at least a part of the first part from the object, by irradiating the object with the processing beam from a first direction relative to the object; and
forming a second boundary part of the plurality of boundary parts by irradiating the object with the processing beam from a second direction, which is different from the first direction, relative to the object.

43. The processing method according to claim 42, wherein
a processing accuracy in the first subtractive manufacturing is higher than a processing accuracy in the second subtractive manufacturing.

44. The processing method according to claim 42 or 43 comprising separating a part of the first part from the object in the second subtractive manufacturing mode, and then removing and processing a residual of the first part in the first subtractive manufacturing mode by irradiating a residual part of the object with the processing beam.

45. The processing method according to claim 44 removing and processing the residual of the first part in the first subtractive manufacturing mode so that a shape of at least a part of a second part of the object, which remains after the first part is removed becomes a target shape.

46. The processing method according to any one of claims 42 to 45, wherein
the first part is removed and processed by using only the first subtractive manufacturing mode in a case where a size of the first part does not exceed the predetermined size, and
at least a part of the first part is removed and processed by using the second subtractive manufacturing mode in a case where the size of the first part exceeds a predetermined size.

47. The processing method according to any one of claims 42 to 46, wherein
the first subtractive manufacturing mode is performed by irradiating the object with the processing beam having a first pulse width, and
the second subtractive manufacturing mode is performed by irradiating the object with the processing beam having a second pulse width that is larger than the first pulse width.

48. The processing method according to any one of claims 42 to 47, wherein
the first subtractive manufacturing mode is performed by irradiating the object with a non-thermal processing beam, and
the second subtractive manufacturing mode is performed by irradiating the object with a thermal processing beam.

49. A processing apparatus that is configured to perform the processing method according to any one of claims 42 to 48, wherein
the processing apparatus is configured to perform a switching between the first subtractive manufacturing mode and the second subtractive manufacturing mode.

50. The processing method according to any one of claims 1 to 30 and 38 to 49, wherein
the processing beam is a light source that is configured to generate, as pulsed light, light including frequency components that are arranged with equal interval on a frequency axis.
